(19) Europäisches Patentamt
European Patent Office
Office européen des brevets

(11) **EP 3 047 459 B1**

(12) **EUROPÄISCHE PATENTSCHRIFT**

(45) Veröffentlichungstag und Bekanntmachung des Hinweises auf die Patenterteilung:
**17.06.2020   Patentblatt 2020/25**

(21) Anmeldenummer: **14808967.5**

(22) Anmeldetag: **04.12.2014**

(51) Int Cl.:
*G07C 9/00* (2020.01)          *G06Q 10/08* (2012.01)
*A47G 29/14* (2006.01)          *A47G 29/16* (2006.01)
*G07F 17/12* (2006.01)          *E05B 43/00* (2006.01)
*E05B 65/00* (2006.01)          *H04L 9/32* (2006.01)
*H04W 4/80* (2018.01)          *H04W 56/00* (2009.01)
*H04L 9/08* (2006.01)          *H04L 9/06* (2006.01)

(86) Internationale Anmeldenummer:
**PCT/EP2014/076554**

(87) Internationale Veröffentlichungsnummer:
**WO 2015/082603 (11.06.2015 Gazette 2015/23)**

(54) **ZUGANGSKONTROLLSYSTEM**

ACCESS CONTROL SYSTEM

SYSTÈME DE CONTRÔLE D'ACCÈS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2013   DE 102013113554**
**11.04.2014   DE 102014105243**

(43) Veröffentlichungstag der Anmeldung:
**27.07.2016   Patentblatt 2016/30**

(73) Patentinhaber: **Deutsche Post AG**
**53113 Bonn (DE)**

(72) Erfinder:
• **CARSTENS, Christian**
**53578 Windhagen (DE)**
• **DAUTZ, Christoph**
**53225 Bonn (DE)**
• **JANSEN, Jochen**
**53113 Bonn (US)**
• **BENZ, Ramin**
**53229 Bonn (US)**
• **DMITRIENKO, Alexandra**
**64297 Darmstadt (DE)**
• **BULYGIN, Stanislav**
**70794 Filderstadt (DE)**
• **LIPPERT, Marcus**
**64319 Pfungstadt (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**EP-A1- 2 595 341      EP-A2- 1 277 632**
**DE-A1- 10 202 802      US-A- 5 768 379**
**US-B1- 6 895 507**

**Beschreibung**

**Gebiet**

Beispielhafte Ausführungsformen der Erfindung betreffen Komponenten eines Zugangskontrollsystems und von diesen Komponenten ausgeführte Verfahren. Beispielhafte Ausführungsformen der Erfindung betreffen insbesondere Komponenten eines Systems zur Kontrolle des Zugangs unterschiedlicher Personen zu Paket- oder Warenzustellungsbehältern.

**Hintergrund**

Zugangskontrollsysteme finden in vielerlei Hinsicht Anwendung, beispielsweise zur Kontrolle des Zugangs von Personen zu Räumen eines Gebäudes, wie es beispielsweise bei Hotels, Bürokomplexen oder Laboren der Fall ist, zu Veranstaltungen oder auch in abstrakter Form zu Funktionen, Ressourcen oder Diensten, beispielsweise von Computerfunktionen oder - ressourcen oder Serverdiensten.

Derartige Zugangskontröllsysteme sind aus dem Stand der Technik bekannt, beispielsweise aus der EP 2 595 341 A1. Dort wird durch eine Benutzerrechteverwaltung ein erstes Prüfmerkmal erzeugt, indem eine bei der Benutzerrechteverwaltung hinterlegte Kennung und ein Gültigkeitszeitraum mittels eines ersten Algorithmus transformiert werden. Durch die Benutzerrechteverwaltung wird ferner ein Zugangscode erzeugt, indem dem ersten Prüfmerkmal eine Zeiteinschränkung hinzugefügt wird. Der Zugangscode wird von der Benutzerrechteverwaltung an einen Benutzer übermittelt und vom Benutzer an eine am Ort eines Objekts lokalisierte Kontrolleinrichtung übermittelt, die anhand des Zugangscodes prüft, ob dem Benutzer Zugang zum Objekt gewährt werden kann.

Die US 5 768 379 A offenbart Systeme zum Überprüfen eines Zugriffs, der auf autorisierte Zeitfenster beschränkt ist, die mittels einer tragbaren Speichervorrichtung erneuert werden können. Das System umfasst zu diesem Zweck ein Element, das elektronische Schlüssel erzeugt, die durch ein zu einem Zeitschlitz gehöriges Datenelement und durch die Signatur dieses Datenelements gebildet werden. Diese elektronischen Schlüssel werden in tragbare Geräte wie Speicherkarten geladen. Elektronische Schlösser, die die Signaturen verifizieren können, werden an verschiedenen Orten eingesetzt, deren Zugang geschützt werden muss.

Eine spezifische Anwendung von Zugangskontrollsystemen bildet auch die Kontrolle des Zugangs von Personen zu Öffnungen von Behältern, wie z.B. Schließfächern oder Warenzustellungsbehältern, insbesondere von Paketkästen. Paketkästen ermöglichen eine neuartige Form der Zustellung/Abholung von Paketen für Personen, die Pakete auch in Abwesenheit an oder in der Nähe ihres Wohnsitzes empfangen oder versenden wollen. Dazu werden Paketkästen üblicherweise vor dem Wohnsitz des Paketkastennutzers - ähnlich einem Briefkasten, aber mit größerem Fassungsvolumen - installiert und Pakete dann vom Zusteller durch Einlegen in den Paketkasten zugestellt oder durch Herausnehmen aus dem Paketkasten abgeholt. Um Missbrauch und Diebstahl zu verhindern, muss der Paketkasten über ein Schloss verfügen. Sowohl der Zusteller als auch der Paketkastennutzer müssen dann mit physikalischen oder logischen Schlüsseln ausgestattet werden, um den Paketkästen benutzen zu können.

**Zusammenfassung einiger beispielhafter Ausführungsformen der Erfindung**

Bis dato gibt es kein zufriedenstellendes Zugangskontrollsystem für eine Installation einer Vielzahl von Paketkästen, das es ermöglicht, dass die Kästen ohne Netzwerkanbindung - also offline - arbeiten und dennoch eine sichere und flexible Vergabe von Paketkasten-Zugangsberechtigungen sowohl an die Zusteller als auch an die Paketkastennutzer gewährleistet ist.

Die vorliegende Erfindung hat sich daher die Aufgabe gestellt, dieses Problem zu überwinden.

Gemäß einem ersten Aspekt der Erfindung wird ein Verfahren zur Zugangskontrolle gemäß Anspruch 1 offenbart.

Die Zugangsberechtigungsinformation kann beispielsweise von einer Zugangsberechtigungsnachweisvorrichtung an die Zugangskontrollvorrichtung gemäß dem ersten Aspekt der Erfindung kommuniziert werden.

Gemäß einem zweiten Aspekt der Erfindung wird ein Verfahren zur Erzeugung von Zugangsberechtigungsinformation nach Anspruch 11 offenbart.

Gemäß jedem dieser Aspekte der Erfindung werden des Weiteren jeweils offenbart:

- Ein Computerprogramm, umfassend Programmanweisungen, die einen Prozessor zur Ausführung des Verfahrens gemäß dem jeweiligen Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon.

- Eine Vorrichtung umfassend jeweilige Mittel zur Ausführung der Schritte des Verfahrens gemäß dem jeweiligen Aspekt der Erfindung. Ein oder mehrere der Mittel können dabei durch die gleiche Einheit ausgeführt werden. Beispielsweise können ein oder mehrere der Mittel durch einen oder mehrere Prozessoren gebildet sein.

Diese Aspekte der vorliegenden Erfindung weisen u.a. die nachfolgend beschriebenen - teilweise beispielhaften - Eigenschaften auf.

An einer Zugangskontrollvorrichtung wird eine Zugangskontrolle durchgeführt, beispielsweise wird der Zugang zu Räumen von Gebäuden (z.B. Hotels, Bürokomplexe, Labore) oder Vorrichtungen, zu Veranstaltungen (z.B. Konzerte, Sportveranstaltungen), zu Funktionen (beispielsweise eines Computers, z.B. über ein Login), zu Ressourcen oder zu Diensten (beispielsweise zu einem von einem Server bereitgestellten Dienst, z.B. Online-Banking, Soziale Netzwerke, Emailkonten) kontrolliert. Beispiele des Zugangs zu Räumen von Vorrichtungen sind der Zugang zu Aufnahmeräumen von Aufnahmevorrichtungen, wie z.B. Schließfächern, Spinden, Kühlschränken, Warenzustellbehältern, Briefkästen, Paketkästen oder kombinierten Brief- und Paketkästen, die beispielsweise jeweils mit Türen verschlossen und durch Schließeinrichtungen gesichert sind.

Bei der Zugangskontrollvorrichtung kann es sich beispielsweise um ein oder mehrere Prozessoren handeln, die eine oder mehrere Schließeinrichtungen, beispielsweise ein elektronisch ansteuerbares Schloss, steuern, und somit beispielsweise ein Öffnen und/oder Schließen des Schlosses bewirken können. Das Schloss kann beispielsweise mit einer Fallenfunktion ausgestattet sein, so dass die Zugangskontrollvorrichtung beispielsweise nur eine Öffnung des Schlosses (beispielsweise durch ein zumindest zeitweises Überführen der Falle in eine OffenStellung, beispielsweise durch einen elektrischen Motor) steuern muss, während ein Schließen des Schlosses manuell durch einen Nutzer geschieht, indem dieser die Fallenfunktion nutzt und beispielsweise durch Zudrücken einer Tür die Falle aus der Zu-Stellung in die OffenStellung verdrängt und nach dem Beenden des Zudrückens die Falle automatisch wieder in die Zu-Stellung zurückkehrt, beispielsweise durch Federvorbelastung.

Die Zugangskontrollvorrichtung kann auch die Schließeinrichtungen und weitere Komponenten umfassen. Die Zugangskontrollvorrichtung kann Bestandteil einer Vorrichtung sein, zu der sie den Zugang kontrolliert, beispielsweise einer Aufnahmevorrichtung. Die Zugangskontrollvorrichtung kann beispielsweise batteriebetrieben sein und beispielsweise über keinen insbesondere ständigen Stromanschluss verfügen. Die Zugangskontrollvorrichtung kann beispielsweise derart eingerichtet sein, dass sie im Betrieb ausschließlich zur Kommunikation mit Zugangsberechtigungsnachweisvorrichtungen eingerichtet ist, und beispielsweise nicht zur Kommunikation mit der Zugangsberechtigungserzeugungsvorrichtung eingerichtet ist. Die Zugangskontrollvorrichtung verfügt beispielsweise über keinen Anschluss an ein Mobilfunknetz, ein Local Area Network (LAN), ein Wireless Local Area Network (WLAN) oder das Internet, sie stellt damit also beispielsweise eine "offline"-Zugangskontrollvorrichtung dar. Die drahtlose Kommunikation der Zugangskontrollvorrichtung kann beispielsweise auf Kommunikation mit Vorrichtungen in der näheren Umgebung der Zugangskontrollvorrichtung (beispielsweise weniger als 100 m) eingerichtet sein. Die drahtlose Kommunikation der Zugangskontrollvorrichtung kann beispielsweise auf Kommunikation mittels Radio Frequency Identification (RFID) und/oder Near Field Communication (NFC) und/oder Bluetooth (z.B. Bluetooth Version 2.1 und/oder 4.0) beschränkt sein. RFID und NFC- sind beispielsweise gemäß den ISO-Standards 18000, 11784/11785 und dem ISO/IEC-Standard 14443-A und 15693 spezifiziert. Die Bluetooth-Spezifikationen sind unter www.bluetooth.org erhältlich. Die Zugangskontrollvorrichtung kann nichtsdestotrotz beispielsweise über eine Universal Serial Bus (USB) Schnittstelle verfügen, über die die Zugangskontrollvorrichtung beispielsweise gewartet werden kann.

Die Zugangskontrolle kann beispielsweise darin bestehen, dass anhand von vorgelegter Zugangsberechtigungsinformation entschieden wird, ob Zugang gewährt werden darf. Wenn entschieden wird, dass Zugang gewährt werden darf, wird beispielsweise Zugang gewährt, beispielsweise durch Absetzen eines Steuersignals, beispielsweise an ein Schloss, um beispielsweise eine Tür zu einem oder mehreren Räumen (z.B. Aufnahmeräume einer Aufnahmevorrichtung) zu entriegeln und/oder zu öffnen um den Zugang zu den ein oder mehreren Räumen zu ermöglichen. Der Zugang kann in unterschiedlichem Ausmaß gewährt werden, beispielsweise können bei Vorhandensein von mehreren Aufnahmeräumen lediglich Zugang zu bestimmten Aufnahmeräumen oder Gruppen von Aufnahmeräumen gewährt werden. Das Ausmaß des Zugangs kann beispielsweise in einem Zugangsberechtigungsparameter der Zugangsberechtigungsinformation definiert sein.

An der Zugangskontrollvorrichtung wird Zugangsberechtigungsinformation erhalten, die an die Zugangskontrollvorrichtung kommuniziert wurde, insbesondere von einer Zugangsberechtigungsnachweisvorrichtung, auf der die Zugangsberechtigungsinformation zumindest zeitweise gespeichert ist. Die Zugangsberechtigungsinformation kann beispielsweise über drahtlose Kommunikation an die Zugangskontrollvorrichtung kommuniziert werden, beispielsweise über Kommunikation mittels RFID, NFC oder Bluetooth.

Bei der Zugangsberechtigungsnachweisvorrichtung kann es sich beispielsweise um ein tragbares elektronisches Gerät handeln. Das Gerät ist beispielsweise einem Nutzer (z.B. einem hinsichtlich der Zugangskontrollvorrichtung registrierten Nutzer) zugeordnet, der sich mit der Zugangsberechtigungsinformation an der Zugangskontrollvorrichtung Zugang verschaffen möchte und wird daher nachfolgend als "Nutzergerät" bezeichnet. Das Nutzergerät weist beispielsweise eine graphische Benutzerschnittstelle und/oder eine eigene Stromversorgung auf. Das Nutzergerät ist beispielsweise ein Mobiltelefon, ein Persönlicher Digitaler Assistent (PDA), ein Medienabspielgerät (z.B. einen iPod), oder ein Navigationsgerät. Wenn die Zugangskontrollvorrichtung einem Paketkasten zugeordnet ist, kann das Nutzergerät beispielsweise einem Paketkastennutzer, also beispielsweise einem Besitzer des Paketkastens, oder einer Person, die über den Paketkasten Pakete empfangen oder zur Abstellung durch einen Zusteller einlegen darf) gehören. Ein Zusteller wird in diesem Sinne nicht als Nutzer verstanden. Das Nutzergerät ist zur drahtlosen Kommunikation mit der Zugangskontrollvorrichtung eingerichtet, beispielsweise über Bluetooth und/oder RFID und/oder NFC. Das Gerät verfügt beispielsweise über die Fähigkeit, über ein zellulares Mobilfunknetz (z.B. ein auf dem Global System for Mobile Communication (GSM), dem Universal Mobile Telecommunications System (UMTS) und/oder dem Long Term Evolution (LTE) System basierenden Mobilfunknetz) zu kommunizieren.

Alternativ kann es sich bei der Zugangsberechtigungsnachweisvorrichtung beispielsweise um ein tragbares elektronisches Gerät eines Zustellers handeln, insbesondere, wenn die Zugangskontrollvorrichtung einem Paketkasten zugeordnet ist. Dieses Gerät wird nachfolgend als "Zustellergerät" bezeichnet. Das Zustellergerät verfügt beispielsweise über eine graphische Benutzerschnittstelle und einer Funktionalität zur drahtlosen Erfassung von Information von Paketen, beispielsweise durch optisches Scannen von Paketetiketten und/oder Erfassen von Informationen von Paketen über Funk (z.B. RFID) oder magnetische Felder (z.B. NFC), beispielsweise wenn das Paket einen RFID-Tag oder NFC-Tag aufweist. Das Zustellergerät kann beispielsweise die Fähigkeit aufweisen, über ein zellulares Mobilfunknetz zu kommunizieren, dies kann aber auch nicht der Fall sein. Das Zustellergerät kann beispielsweise über die Fähigkeit verfügen, über WLAN und/oder über ein zellulares Mobilfunksystem (insbesondere über GRPS) zu kommunizieren. Das Zustellergerät kann beispielsweise über die Fähigkeit verfügen, über Bluetooth und/oder NFC zu kommunizieren, beispielsweise auch durch entsprechende Nachrüstung. Ein Beispiel für ein Zustellergerät ist ein Handscanner, z.B. LXE Tecton MX7 der Firma Honeywell.

Wenn die Zugangsberechtigungsnachweisvorrichtung (insbesondere das Nutzergerät und/oder das Zustellergerät) mittels Bluetooth Zugangsberechtigungsinformation an die Zugangskontrollvorrichtung kommuniziert, ist es vorteilhaft, dass der Zugangsberechtigungsnachweisvorrichtung die Medium Access Control (MAC)-Adresse der Zugangskontrollvorrichtung bekannt ist, da dann die Bluetooth-Kommunikation ohne die Notwendigkeit des zeitaufwändigen Bluetooth-Pairings gestartet werden kann. Die MAC-Adresse der Zugangskontrollvorrichtung wird dem Zugangsberechtigungsnachweisvorrichtung beispielsweise zusammen mit der Zugangsberechtigungsinformation mitgeteilt.

Alternativ kann es sich bei der Zugangsberechtigungsnachweisvorrichtung beispielsweise um eine tragbare elektronische Einheit zur drahtlosen Kommunikation mit der Zugangskontrollvorrichtung handeln. Diese tragbare elektronische Einheit wird nachfolgend als "Tag" bezeichnet. Der Tag kann beispielsweise keine Fähigkeit zur Kommunikation mittels zellularem Mobilfunk, und/oder keine Fähigkeit zur Kommunikation mittels WLAN und/oder keine Fähigkeit zur Kommunikation mittels Bluetooth aufweisen. Der Tag kann beispielsweise keine graphische Benutzerschnittstelle und/oder keine eigene Stromversorgung aufweisen. Der Tag kann beispielsweise nur bei Anliegen eines (z.B. elektromagnetischen oder magnetischen) Lesefelds eines Lesegeräts kommunizieren. Bei dem Tag kann es sich beispielsweise um einen RFID- oder NFC-Tag (z.B. ein MiFARE -Tag von NXP) handeln. Der Tag kann beispielsweise unterschiedliche Formfaktoren aufweisen. Er kann beispielsweise als Schlüsselanhänger oder als Karte (z.B. etwa mit dem Formfaktor einer Kreditkarte) ausgebildet sein. Der Tag kann beispielsweise geringe Abmessungen (z.B. weniger als jeweils 9 cm oder 5 cm Höhe/Länge/Breite) und geringes Gewicht (z.B. weniger als 50g) aufweisen. Die auf dem Tag gespeicherte Informationen (z.B. die Zugangsberechtigungsinformation) kann beispielsweise an ein entsprechendes Lesegerät kommuniziert werden, beispielsweise auch erst nach erfolgreicher Authentisierung des Lesegeräts dem Tag gegenüber. Das Lesegerät kann beispielsweise Bestandteil der Zugangskontrollvorrichtung sein oder mit dieser operativ verbunden sein. Die Tags können beispielsweise bei 120-135 kHz, 13,56 MHz oder 865-869 MHz arbeiten, es sind aber auch andere, insbesondere höhere Frequenzen möglich. Die Informationsübertragung kann beispielsweise auf kapazitiver Kopplung, induktiver Kopplung oder auf elektromagnetischen Wellen (z.B. Backscatter-Verfahren) beruhen. Der Tag kann beispielsweise eine Antenne, einen analogen Schaltkreis zum Senden und Empfangen (auch als Transceiver bezeichnet), einen digitalen Schaltkreis (z.B. einen Mikrocontroller) und einen Speicher (beispielsweise ein EEPROM - Electrically Erasable Programmable Read-Only Memory) umfassen. Die Zugangsberechtigungsinformation kann beispielsweise auf ein von einer Leseeinheit erzeugtes hochfrequentes Signal aufmoduliert werden, beispielsweise in Form einer Lastmodulation. Die Leseeinheit kann dann dadurch die Berechtigungsinformation vom Tag erhalten.

Die Zugangsberechtigungsinformation wird auf der Zugangsberechtigungserzeugungsvorrichtung, die beispielsweise als ein oder mehrere Server ausgebildet sein kann, erzeugt Sie wird dann zur Speicherung auf einer Zugangsberechtigungsnachweisvorrichtung ausgegeben. Dies kann beispielsweise dadurch geschehen, dass die Zugangsberechtigungsinformation über eine Kommunikationsverbindung zwischen der Zugangsberechtigungserzeugungsvorrichtung und der Zugangsberechtigungsnachweisvorrichtung an die Zugangsberechtigungsnachweisvorrichtung übertragen und dort gespeichert wird, insbesondere, wenn es sich bei der Zugangsberechtigungsnachweisvorrichtung um ein Nutzergerät (z.B. ein Mobiltelefon, wie oben beschrieben) handelt. Beispielsweise ist dann auf der Zugangsberechtigungsnachweisvorrichtung eine Funktionalität vorhanden, beispielsweise als Applikation ("App"), die beispielsweise von einem Online-Marktplatz heruntergeladen werden kann, die u.a. dem Abruf von Zugangsberechtigungsinformation dient. Die Zugangsberechtigungsinformation kann beispielsweise immer dann von der Zugangsberechtigungserzeugungsvorrichtung an die Zugangsberechtigungsnachweisvorrichtung übertragen werden, wenn die Gültigkeit der Zugangsberechtigungsinformation abgelaufen ist, beispielsweise in einem jährlichen oder halbjährlichen Turnus. Die Zugangsberechtigungsinformation kann dazu beispielsweise von der Zugangsberechtigungserzeugungsvorrichtung auf die Zugangsberechtigungsnachweisvorrichtung aktiv gepusht (also ohne Anfrage durch die Zugangsberechtigungsnachweisvorrichtung übertragen) werden, oder nur auf Anfrage durch die Zugangsberechtigungsnachweisvorrichtung (oder eine andere Entität) auf die Zugangsberechtigungsnachweisvorrichtung übertragen werden (und beispielsweise auch erst auf die Anfrage hin erzeugt werden). Die Kommunikationsverbindung zwischen der Zugangsberechtigungserzeugungsvorrichtung und der Zugangsberechtigungsnachweisvorrichtung kann auf ein oder mehreren Kommunikationsnetzen beruhen, von denen beispielsweise zumindest eines ein Mobilfunknetz oder ein WLAN-Netz ist. Wenn die Zugangsberechtigungsnachweisvorrichtung beispielsweise ein Nutzergerät (z.B. ein Mobiltelefon) ist, kann die Zugangsberechtigungsinformation beispielsweise über eine Hypertext Transfer Protocol (HTTP)- oder Hyper Text Transport Protocol Secure (HTTPS) -Verbindung, die beispielsweise auf einer General Packet Radio (GPRS)-Verbindung beruht, von der Zugangsberechtigungserzeugungsvorrichtung bezogen werden.

Wenn die Zugangsberechtigungsnachweisvorrichtung beispielsweise ein Zustellergerät (z.B. ein Handscanner eines Zustellers) ist, kann die Zugangsberechtigungsinformation beispielsweise über das Internet an einen Computer (z.B. einen Computer in einer Zustellbasis, mit der das Zustellergerät zumindest zeitweise assoziiert ist) übertragen und unter dessen Steuerung dann beispielsweise drahtgebunden (z.B. mittels einer Docking-Station) oder drahtlos (z.B. per WLAN) auf das Zustellergerät übertragen werden. Dies kann beispielsweise jeden Tag von neuem erfolgen.

Wenn die Zugangsberechtigungsnachweisvorrichtung beispielsweise ein Tag (z.B. ein RFID- oder NFC-Tag, wie oben beschrieben) ist, gibt die Zugangsberechtigungserzeugungsvorrichtung die Zugangsberechtigungsinformation beispielsweise dadurch zur Speicherung an den Tag aus, dass die Zugangsberechtigungsinformation an eine Schreibeinheit übertragen wird (beispielsweise über das Internet), die dann die Zugangsberechtigungsinformation in den Tag einschreibt. Beispielsweise wird die Zugangsberechtigungsinformation an einen Computer eines Lieferanten oder Herstellers von Tags übertragen, der dann das Einschreiben der Zugangsberechtigungsinformation in die Tags vornimmt. Dies geschieht beispielsweise bevor die Tags an die Personen ausgegeben werden, die die Zugangsberechtigungsinformation zum Zugangsberechtigungsnachweis verwenden sollen (z.B. Nutzer und/oder Zusteller). Die Gültigkeit der auf Tags gespeicherten Zugangsberechtigungsinformationen kann aufgrund des im Vergleich zu den Nutzergeräten und/oder Zustellergeräten höheren Aufwands des Ersetzens der Zugangsberechtigungsinformation in den Tags länger sein als die Gültigkeit der auf den Nutzergeräten und/oder Zustellergeräten gespeicherten Zugangsberechtigungsinformationen.

Die Zugangsberechtigungsinformation enthält ein oder mehrere Zugangsberechtigungsparameter. Dabei kann es sich beispielsweise um eine (insbesondere eindeutige) Kennung für die Zugangskontrollvorrichtung, eine (insbesondere eindeutige) Kennung für die Zugangsberechtigungsinformation selbst, zeitliche Gültigkeitsinformationen (z.B. in Form eines "Nicht-Vor-Datums", eines "Nicht-Nach-Datums", einer "Startzeit des Tages" und einer "Endzeit des Tages", die angeben, innerhalb welcher Tage und innerhalb welcher Tageszeit Zugang gewährt werden darf, beispielsweise vom 27.3.2014 00:00:00 Uhr bis zum 28.3.2014 23:59:59 Uhr), eine Obergrenze der erlaubten Nutzungen der Zugangsberechtigungsinformation, um Zugang zu erhalten, und einer Information, in welchem Ausmaß Zugang gewährt werden darf (also beispielsweise ob alle Türen eines Paketkastens geöffnet werden dürfen, oder nur eine oder eine bestimmte Gruppe). Die ein oder mehreren Zugangsberechtigungsparameter werden zusammen in dieser Spezifikation auch als Zugangsberechtigung bezeichnet.

Zumindest eine vordefinierte Menge (z.B. alle, oder nur einige) der Zugangsberechtigungsparameter werden hinsichtlich jeweiliger Bezugsinformationen darauf geprüft, ob sie jeweils zum Zugang berechtigen. Beispielsweise kann die Kennung für die Zugangskontrollvorrichtung als Zugangsberechtigungsparameter hinsichtlich einer in der Zugangskontrollvorrichtung gespeicherten Kennung der Zugangskontrollvorrichtung geprüft werden und bei Übereinstimmung festgestellt werden, dass dieser Zugangsberechtigungsparameter zum Zugang berechtigt. Die zeitlichen Gültigkeitsinformationen als Zugangsberechtigungsparameter können beispielsweise hinsichtlich einer von einer Uhr der Zugangskontrollvorrichtung erhaltenen zeitlichen Information (z.B. Datum und Uhrzeit) geprüft werden, beispielsweise dergestalt, dass ein durch die Gültigkeitsinformationen definierter Zeitraum den aktuellen Zeitpunkt laut Uhr der Zugangskontrollvorrichtung enthalten muss, damit Zugang gewährt werden kann. Dabei kann eine vordefinierte zeitliche Toleranz zulässig sein, um eventuelle Zeitunterschiede zischen der Uhr der Zugangskontrollvorrichtung und einer Uhr in der Zugangsberechtigungserzeugungsvorrichtung auszugleichen. Eine kommunizierte Obergrenze der erlaubten Nutzungen kann entsprechend gegen einen in der Zugangskontrollvorrichtung gespeicherten Zähler geprüft werden, der bei jeder Verwendung dieser Zugangsberechtigungsinformation zur Zugangverschaffung an der Zugangskontrollvorrichtung um eins inkrementiert wird. Der Vergleich der kommunizierten Obergrenze mit dem Zähler als Bezugsinformation ergibt, dass Zugang gewährt werden darf, wenn der Zähler kleiner als die kommunizierte Obergrenze ist.

Während beispielsweise die Kennung der Zugangskontrollvorrichtung und die von der Uhr erhaltene zeitliche Information in der Zugangskontrollvorrichtung ständig vorhanden sind, kann es ein oder mehrere Zugangsberechtigungsparameter geben, die hinsichtlich Bezugsinformation geprüft werden müssen, die nicht ständig in der Zugangskontrollvorrichtung vorhanden sind, sondern beispielsweise erst bei dem ersten Prüfen oder kurz vor dem ersten Prüfen. Dies kann beispielsweise für die Kennung der Zugangsberechtigungsinformation oder der Zugangsberechtigungsnachweisvorrichtung als Zugangsberechtigungsparameter der Fall sein, wenn diese Kennung, beispielsweise in verschlüsselter Form (oder alternativ in Kombination mit einem vierten Schlüssel), erst zusammen mit der Zugangsberechtigungsinformation oder vor oder nach der Zugangsberechtigungsinformation (beispielsweise aber in der gleichen Kommunikationssitzung) an der Zugangskontrollvorrichtung erhalten wird. Auch hier ist für die Gewährung des Zugangs erforderlich, dass die als Zugangsberechtigungsparameter kommunizierte Kennung der Zugangsberechtigungsinformation mit der durch Entschlüsselung aus der verschlüsselt erhaltenen Kennung der Zugangsberechtigungsinformation übereinstimmt. In ähnlicher Weise kann die Kennung der Zugangsberechtigungsinformation oder der Zugangsberechtigungsnachweisvorrichtung auch hinsichtlich einer Zurückweisungsliste als Beispiel für Bezugsinformation geprüft werden. Diese Zurückweisungsliste kann beispielsweise nicht bereits anfänglich, sondern erst nach einiger verstrichener Betriebsdauer der Zugangskontrollvorrichtung auf dieser gespeichert sein. Es kann beispielsweise der Fall auftreten, dass die Zurückweisungsliste in der gleichen Kommunikationssitzung, in der auch die Zugangsberechtigungsinformation an die Zugangskontrollvorrichtung übertragen wird, an der Zugangskontrollvorrichtung erhalten wird, beispielsweise zeitlich vor der Zugangsberechtigungsinformation.

Ein Zugangsberechtigungsparameter, der nicht gegen Bezugsinformation geprüft wird, ist beispielsweise die Information, in welchem Ausmaß Zugang gewährt werden soll. Diese Information wird beispielsweise bei der Gewährung des Zugangs berücksichtigt, aber beispielsweise nicht bei der Prüfung, ob Zugang gewährt werden soll. Beispielsweise kann die Information, in welchem Ausmaß Zugang gewährt werden soll, angeben, welche Tür oder welche Gruppe von Türen einer Vielzahl von Türen eines Gebäudes oder einer Vorrichtung geöffnet werden sollen, wenn entschieden wurde, dass Zugang gewährt werden darf. Wenn es sich bei der Vorrichtung um einen Paketkasten mit einer Tür für ein Paketfach und einer Tür für ein Brieffach handelt, kann die Information beispielsweise angeben, ob nur das Paketfach (beispielsweise für einen Zusteller) oder sowohl das Paketfach als auch das Brieffach (beispielsweise für einen Nutzer des Paketkastens) geöffnet werden sollen.

Bevor allerdings die einzelnen Zugangsberechtigungsparameter hinsichtlich ihrer jeweiligen Bezugsinformation in der Zugangskontrollvorrichtung geprüft werden, muss das erste Prüfen ein positives Ergebnis liefern. Das erste Prüfen analysiert die in der Zugangsberechtigungsinformation enthaltene erste Prüfinformation, um die Integrität (Unversehrtheit bzw. Manipulationsfreiheit) und Authentizität (Echtheit bzw. Herkunft von der vermuteten Quelle) der Zugangsberechtigungsinformation festzustellen, wie unten noch genauer ausgeführt werden wird. Die Authentizität der Zugangsberechtigungsinformation wird in erster Linie dadurch festgestellt, dass die die Zugangsberechtigungsinformation ausstellende Stelle, also die Zugangsberechtigungserzeugungsvorrichtung, bei den kryptographischen Operationen den ersten Schlüssel eines zwischen der Zugangskontrollvorrichtung und der Zugangsberechtigungserzeugungsvorrichtung als Geheimnis gehüteten Schlüsselpaars verwendet hat, was anhand des zweiten Schlüssels dieses Schlüsselpaars, der ersten Prüfinformation und den kommunizierten Zugangsberechtigungsparameter von der Zugangskontrollvorrichtung geprüft werden kann. Im Zuge dieser Prüfung wird auch die Integrität der kommunizierten Zugangsberechtigungsparameter bestätigt. Keiner der Schlüssel des Schlüsselpaars ist dabei beispielsweise außerhalb der Zugangskontrollvorrichtung und der Zugangsberechtigungserzeugungsvorrichtung bekannt, insbesondere kennen auch die Zugangsberechtigungsnachweisvorrichtung oder deren Nutzer diese Schlüssel nicht. Bei dem Schlüsselpaar kann es sich beispielsweise um ein symmetrisches Schlüsselpaar handeln, was bedeutet, dass der erste Schlüssel und der zweite Schlüssel identisch sind. Eine Ver- und Entschlüsselung mit solchen symmetrischen Schlüsseln kann beispielsweise nach den Verfahren Advanced Encryption Standard (AES), DES (Data Encryption Standard), Data Encryption Algorithm (DEA), Triple-DES, IDEA (International Data Encryption Algorithm) oder Blowfish vorgenommen werden, um nur ein paar Beispiele zu nennen. Symmetrische Schlüssel können beispielsweise pseudo-zufällig gewählt sein. Bei einem asymmetrischen Schlüsselpaar sind hingegen beide Schlüssel unterschiedlich, z.B. bei einem asymmetrischen Schlüsselpaar nach dem RSA (Rivest, Shamir, Adleman) - Verfahren oder nach dem Verfahren nach McEliece, Rabin, Chor-Rivest oder Elgamal. Verfahren zur Erzeugung von symmetrischen und asymmetrischen Schlüsseln zur Erzeugung von digitalen Signaturen, Message Authentication Codes (MACs) und zum Ver- und Entschlüsseln sind in der Publikation "Special Publication 800-133 Recommendation for Cryptographic Key Generation" des National Institute of Standards and Technology (NIST) des U.S. Department of Commerce angegeben.

Zugang wird also gewährt, wenn das erste Prüfen positiv verlaufen ist, also insbesondere Integrität und Authentizität der Zugangsberechtigungsinformation bestätigt wurde, und auch für zumindest eine bestimmte Menge der Zugangsberechtigungsparameter festgestellt wurde, dass diese hinsichtlich ihrer jeweiligen Bezugsinformation in der Zugangskontrollvorrichtung zum Zugang berechtigen. Wenn Entschieden wird, dass Zugang gewährt werden darf, wird beispielsweise ein entsprechendes Steuersignal ausgegeben, beispielsweise an ein Schloss. Anderenfalls wird beispielsweise ein z.B. optischer oder akustischer Alarm oder eine Warnung ausgegeben.

Das gemäß dem ersten bis zweiten Aspekt der Erfindung verkörperte Zugangskontrollsystem weist eine Reihe von Vorteilen auf. Dadurch, dass die Zugangskontrollvorrichtung und die Zugangsberechtigungserzeugungsvorrichtung das Schlüsselpaar als Geheimnis behandeln, wird einerseits die Zugangsberechtigungserzeugungsvorrichtung in die Lage versetzt, ausschließlich selbst Zugangsberechtigungsinformation für die Zugangskontrollvorrichtung zu erstellen. Die Zugangskontrollvorrichtung andererseits kann der von der Zugangsberechtigungserzeugungsvorrichtung erzeugten Zugangsberechtigungsinformation vertrauen. Daher können auch die Zugangsberechtigungsparameter grundsätzlich unverschlüsselt an die Zugangskontrollvorrichtung kommuniziert werden: Unter Verwendung des zweiten Schlüssels des Schlüsselpaars kann deren Integrität und die Authentizität der Zugangsberechtigungsinformation hinreichend bestätigt werden. Da die Zugangskontrollvorrichtung entweder langfristig unveränderliche Bezugsinformationen wie die Kennung der Zugangskontrollvorrichtung oder selbst verwaltbare Bezugsinformationen wie z.B. die aus der lokalen Uhr der Zugangskontrollvorrichtung abgeleitete zeitliche Information oder den Zähler für die mit bestimmter Zugangsberechtigungsinformation bereits erfolgten gewährten Zugänge zur Prüfung der kommunizierten Zugangsberechtigungsparameter verwendet, ist die Zugangskontrollvorrichtung im wesentlichen autark und kommt ohne Netzwerkanbindung aus. Dies reduziert auch den Stromverbrauch, was bei einer batteriebetriebenen Vorrichtung ebenfalls erheblich ist. Des weiteren werden in der Zugangskontrollvorrichtung die kryptographischen Operationen über die kommunizierten Zugangsberechtigungsparameter vorgenommen, und nicht über lokal vorhandene. Dies erlaubt es insbesondere, die Prüfung der Integrität der erhaltenen Informationen von der Prüfung deren Inhalts zu trennen. Würden beispielsweise alternativ die "erwartete" erste Prüfinformation in der Zugangskontrollvorrichtung berechnet und dann mit der kommunizierten ersten Prüfinformation verglichen, müsste je nach Granularität der als Zugangsberechtigungsparameter eingesetzten zeitlichen Gültigkeit (z.B. 1 Minute, 10 Minuten, 1 Stunde) für eine Vielzahl von Zeitpunkten die erwartete erste Prüfinformation gebildet und mit der kommunizierten ersten Prüfinformation verglichen werden, um mit zumindest einer erwarteten ersten Prüfinformation die kommunizierte Prüfinformation genau zu "treffen". Stattdessen wird im vorliegenden Zugangskontrollsystem die Integrität der kommunizierten zeitlichen Gültigkeit festgestellt und diese zeitliche Gültigkeit mit der zeitlichen Information in der Zugangskontrollvorrichtung verglichen, um wesentlich einfacher und schneller festzustellen, ob die Differenz noch innerhalb einer vordefinierten Toleranz liegt.

Weitere Vorteile des offenbarten Zugangskontrollsystems werden nachfolgend anhand beispielhafter Ausführungsformen beschrieben, deren Offenbarung für alle Aspekte der Erfindung und alle jeweiligen Kategorien (Verfahren, Vorrichtung, Computerprogramm) gleichermaßen gelten soll.

In einer beispielhaften Ausführungsform aller Aspekte der Erfindung ist das Schlüsselpaar ein asymmetrisches Schlüsselpaar, und das erste Prüfen umfasst das Prüfen der kommunizierten ersten Prüfinformation als digitale Signatur über die Zugangsberechtigungsparameter unter Verwendung zumindest des zweiten Schlüssels des Schlüsselpaars und der kommunizierten Zugangsberechtigungsparameter. Der erste und zweite Schlüssel des asymmetrischen Schlüsselpaars sind dann unterschiedlich. Beispielsweise ist der erste Schlüssel ein privater Schlüssel und der zweite Schlüssel ein öffentlicher Schlüssel, oder umgekehrt. Das Schlüsselpaar kann beispielsweise nach dem RSA-Algorithmus erzeugt worden sein. Die digitale Signatur wird beispielsweise dadurch gebildet (insbesondere in der Zugangsberechtigungserzeugungsvorrichtung), dass ein Hashwert über die Zugangsberechtigungsparameter gebildet wird, beispielsweise nach einem Algorithmus der Secure Hash Algorithm (SHA) Familie, wie sie vom National Institute of Standards and Technology (NIST) spezifiziert sind, beispielsweise ein SHA-1, SHA-224 oder SHA-256, um nur einige Beispiele zu nennen. Der Hashwert wird dann beispielsweise mit dem ersten Schlüssel verschlüsselt, um die erste Prüfinformation zu erhalten. Alternativ können die Zugangsberechtigungsparameter auch ohne Hashwertbildung verschlüsselt werden. Zur Prüfung der Signatur wird die erste Prüfinformation mit dem zweiten Schlüssel entschlüsselt und der dadurch erhaltene Hashwert mit einem lokal über die kommunizierten Zugangsberechtigungsparameter nach dem gleichen Algorithmus gebildeten Hashwert verglichen. Bei Übereinstimmung der Hashwerte kann von der Authentizität der Zugangsberechtigungsinformation und der Integrität der Zugangsberechtigungsparameter ausgegangen werden. Wenn keine Hashwertbildung stattfindet, werden die durch Entschlüsselung erhaltenen Zugangsberechtigungsparameter direkt mit den kommunizierten Zugangsberechtigungsparameter verglichen.

In einer beispielhaften Ausführungsform aller Aspekte der Erfindung ist das Schlüsselpaar ein symmetrisches Schlüsselpaar, und das erste Prüfen umfasst das Durchführen der kryptographischen Operationen über die kommunizierten Zugangsberechtigungsparameter unter Verwendung zumindest des zweiten Schlüssels des Schlüsselpaares zum Erhalt von lokal erzeugter erster Prüfinformation und das Vergleichen der kommunizierten ersten Prüfinformation mit der lokal erzeugten ersten Prüfinformation. Das symmetrische Schlüsselpaar umfasst dann zweimal den gleichen Schlüssel, beispielsweise einen AES-Schlüssel, z.B. einen AES-128 Schlüssel. Die erste Prüfinformation kann wie im Falle eines asymmetrischen Schlüsselpaars durch Verschlüsselung der Zugangsberechtigungsparameter oder eines Hashwerts davon unter Verwendung des ersten Schlüssels erzeugt werden (insbesondere in der Zugangsberechtigungserzeugungsvorrichtung). Die Prüfung erfolgt dann durch Entschlüsselung der kommunizierten ersten Prüfinformation unter Verwendung des zweiten (zum ersten identischen) Schlüssels und Vergleich des Resultats mit entweder den Zugangsberechtigungsparametern oder einem lokal nach dem gleichen Algorithmus erzeugten Hashwert der Zugangsberechtigungsparameter. Bei Übereinstimmung wird von der Authentizität der Zugangsberechtigungsinformation und der Integrität der Zugangsberechtigungsparameter ausgegangen. Bei der Ver/Entschlüsselung kann beispielsweise ein Blockchiffre verwendet werden, beispielsweise mit einem Electronic Code Book (ECB), einem Cipher Block Chaining (CBC), einem Cipher Feedback (CFB), einem Output Feedback oder einem Counter Betriebsmodus, wie dem Fachmann bekannt sind, um die Ver/Entschlüsselung von Informationen zu ermöglichen, die länger als der Block des Blockchiffre sind. Je nach Betriebsmodus (z.B. im CBC oder CFM Betriebsmodus) kann dabei zusätzlich zu den Schlüsseln bei der Ver/Entschlüsselung ein Intialisierungsvektor (IV) erforderlich sein. Dieser kann entweder fest vereinbart (und dann beispielsweise in der Zugangskontrollvorrichtung gespeichert sein) oder für jede Zugangsberechtigungsinformation an die Zugangskontrollvorrichtung kommuniziert werden. Anstelle der Ver/Entschlüsselung der Zugangsberechtigungsparameter oder deren Hashwerts zum Erhalt der ersten Prüfinformation kann auch ein Nachrichtenauthentisierungscode (Message Authentication Code, MAC) zur Erzeugung der ersten Prüfinformation eingesetzt werden, der über die Zugangsberechtigungsparameter gebildet wird und ebenfalls den ersten Schlüssel berücksichtigt. Beispiele für MACs sind der Message Authentication Algorithm (MAA), der Keyed-Hash Message Authentication Code (HMAC) oder der von der NIST spezifizierte Cipher-Based Message Authentication Code (CMAC). Bei einem MAC wird beispielsweise in einem kombinierten Prozess eine Art Hashwert über die Zugangsberechtigungsparameter erstellt und dabei der erste Schlüssel mit berücksichtigt. Das Ergebnis bildet die erste Prüfinformation. Zur Prüfung der ersten Prüfinformation wird an der Zugangskontrollvorrichtung über die kommunizierten Zugangsberechtigungsparameter unter Verwendung des zweiten (zum ersten identischen) Schlüssels der MAC nach der identischen Vorschrift gebildet und das Ergebnis, die lokal erzeugte erste Prüfinformation, mit der kommunizierten ersten Prüfinformation verglichen. Bei Übereinstimmung sind die Authentizität der Zugangsberechtigungsinformation und die Integrität der Zugangsberechtigungsparameter erwiesen.

In einer ersten Alternative aller Aspekte der Erfindung stellt die Zugangskontrollvorrichtung eine Zugangskontrollvorrichtung aus einer Vielzahl von Zugangskontrollvorrichtungen dar, wobei in der Zugangskontrollvorrichtung ein zweiter Schlüssel eines symmetrischen oder asymmetrischen Individualschlüsselpaars gespeichert ist, der in keiner der anderen Zugangskontrollvorrichtungen der Vielzahl von Zugangskontrollvorrichtungen gespeichert ist, und wobei der beim ersten Prüfen eingesetzte zweite Schlüssel des Schlüsselpaars der zweite Schlüssel des Individualschlüsselpaars ist. Dementsprechend wird also auch bei der Erzeugung der ersten Prüfinformation (insbesondere an der Zugangsberechtigungserzeugungsvorrichtung) dann der erste Schlüssel des Individualschlüsselpaars eingesetzt. Die für eine bestimmte Zugangskontrollvorrichtung erzeugte Zugangsberechtigungsinformation ist damit eindeutig und nur für eine Zugangskontrollvorrichtung, aber für keine andere der Zugangskontrollvorrichtungen nutzbar. Bei Verlust einer Zugangsberechtigungsnachweisvorrichtung mit derartiger gespeicherter Zugangsberechtigungsinformation ist also nur Missbrauch mit einer Zugangskontrollvorrichtung, und nicht mit mehreren Zugangskontrollvorrichtungen möglich.

In einer zweiten Alternative aller Aspekte der Erfindung stellt die Zugangskontrollvorrichtung eine Zugangskontrollvorrichtung aus einer Vielzahl von Zugangskontrollvorrichtungen dar, wobei in der Zugangskontrollvorrichtung ein zweiter Schlüssel eines symmetrischen oder asymmetrischen Individualschlüsselpaars gespeichert ist, der in keiner der anderen Zugangskontrollvorrichtungen der Vielzahl von Zugangskontrollvorrichtungen gespeichert ist, wobei in der Zugangskontrollvorrichtung zusätzlich ein von dem zweiten Schlüssel des Individualschlüsselpaars verschiedener zweiter Schlüssel eines symmetrischen oder asymmetrischen Gruppenschlüsselpaars gespeichert ist, der in allen Zugangskontrollvorrichtungen einer die Zugangskontrollvorrichtung umfassenden Gruppe von Zugangskontrollvorrichtungen der Vielzahl von Zugangskontrollvorrichtungen gespeichert ist, und wobei der beim ersten Prüfen eingesetzte zweite Schlüssel des Schlüsselpaars entweder der zweite Schlüssel des Individualschlüsselpaars oder der zweite Schlüssel des Gruppenschlüsselpaars ist. Dementsprechend wird also auch bei der Erzeugung der ersten Prüfinformation (insbesondere an der Zugangsberechtigungserzeugungsvorrichtung) dann der erste Schlüssel des Individualschlüsselpaars oder der erste Schlüssel des Gruppenschlüsselpaars eingesetzt. Die für eine bestimmte Zugangskontrollvorrichtung mit dem ersten Schlüssel des Individualschlüsselpaars erzeugte Zugangsberechtigungsinformation ist dabei eindeutig und nur für eine Zugangskontrollvorrichtung, aber für keine andere der Zugangskontrollvorrichtungen nutzbar. Bei Verlust einer Zugangsberechtigungsnachweisvorrichtung mit derartiger gespeicherter Zugangsberechtigungsinformation ist also nur Missbrauch mit einer Zugangskontrollvorrichtung, und nicht mit mehreren Zugangskontrollvorrichtungen möglich. Darüber hinaus ermöglicht allerdings das Gruppenschlüsselpaar, Zugangsberechtigungsinformation zu erzeugen, die zum Nachweis der Berechtigung an mehreren Zugangskontrollvorrichtungen verwendet werden kann. Dies ist beispielsweise vorteilhaft, wenn Servicekräfte in einem Hotel Zugang zu mehreren mit jeweiligen Zugangskontrollvorrichtungen versehenen Räumen oder Zusteller von Paketen Zugang zu mehreren mit jeweiligen Zugangskontrollvorrichtungen versehenen Paketkästen, z.B. in einem Zustellbezirk, erhalten sollen. Derartige mit einem ersten Schlüssel des Gruppenschlüsselpaars erzeugte Zugangsberechtigungsinformation kann beispielsweise auf einem Tag (z.B. einem RFID oder NFC-Tag) gespeichert sein. Da derartige Tags gfs. einen verhältnismäßig langen Gültigkeitszeitraum aufweisen können (z.B. mehrere Monate) und bei Verlust zur missbräuchlichen Zugangsverschaffung an zahlreichen Zugangskontrollvorrichtungen verwendet werden könnten, ist es vorteilhaft, dass derartige Tags oder die darauf befindliche Zugangsberechtigungsinformation mit einer eindeutigen Kennung versehen ist, die beispielsweise durch eine in der Zugangskontrollvorrichtung gespeicherte Zurückweisungsliste gesperrt werden kann, wie noch näher ausgeführt werden wird.

In der Zugangskontrollvorrichtung kann beispielsweise zusätzlich zumindest ein von dem zweiten Schlüssel des Individualschlüsselpaars und dem zweiten Schlüssel des Gruppenschlüsselpaars verschiedener zweiter Schlüssel eines symmetrischen oder asymmetrischen weiteren Gruppenschlüsselpaars gespeichert sein, der in allen Zugangskontrollvorrichtungen einer die Zugangskontrollvorrichtung umfassenden, aber im Vergleich zu der Gruppe von Zugangskontrollvorrichtungen zumindest ein oder mehrere andere Zugangskontrollvorrichtungen beinhaltenden weiteren Gruppe von Zugangskontrollvorrichtungen der Vielzahl von Zugangskontrollvorrichtungen gespeichert ist, und wobei der beim ersten Prüfen eingesetzte zweite Schlüssel des Schlüsselpaars entweder der zweite Schlüssel des Individualschlüsselpaars, der zweite Schlüssel des Gruppenschlüsselpaars oder der zweite Schlüssel des weiteren Gruppenschlüsselpaars ist. Die Zugangskontrollvorrichtung verfügt dann also beispielsweise über die zweiten Schlüssel des Individualschlüsselpaars und zweier Gruppenschlüsselpaare. Dies ist insbesondere vorteilhaft, wenn die Zugangskontrollvorrichtung logisch zwei zumindest teilweise verschiedenen Gruppen von Zugangskontrollvorrichtungen zugeordnet ist. Wenn die Zugangskontrollvorrichtung beispielsweise einem Paketkasten zugeordnet ist, kann es beispielsweise bei dynamischer Festlegung von Zustellbereichen vorkommen, dass der gleiche Paketkasten an einem Tag einem ersten Zustellbereich und an einem anderen Tag einem zweiten Zustellbereich zugeordnet ist. Zusätzlich oder alternativ kann es auftreten, dass Zustellbereiche am selben Tag überlappen, beispielsweise weil er erste Zustellbereich einem Paketzusteller und der zweite Zustellbereich einem Verbundzusteller (der Pakete und Briefe zustellt) oder Briefzusteller zugeordnet ist. Damit der Paketkasten dennoch sowohl vom Zusteller des ersten Zustellbereichs als auch vom Zusteller des zweiten Zustellbereichs geöffnet werden kann, ist es vorteilhaft, die jeweiligen zweiten Schlüssel von zwei Gruppenschlüsselpaaren auf der Zugangskontrollvorrichtung zu speichern. Die Zugangsberechtigungsinformation des Zustellers des ersten Zustellbereichs (insbesondere deren erste Prüfinformation) beruht dann auf dem ersten Schlüssel eines ersten Gruppenschlüsselpaars, und die Zugangsberechtigungsinformation des Zustellers des zweiten Zustellbereichs (insbesondere deren erste Prüfinformation) beruht dann auf dem ersten Schlüssel eines zweiten Gruppenschlüsselpaars. Diese Zugangsberechtigungsinformationen können dann beispielsweise auf jeweiligen Tags für die jeweiligen Zustellbereiche gespeichert sein (ein erster Tag für den ersten Zustellbereich und ein zweiter Tag für den zweiten Zustellbereich).

Es kann beispielsweise nicht vorgesehen sein, den zweiten Schlüssel des Individualschlüsselpaars in der Zugangskontrollvorrichtung zu ändern, zu löschen oder gegen einen anderen Schlüssel auszutauschen, es kann aber vorgesehen sein, dass der zweite Schlüssel des Gruppenschlüsselpaars geändert oder gelöscht oder gegen einen anderen Schlüssel ausgetauscht werden kann. Der zweite Schlüssel des Individualschlüsselpaars kann also insbesondere ein Fixum bilden, das während der Nutzungsdauer der Zugangskontrollvorrichtung nicht geändert wird. Insbesondere kann der zweite Schlüssel des Individualschlüsselpaars verwendet werden, um auch von der Zugangsberechtigungsinformation verschiedene, insbesondere von der Zugangsberechtigungserzeugungsvorrichtung unter Verwendung des ersten Schlüssels des Individualschlüsselpaars erzeugte Information (beispielsweise Gruppenschlüsselinformation, oder Zurückweisungsinformation) auf Authentizität und Integrität zu prüfen, wie nachfolgend noch genauer dargelegt werden wird. Die zweiten Schlüssel der Gruppenschlüsselpaare können hingegen geändert, gelöscht oder ausgetauscht werden, was beispielsweise relevant ist, wenn ein Paketkasten aufgrund des Umzugs seines Besitzers in einen anderen Zustellbereich verbracht werden muss. Wie dies erfolgt, wird nachfolgend erläutert.

Gemäß der oben beschriebenen zweiten Alternative aller Aspekte der Erfindung wird an der Zugangskontrollvorrichtung an die Zugangskontrollvorrichtung kommunizierte Gruppenschlüsselinformation, die zumindest einen mit dem ersten Schlüssel des Individualschlüsselpaars verschlüsselten zweiten Schlüssel eines neuen symmetrischen oder asymmetrischen Gruppenschlüsselpaars für die gleiche oder eine zumindest teilweise verschiedene Gruppe von Zugangskontrollvorrichtungen der Vielzahl von Zugangskontrollvorrichtungen umfasst, der kommunizierte verschlüsselte zweite Schlüssels des neuen Gruppenschlüsselpaars mit dem zweiten Schlüssels des Individualschlüsselpaars entschlüsselt, und der durch das Entschlüsseln erhaltene zweite Schlüssel des neuen Gruppenschlüsselpaars in der Zugangskontrollvorrichtung gespeichert, so dass der beim ersten Prüfen eingesetzte zweite Schlüssel des Schlüsselpaars zumindest entweder der zweite Schlüssel des Individualschlüsselpaars oder der zweite Schlüssel des neuen Gruppenschlüsselpaars ist. Die Gruppenschlüsselinformation kann insbesondere an der Zugangsberechtigungserzeugungsvorrichtung erzeugt und mittels der Zugangsberechtigungsnachweisvorrichtung an die Zugangskontrollvorrichtung kommuniziert werden, beispielsweise im Rahmen der gleichen Kommunikationssitzung, in der auch die Zugangsberechtigungsinformation an die Zugangskontrollvorrichtung kommuniziert wird, aber zeitlich vor der Zugangsberechtigungsinformation, so dass der zweite Schlüssel des neuen Gruppenschlüsselpaars bei der Prüfung der Zugangsberechtigungsinformation bereits berücksichtigt werden kann falls erforderlich. Der zweite Schlüssel des bereits vorhandenen Gruppenschlüsselpaars kann dabei entweder gelöscht oder beibehalten werden. Beispielsweise kann die Gruppenschlüsselinformation eine Liste von ein oder mehreren verschlüsselten zweiten Schlüssel von jeweiligen ein oder mehreren neuen Gruppenschlüsselpaaren enthalten, die alle bereits in der Zugangskontrollvorrichtung vorhandenen zweiten Schlüssel von jeweiligen Gruppenschlüsselpaaren ersetzt. Das Individualschlüsselpaar dient hier wiederum als Vertrauensbasis zwischen der Zugangskontrollvorrichtung und der Zugangsberechtigungserzeugungsvorrichtung, erlaubt aber keine Prüfung der Authentizität oder Integrität, da die zweiten Schlüssel der jeweiligen ein oder mehreren Gruppenschlüsselpaare nicht zusätzlich unverschlüsselt übertragen werden. Durch die Verschlüsselung wird aber sichergestellt, dass niemand außer der Zugangsberechtigungserzeugungsvorrichtung und der Zugangskontrollvorrichtung die zweiten Schlüssel der jeweiligen ein oder mehreren neuen Gruppenschlüsselpaare im Klartext lesen kann, insbesondere nicht die Zugangsberechtigungsnachweisvorrichtung. Im Fall, dass das Individualschlüsselpaar ein symmetrisches Schlüsselpaar ist, findet beispielsweise eine symmetrische AES-Verschlüsselung im CBC-Betriebsmodus statt. Ein Initialisierungsvektor für den CBC-Modus kann beispielsweise zusammen mit der Gruppenschlüsselinformation, z.B. als Bestandteil davon, an die Zugangskontrollvorrichtung kommuniziert werden, um dort in der Entschlüsselung verwendet zu werden.

Um eine Prüfung der Authentizität und Integrität der kommunizierten Gruppenschlüsselinformation zu ermöglichen, kann beispielsweise folgendes durchgeführt werden. An die Zugangskontrollvorrichtung kommunizierte zweite Prüfinformation wird erhalten und der durch das Entschlüsseln erhaltene zweite Schlüssel des neuen Gruppenschlüsselpaars in der Zugangskontrollvorrichtung wird nur unter der Voraussetzung gespeichert, dass bei einer zumindest auf der kommunizierten zweiten Prüfinformation, dem zweiten Schlüssel des Individualschlüsselpaars und der kommunizierten Gruppenschlüsselinformation beruhenden Prüfung festgestellt wird, dass die kommunizierte zweite Prüfinformation durch Durchführung von kryptographischen Operationen über die der kommunizierten Gruppenschlüsselinformation entsprechende Gruppenschlüsselinformation unter Verwendung zumindest des ersten Schlüssels des Individualschlüsselpaars erzeugt wurde. Die Berechnung der zweiten Prüfinformation und deren Prüfung können beispielsweise analog erfolgen wie bereits oben anhand der ersten Prüfinformation beschrieben wurde, wobei die kryptographischen Operationen über die Gruppenschlüsselinformation anstelle der Zugangsberechtigungsparameter durchgeführt werden. Es können also beispielsweise wiederum digitale Signaturen oder MACs als zweite Prüfinformation eingesetzt werden. Die zweite Prüfinformation wird insbesondere an der Zugangsberechtigungserzeugungsvorrichtung erzeugt, und dann von der Zugangsberechtigungsnachweisvorrichtung an die Zugangskontrollvorrichtung kommuniziert.

Die Gruppenschlüsselinformation kann zusätzlich einen Zähler (update_counter) umfassen, der mit jedem neuen Gruppenschlüsselpaar erhöht wird, wobei der durch das Entschlüsseln erhaltene zweite Schlüssel des neuen Gruppenschlüsselpaars in der Zugangskontrollvorrichtung nur unter der zusätzlichen Voraussetzung gespeichert wird, dass ein Wert eines von der Gruppenschlüsselinformation umfassten Zählers (update_counter) größer ist als ein Wert eines in der Zugangskontrollvorrichtung vorgesehenen Zählern, und wobei bei oder nach der Speicherung des zweiten Schlüssels des neuen Gruppenschlüsselpaars in der Zugangskontrollvorrichtung der Wert des Zählers in der Zugangskontrollvorrichtung auf den Wert des von der Gruppenschlüsselinformation umfassten Zählers (update_counter) aktualisiert wird. Der von der Gruppenschlüsselinformation umfasste Zähler ist dann beispielsweise eine Kopie eines Zählers, der in der Zugangsberechtigungserzeugungsvorrichtung bei jeder neuen Erzeugung von Gruppenschlüsselinformation (also z.B. jedes Mal, wenn ein oder mehrere zweite Schlüssel von jeweiligen ein oder mehreren neuen Gruppenschlüsseln auf die Zugangskontrollvorrichtung gebracht werden sollen), hochgezählt wird.

Die Gruppenschlüsselinformation kann beispielsweise zusätzlich eine Individualkennung der Zugangskontrollvorrichtung umfassen, und der durch das Entschlüsseln erhaltene zweite Schlüssel des neuen Gruppenschlüsselpaars in der Zugangskontrollvorrichtung kann beispielsweise nur unter der zusätzlichen Voraussetzung gespeichert werden, dass eine in der Zugangskontrollvorrichtung abgespeicherte Individualkennung der Zugangskontrollvorrichtung mit der in der Gruppenschlüsselinformation umfassten Individualkennung übereinstimmt. Damit ist die Gruppenschlüsselinformation eindeutig lediglich einer Zugangskontrollvorrichtung zugeordnet. Da die zweite Prüfinformation über die Gruppenschlüsselinformation gebildet wird, ist zudem die Integrität der Individualkennung in der Gruppenschlüsselinformation sichergestellt.

Die Gruppenschlüsselinformation kann beispielsweise zusätzlich eine mit dem neuen Gruppenschlüsselpaar assoziierte Gruppenkennung umfassen, die allen Zugangskontrollvorrichtungen der Gruppe von Zugangskontrollvorrichtungen gemein ist, für die das neue Gruppenschlüsselpaar bestimmt ist, und die durch das Entschlüsseln erhaltene Gruppenkennung wird beispielsweise in der Zugangskontrollvorrichtung gespeichert. Die Speicherung der durch das Entschlüsseln erhaltenen Gruppenkennung kann beispielsweise nur dann erfolgen, wenn auch die für die Speicherung des durch die Entschlüsselung erhaltenen zweiten Schlüssels des neuen Gruppenschlüsselpaars erforderlichen (oben beschriebenen) Voraussetzungen erfüllt sind. Die Gruppenkennung kann als Bezugsinformation zur Prüfung einer als Zugangsberechtigungsparameter kommunizierten Kennung derjenigen Zugangskontrollvorrichtung dienen, für die die Zugangsberechtigungsinformation bestimmt ist, und kann die Auswahl des zweiten Schlüssels des Schlüsselpaars, der bei dem ersten Prüfen verwendet wird, erleichtern, wie nachfolgend noch genauer erläutert wird.

In einer beispielhaften Ausführungsform aller Aspekte der Erfindung ist einer der kommunizierten Zugangsberechtigungsparameter eine Kennung für lediglich eine Zugangskontrollvorrichtung oder eine Gruppe von Zugangskontrollvorrichtungen, wobei festgestellt wird, dass die Kennung zum Zugang berechtigt, wenn die Kennung mit einer in der Zugangskontrollvorrichtung gespeicherten Individualkennung der Zugangskontrollvorrichtung und/oder einer Gruppenkennung für eine Gruppe von Zugangskontrollvorrichtungen, der die Zugangskontrollvorrichtung angehört, übereinstimmt. Eine in der Zugangsberechtigungsinformation enthaltene Kennung wird also zur Zuordnung der Zugangsberechtigungsinformation zu einer Zugangskontrollvorrichtung eingesetzt, entweder anhand deren Individualkennung, oder anhand deren Gruppenkennung.

In einer beispielhaften Ausführungsform aller Aspekte der Erfindung ist einer der kommunizierten Zugangsberechtigungsparameter eine Kennung für lediglich eine Zugangskontrollvorrichtung oder für eine Gruppe von Zugangskontrollvorrichtungen, wobei festgestellt wird, dass die Kennung zum Zugang berechtigt, wenn die Kennung mit einer in der Zugangskontrollvorrichtung gespeicherten Individualkennung der Zugangskontrollvorrichtung und/oder einer Gruppenkennung für eine Gruppe von Zugangskontrollvorrichtungen, der die Zugangskontrollvorrichtung angehört, übereinstimmt, wobei die erste Prüfinformation von kommunizierter Zugangsberechtigungsinformation, die eine Kennung für lediglich eine Zugangskontrollvorrichtung aufweist, durch Durchführung von kryptographischen Operationen über die Zugangsberechtigungsparameter unter Verwendung zumindest eines ersten Schlüssels des Individualschlüsselpaars erzeugt wird, und wobei die erste Prüfinformation von kommunizierter Zugangsberechtigungsinformation, die eine Kennung für eine Gruppe von Zugangskontrollvorrichtungen aufweist, durch Durchführung von kryptographischen Operationen über die Zugangsberechtigungsparameter unter Verwendung zumindest eines ersten Schlüssels des Gruppenschlüsselpaars erzeugt wird. Eine in der Zugangsberechtigungsinformation enthaltene Kennung wird also zur Zuordnung der Zugangsberechtigungsinformation zu einer Zugangskontrollvorrichtung eingesetzt, entweder anhand deren Individualkennung, oder anhand deren Gruppenkennung. Eine zusätzliche Zuordnung der Zugangsberechtigungsinformation findet über die Wahl des Gruppenschlüsselpaars statt: Wenn die Zugangsberechtigungsinformation eine Kennung für lediglich eine Zugangskontrollvorrichtung enthält, wird deren erste Prüfinformation unter Verwendung des ersten Schlüssels des Individualschlüsselpaars erzeugt (und entsprechend anhand des zweiten Schlüssels des Individualschlüsselpaars in der Zugangskontrollvorrichtung geprüft). Wenn die Zugangsberechtigungsinformation aber eine Kennung für eine Gruppe von Zugangskontrollvorrichtung enthält, wird deren erste Prüfinformation unter Verwendung des ersten Schlüssels des Gruppenschlüsselpaars erzeugt (und entsprechend anhand des zweiten Schlüssels des Gruppenschlüsselpaars in der Zugangskontrollvorrichtung geprüft).

Beispielsweise kann anhand der Kennung, insbesondere anhand eines vordefinierten Formats der Kennung, in der Zugangskontrollvorrichtung erkannt werden, ob es sich um eine Kennung für lediglich eine Zugangskontrollvorrichtung oder um eine Kennung für eine Gruppe von Zugangskontrollvorrichtungen handelt, so dass für das erste Prüfen jeweils passend in der Zugangskontrollvorrichtung entweder der zweite Schlüssel des Individualschlüsselpaars oder der zweite Schlüssel des Gruppenschlüsselpaars ausgewählt werden kann. Beispielsweise kann eine vordefinierte Belegung von ein oder mehreren vordefinierten Bitstellen der Kennung anzeigen, ob es sich um eine Kennung für lediglich eine Zugangskontrollvorrichtung (z.B.: letzte Bitstelle = "0") oder um eine Kennung für eine Gruppe von Zugangskontrollvorrichtungen (z.B.: letzte Bitstelle = "1") handelt

In einer beispielhaften Ausführungsform aller Aspekte der Erfindung ist einer der kommunizierten Zugangsberechtigungsparameter eine Kennung für die Zugangsberechtigungsinformation oder für eine Zugangsberechtigungsnachweisvorrichtung, die die Zugangsberechtigungsinformation an die Zugangskontrollvorrichtung kommuniziert, und es wird festgestellt, dass die Kennung zum Zugang berechtigt, wenn die Kennung nicht in einer in der Zugangskontrollvorrichtung gespeicherten Zurückweisungsliste enthalten ist. Dies ist insbesondere vorteilhaft, weil dadurch bei Verlust von Zugangsberechtigungsnachweisvorrichtung mit darauf gespeicherter Zugangsberechtigungsinformation eine Sperrung der betroffenen Zugangsberechtigungsinformation möglich ist. Die Zurückweisungsliste auf der Zugangskontrollvorrichtung kann beispielsweise durch andere Zugangsberechtigungsnachweisvorrichtungen auf der Zugangskontrollvorrichtung aktualisiert werden und dann auch neulich verlorene Zugangsberechtigungsnachweisvorrichtungen/Zugangsberechtigungsinformationen umfassen, wie nachfolgend noch genauer beschrieben werden wird.

In einer beispielhaften Ausführungsform aller Aspekte der Erfindung ist ferner vorgesehen, dass von an die Zugangskontrollvorrichtung kommunizierte Information erhalten wird, die zumindest einen unter Verwendung zumindest des ersten Schlüssels des Schlüsselpaars verschlüsselten vierten Schlüssel umfasst, der bei einer Authentisierung der Zugangskontrollvorrichtung gegenüber einer Zugangsberechtigungsnachweisvorrichtung, die die Zugangsberechtigungsinformation an die Zugangskontrollvorrichtung kommuniziert, oder bei der Prüfung der Authentizität und/oder Integrität von an die Zugangskontrollvorrichtung kommunizierten Informationen nutzbar ist, und dass der verschlüsselte vierte Schlüssel unter Verwendung zumindest des zweiten Schlüssels des Schlüsselpaars entschlüsselt wird, um den vierten

Schlüssel zu erhalten. Im Gegensatz zu dem zweiten Schlüssel des Schlüsselpaars bzw. dem Schlüsselpaar selbst, das ein Geheimnis zwischen der Zugangsberechtigungserzeugungsvorrichtung und der Zugangskontrollvorrichtung darstellt, ist der vierte Schlüssel der Zugangsberechtigungsnachweisvorrichtung zugeordnet.

Der vierte Schlüssel kann beispielsweise mit einem dritten Schlüssel ein symmetrisches oder asymmetrisches Schlüsselpaar bilden. Der vierte Schlüssel wird der Zugangsberechtigungsnachweisvorrichtung von der Zugangsberechtigungserzeugungsvorrichtung beispielsweise in verschlüsselter Form (unter Verwendung des ersten Schlüssels der Schlüsselpaars) wie oben beschrieben zur Kommunizierung an die Zugangskontrollvorrichtung zur Verfügung gestellt, und zusätzlich kann beispielsweise der dritte Schlüssel der Zugangsberechtigungsnachweisvorrichtung in unverschlüsselter Form zur Verfügung gestellt werden, beispielsweise damit die Zugangsberechtigungsnachweisvorrichtung damit kryptographische Operationen durchführen kann, die beispielsweise im Zusammenhang mit der Authentisierung der Zugangskontrollvorrichtung gegenüber der Zugangsberechtigungsnachweisvorrichtung oder der Ermöglichung der Prüfung der Authentizität und/oder Integrität von an die Zugangskontrollvorrichtung kommunizierten Informationen durch die Zugangskontrollvorrichtung stehen. Die Zugangskontrollvorrichtung kann dann beispielsweise anhand des entschlüsselten vierten Schlüssels, des zweiten Schlüssels des Schlüsselpaars und der kommunizierten Zugangsberechtigungsinformation (mit der darin enthaltenen ersten Prüfinformation) feststellen, dass die Zugangsberechtigungsinformation für die Zugangskontrollvorrichtung bestimmt ist (anhand der ersten Prüfinformation und des zweiten Schlüssels des Schlüsselpaars wie oben ausführlich beschrieben) und von einer (durch die Zugangsberechtigungserzeugungsvorrichtung) autorisierten Zugangsberechtigungsnachweisvorrichtung kommuniziert wurde (geprüft durch Authentisierung gegenüber der Zugangsberechtigungsnachweisvorrichtung mittels H oder durch Prüfung der Authentizität und/oder Integrität von an die Zugangskontrollvorrichtung von der Zugangsberechtigungsnachweisvorrichtung kommunizierter Information mittels H). Die Information mit dem verschlüsselten vierten Schlüssel kann der Zugangskontrollvorrichtung von der Zugangsberechtigungsnachweisvorrichtung beispielsweise in der gleichen Sitzung kommuniziert werden, in der auch die Zugangsberechtigungsinformation von der Zugangsberechtigungsnachweisvorrichtung an die Zugangskontrollvorrichtung kommuniziert wird.

In einer beispielhaften Ausführungsform aller Aspekte der Erfindung ist ferner vorgesehen, dass an die Zugangskontrollvorrichtung kommunizierte Information erhalten wird, die zumindest eine unter Verwendung zumindest des ersten Schlüssels des Schlüsselpaars verschlüsselte Kombination eines vierten Schlüssels und einer Kennung für die Zugangsberechtigungsinformation oder für eine Zugangsberechtigungsnachweisvorrichtung, die die Zugangsberechtigungsinformation an die Zugangskontrollvorrichtung kommuniziert wird, umfasst, wobei der vierte Schlüssel bei einer Authentisierung der Zugangskontrollvorrichtung gegenüber einer Zugangsberechtigungsnachweisvorrichtung, die die Zugangsberechtigungsinformation an die Zugangskontrollvorrichtung kommuniziert, oder bei der Prüfung der Authentizität und/oder Integrität von an die Zugangskontrollvorrichtung kommunizierten Informationen nutzbar ist, und dass die verschlüsselte Kombination unter Verwendung zumindest des zweiten Schlüssels des Schlüsselpaars entschlüsselt wird, um den vierten Schlüssel und die Kennung zu erhalten, wobei die Kennung zusätzlich einen der kommunizierten Zugangsberechtigungsparameter darstellt, und wobei festgestellt wird, dass die in der kommunizierten Zugangsberechtigungsinformation enthaltene Kennung zum Zugang berechtigt, wenn die in der kommunizierten Zugangsberechtigungsinformation enthaltene Kennung mit der durch das Entschlüsseln der verschlüsselten Information erhaltenen Kennung übereinstimmt. Die Erläuterungen zu der vorigen Ausführungsform gelten für die vorliegende Ausführungsform entsprechend. Im Gegensatz zur vorigen Ausführungsform wird allerdings in der vorliegenden Ausführungsform zusätzlich der vierte Schlüssel durch die Verschlüsselung zusammen mit der Kennung an die Kennung, und damit auch an die durch die Kennung identifizierte Zugangsberechtigungsinformation oder Zugangsberechtigungsnachweisvorrichtung, gebunden. Vorteilhaft ist hier zunächst, dass eine Möglichkeit bereitgestellt wird, der Zugangskontrollvorrichtung Bezugsinformation für die Prüfung der in der Zugangsberechtigungsinformation als Zugangsberechtigungsparameter enthaltenen Kennung der Zugangsberechtigungsinformation oder Zugangsberechtigungsnachweisvorrichtung zur Verfügung zu stellen, die (im Gegensatz zu anderen Bezugsinformationen wie beispielsweise der Kennung der Zugangskontrollvorrichtung oder der zeitlichen Information) nicht in der Zugangskontrollvorrichtung vorhanden ist. Darüber hinaus kann die Zugangskontrollvorrichtung dann aber anhand des entschlüsselten vierten Schlüssels, der entschlüsselten Kennung, des zweiten Schlüssels des Schlüsselpaars und der kommunizierten Zugangsberechtigungsinformation (mit der darin als Zugangsberechtigungsparameter enthaltenen Kennung und der ersten Prüfinformation) feststellen, dass die Zugangsberechtigungsinformation für die Zugangskontrollvorrichtung bestimmt ist (anhand der ersten Prüfinformation und des zweiten Schlüssels des Schlüsselpaars wie oben ausführlich beschrieben), von einer (durch die Zugangsberechtigungserzeugungsvorrichtung) autorisierten Zugangsberechtigungsnachweisvorrichtung kommuniziert wurde (geprüft durch Authentisierung gegenüber der Zugangsberechtigungsnachweisvorrichtung mittels H oder durch Prüfung der Authentizität und/oder Integrität von an die Zugangskontrollvorrichtung von der Zugangsberechtigungsnachweisvorrichtung kommunizierter Information mittels H) und dass die Zugangsberechtigungsnachweisvorrichtung von der Zugangsberechtigungserzeugungsvorrichtung konkret für diese Zugangsberechtigungsinformation autorisiert wurde. Die Information mit der verschlüsselten Kombination des vierten Schlüssels und der Kennung kann der Zugangskontrollvorrichtung von der Zugangsberechtigungsnachweisvorrichtung beispielsweise in der gleichen Sitzung kommuniziert werden, in der auch die Zugangsberechtigungsinformation von der Zugangsberechtigungsnachweisvorrichtung an die Zugangskontrollvorrichtung kommuniziert wird.

In einer beispielhaften Ausführungsform aller Aspekte der Erfindung ist ferner vorgesehen, dass an die Zugangskontrollvorrichtung kommunizierte Information erhalten wird, die zumindest eine unter Verwendung zumindest des ersten Schlüssels des Schlüsselpaars verschlüsselte Kombination eines vierten Schlüssels und einer Kennung für die Zugangsberechtigungsinformation oder für eine Zugangsberechtigungsnachweisvorrichtung, die die Zugangsberechtigungsinformation an die Zugangskontrollvorrichtung kommuniziert, umfasst, wobei der vierte Schlüssel bei einer Authentisierung der Zugangskontrollvorrichtung gegenüber einer Zugangsberechtigungsnachweisvorrichtung, die die Zugangsberechtigungsinformation an die Zugangskontrollvorrichtung kommuniziert, oder bei der Prüfung der Authentizität und/oder Integrität von an die Zugangskontrollvorrichtung kommunizierten Informationen nutzbar ist, dass die verschlüsselte Kombination unter Verwendung zumindest des zweiten Schlüssels des Schlüsselpaars entschlüsselt wird, um den vierten Schlüssel und die Kennung zu erhalten, wobei die Kennung zusätzlich einen der kommunizierten Zugangsberechtigungsparameter darstellt, und wobei festgestellt wird, dass die in der kommunizierten Zugangsberechtigungsinformation enthaltene Kennung zum Zugang berechtigt, wenn die in der kommunizierten Zugangsberechtigungsinformation enthaltene Kennung mit der durch das Entschlüsseln der verschlüsselten Information erhaltenen Kennung übereinstimmt und die Kennung nicht in einer in der Zugangskontrollvorrichtung gespeicherten Zurückweisungsliste enthalten ist. Die Erläuterungen zu den beiden vorigen Ausführungsformen gelten für die vorliegende Ausführungsform entsprechend. In der vorliegenden Ausführungsform erfüllt die in der verschlüsselten Kombination bzw. in der Zugangsberechtigungsinformation enthaltene Kennung der Zugangsberechtigungsinformation oder Zugangsberechtigungsnachweisvorrichtung allerdings eine Doppelfunktion: zum einen dient sie der Sicherstellung, dass die kommunizierte Zugangsberechtigungsinformation von einer durch die Zugangsberechtigungserzeugungsvorrichtung autorisierten Zugangsberechtigungsnachweisvorrichtung stammt (festgestellt durch Vergleich der in der verschlüsselten Kombination enthaltenen Kennung mit der in der Zugangsberechtigungsinformation enthaltenen Kennung), und zum anderen wird sie zum Abgleich mit einer in der Zugangskontrollvorrichtung gespeicherten Zurückweisungsliste, die damit Bezugsinformation für die Prüfung der durch die Kennung repräsentierten Zugangsberechtigungsparameters darstellt, verwendet.

Beispielsweise kann die an die Zugangskontrollvorrichtung kommunizierte Zugangsberechtigungsinformation in identischer Form auf zumindest zwei Zugangsberechtigungsnachweisvorrichtungen gespeichert sein, wobei diese auf den zumindest zwei Zugangsberechtigungsnachweisvorrichtungen gespeicherten identischen Zugangsberechtigungsinformationen jeweils die gleiche Kennung für die Zugangsberechtigungsinformation aufweisen und diese Zugangsberechtigungsinformationen jeweils mit dem gleichen vierten Schlüssel assoziiert sind (also beispielsweise die jeweilige Kennung für die Zugangsberechtigungsinformationen jeweils als Kombination mit dem gleichen vierten Schlüssel unter Verwendung des ersten Schlüssels des Schlüsselpaars verschlüsselt ist, beispielsweise um die jeweilige Kennung an den vierten Schlüssel zu binden). Beispielsweise können auch mehrere oder alle der auf der Zugangsberechtigungsnachweisvorrichtung, die die Zugangsberechtigungsinformation an die Zugangskontrollvorrichtung kommuniziert, enthaltenen Zugangsberechtigungsinformationen mit diesem vierten Schlüssel assoziiert sein, wobei sich die Kennungen dieser Zugangsberechtigungsinformationen, die insbesondere für unterschiedliche Zugangskontrollvorrichtungen bestimmt sind, unterscheiden. Beispielsweise können auch sämtliche auf mehreren Zugangsberechtigungsnachweisvorrichtungen enthaltene Zugangsberechtigungsinformationen mit diesem vierten Schlüssel assoziiert sein. Es gibt dann beispielsweise (zumindest zu einem Zeitpunkt) nur einen einzigen vierten Schlüssel für die Zugangsberechtigungsnachweisvorrichtungen und deren Zugangsberechtigungsinformationen. Die Kennung der Zugangsberechtigungsinformation ist dann beispielsweise jeweils nur spezifisch für die Zugangskontrollvorrichtung, für die die Zugangsberechtigungsinformation bestimmt ist, aber nicht spezifisch für die Zugangsberechtigungsnachweisvorrichtung, auf der die Zugangsberechtigungsinformation gespeichert ist.

Die Verwendung eines gleichen vierten Schlüssels für mehrere unterschiedliche Zugangsberechtigungsinformationen auf mehreren Zugangsberechtigungsnachweisvorrichtungen und die Verwendung von lediglich für die Zugangskontrollvorrichtungen spezifischen, aber nicht für die Zugangsberechtigungsnachweisvorrichtung spezifischen Kennungen kann insbesondere bei großen Anzahlen von Zugangsberechtigungsnachweisvorrichtungen und Zugangskontrollvorrichtungen gegenüber von pro Zugangsberechtigungsnachweisvorrichtung individuell gewählten vierten Schlüsseln und für jede Paarung von Zugangskontrollvorrichtung und Zugangsberechtigungsnachweisvorrichtung individuellen Kennungen der Zugangsberechtigungsinformationen eine erhebliche Reduzierung des mit der Erzeugung und Zuordnung des vierten Schlüssels und der Zugangsberechtigungsinformationen verbundenen Aufwands erlauben, da lediglich für jede Zugangskontrollvorrichtung eine Zugangsberechtigungsinformation erzeugt werden muss und die Anzahl von Kombination des vierten Schlüssels mit der Kennung der Zugangsberechtigungsinformation, die mit dem ersten Schlüssel des Schlüsselpaars für eine jeweilige Zugangskontrollvorrichtung verschlüsselt werden muss, ebenfalls lediglich der Anzahl der Zugangskontrollvorrichtungen entspricht. Diese Vereinfachung birgt aber den Nachteil, dass jede Zugangsberechtigungsnachweisvorrichtung nun Zugang zu sämtlichen Zugangskontrollvorrichtung erlangen kann, deren Zugangsberechtigungsinformation sie enthält. Die Zugangsberechtigungsinformation ist damit nur noch an eine jeweilige Zugangskontrollvorrichtung gebunden, aber nicht an eine bestimmte Zugangsberechtigungsnachweisvorrichtung. Wenn also beispielsweise eine Gruppe von M Zugangsberechtigungsnachweisvorrichtungen (z.B. Zustellergeräten) jeweils mit Zugangsberechtigungsinformation für N verschiedene Zugangskontrollvorrichtungen (z.B. Paketkästen) ausgestattet wird (wobei die Zugangsberechtigungsinformation für eine bestimmte Zugangskontrollvorrichtung auf jeder der M Zugangsberechtigungsnachweisvorrichtungen gleich ist und sich nur jeweils die Zugangsberechtigungsinformationen für unterschiedliche Zugangskontrollvorrichtungen unterscheiden), damit jede dieser Zugangsberechtigungsnachweisvorrichtungen Zugang zu jeder der N Zugangskontrollvorrichtungen bewirken kann, kann bei Verlust einer Zugangsberechtigungsnachweisvorrichtung eine Sperrung der auf dieser Zugangsberechtigungsnachweisvorrichtung gespeicherten N Zugangsberechtigungsinformationen nur dadurch erfolgen, dass die Kennungen für diese N Zugangsberechtigungsinformationen in jeweiligen Zurückweisungslisten auf allen N Zugangskontrollvorrichtungen eingetragen werden. Dann kann aber auch keine andere der M-1 Zugangsberechtigungsnachweisvorrichtungen mehr Zugang zu den N Zugangskontrollvorrichtungen verschaffen. Dieser durch eine vereinfachte Verwaltungsmöglichkeit bedingte Nachteil kann durch eine Reihe von Maßnahmen behoben werden, wie nachfolgend dargestellt wird.

Beispielsweise kann vorgesehen sein, dass die an die Zugangskontrollvorrichtung kommunizierte Zugangsberechtigungsinformation eine beschränkte zeitliche Gültigkeit aufweist (die beispielsweise 1 Monat, 2 Wochen, 1 Woche, 3 Tage oder 1 Tag beträgt) und/oder lediglich eine beschränkte zulässige Anzahl von Zugangsvorgängen innerhalb ihres Gültigkeitszeitraums aufweist (beispielsweise weniger als 5, 4 oder 3 Zugangsvorgänge) und/oder von der Zugangsberechtigungsnachweisvorrichtung nur an die Zugangskontrollvorrichtung kommuniziert werden kann oder wird, wenn an der Zugangsberechtigungsnachweisvorrichtung festgestellt wird, dass eine Notwendigkeit des Zugangs zu der Zugangskontrollvorrichtung besteht (beispielsweise weil ein Paket oder eine Sendung in einen von der Zugangskontrollvorrichtung kontrollierten Paketkasten eingelegt oder aus diesem abgeholt werden soll). Die Beschränkung der zeitlichen Gültigkeit und/oder der Anzahl der zulässigen Anzahl von Zugangsvorgängen reduziert die Missbrauchsmöglichkeiten in zeitlicher Hinsicht und hinsichtlich der Anzahl von möglichen Missbrauchshandlungen pro Zugangskontrollvorrichtung. Die Berücksichtigung der Notwendigkeit des Zugriffs beschränkt die Missbrauchsmöglichkeiten auf die Zugangskontrollvorrichtungen, bei denen Zugangsvorgänge tatsächlich nötig sind, was üblicherweise nur ein geringer Teil der Zugangskontrollvorrichtungen ist, für die ein Zugangsberechtigungsnachweisvorrichtung Zugangsberechtigungsinformationen gespeichert hat. Die Notwendigkeit des Zugangs kann beispielsweise anhand von auf der Zugangsberechtigungsnachweisvorrichtung, z.B. einem Zustellergerät, gespeicherten Sendungsdaten ermittelt werden. Beispielsweise kann der Zusteller eine Identifikation der Sendung von einem Paket optisch abscannen, über Funk erfassen oder ablesen und in das Zustellergerät eingeben. Das Zustellergerät kann dann beispielsweise die zu der Identifikation gehörenden Sendungsdaten im Zustellergerät ermitteln und anhand eines Abgleichs der Adressdaten (z.B. Postleitzahl, Straße und Hausnr.) der Sendung und der ebenfalls im Zustellergerät gespeicherten Adressaten der Paketkästen und/oder der Adressen der Nutzer von Paketkästen denjenigen Paketkasten auswählen, für den die Sendung bestimmt ist. Beispielsweise kann der Zusteller dann lediglich an diesen Paketkasten die Zugangsberechtigungsinformation kommunizieren. Durch diese Maßnahmen kann beispielsweise auf die Sperrung von Kennungen für Zugangsberechtigungsinformationen, die auf abhanden gekommenen Zugangsberechtigungsnachweisvorrichtung gespeichert waren, unter Umständen gänzlich verzichtet werden und/oder damit die Länge der in den Zugangskontrollvorrichtung geführten Zurückweisungslisten deutlich reduziert werden (beispielsweise sind dort dann nur Kennungen von Zugangsberechtigungsinformationen, die auf verlorenen Tags gespeichert waren, enthalten, aber nicht diejenigen von auf abhanden gekommenen Zustellergeräten gespeicherten Zugangsberechtigungsinformationen).

Beispielsweise kann die an die Zugangskontrollvorrichtung kommunizierte Zugangsberechtigungsinformation in identischer Form auf zumindest zwei Zugangsberechtigungsnachweisvorrichtungen gespeichert sein, wobei diese zumindest zwei Zugangsberechtigungsnachweisvorrichtungen jeweils den gleichen dritten Schlüssel aufweisen. Es wird also auf den zumindest zwei Zugangsberechtigungsnachweisvorrichtungen (oder beispielsweise auf allen Zugangsberechtigungsnachweisvorrichtungen einer Gruppe von Zugangsberechtigungsnachweisvorrichtungen) der gleiche dritte Schlüssel verwendet, der mit dem vierten Schlüssel ein symmetrisches oder asymmetrisches Schlüsselpaar bildet. Es findet also beispielsweise die Authentisierung dieser Zugangsberechtigungsnachweisvorrichtungen gegenüber der Zugangskontrollvorrichtung mit dem gleichen dritten Schlüssel statt. Die durch die Verwendung eines identischen dritten Schlüssels für mehrere Zugangsberechtigungsnachweisvorrichtungen (oder beispielsweise allen einer Gruppe oder des Systems), die eine erhebliche Reduzierung des mit der Erzeugung und Verteilung des dritten Schlüssels auf die Zugangsberechtigungsnachweisvorrichtungen (und auch der Erzeugung und Verwendung des vierten Schlüssels) ermöglicht, verbundene Nachteil einer potentiell geringfügig reduzierten Sicherheit kann allerdings durch eine oder mehrere (z.B. alle) der im vorigen Abschnitt geschilderten Maßnahmen abgemildert bzw. beseitigt werden.

Der vierte Schlüssel kann zusätzlich oder alternativ auch für die nachfolgend beschriebenen Zwecke eingesetzt werden.

Beispielsweise bildet der vierte Schlüssel mit einem dritten Schlüssel ein symmetrisches oder asymmetrisches Schlüsselpaar, die kommunizierte Zugangsberechtigungsinformation umfasst ferner dritte Prüfinformation, und es wird an der Zugangskontrollvorrichtung ferner ein zweites Prüfen, unter Verwendung zumindest einer von der Zugangskontrollvorrichtung erzeugten Challenge, der kommunizierten Zugangsberechtigungsparameter, der kommunizierten ersten Prüfinformation, der kommunizierten dritten Prüfinformation und des vierten Schlüssels vorgenommen, ob die kommunizierte dritte Prüfinformation durch Durchführung von kryptographischen Operationen über Informationen, die der erzeugten Challenge, den kommunizierten Zugangsberechtigungsparametern und der kommunizierten ersten Prüfinformation entsprechen, unter Verwendung zumindest des dritten Schlüssels erzeugt wurde, wobei eine weitere notwendige Bedingung zur Gewährung des Zugangs ist, dass das zweite Prüfen ein positives Ergebnis liefert. Bei der Challenge kann es sich beispielsweise um eine Zufallsinformation (z.B. eine binäre Zufallszahlenfolge) handeln, die von der Zugangskontrollvorrichtung an die Zugangsberechtigungsnachweisvorrichtung übermittelt wird. Die Zugangsberechtigungsnachweisvorrichtung kann basierend auf der Challenge, der Zugangsberechtigungsparameter, der ersten Prüfinformation und des dritten Schlüssels durch Durchführung von kryptographischen Operationen die dritte Prüfinformation erzeugen, beispielsweise nach einem der Verfahren, die oben für die Erzeugung der ersten Prüfinformation bereits beschrieben wurden. Wenn der vierte Schlüssel Teil eines symmetrischen Schlüsselpaars ist, können die kryptographischen Operationen beispielsweise einen MAC als dritte Prüfinformation erzeugen, oder es kann eine digitale Signatur erzeugt werden, falls der vierte Schlüssel Teil eines asymmetrischen Schlüsselpaars ist. Durch das zweite Prüfen kann von der Zugangskontrollvorrichtung insbesondere die Authentizität und Integrität der von der Zugangsberechtigungsnachweisvorrichtung kommunizierten Zugangsberechtigungsparameter und ersten Prüfinformation geprüft werden, dass diese also von der Zugangsberechtigungsnachweisvorrichtung kommuniziert wurden und nicht verändert wurden. Der Einsatz der Challenge schützt dabei vor Replay-Attacken. Diese Verwendung des vierten Schlüssels kann beispielsweise dann zum Einsatz kommen, wenn die Zugangsberechtigungsinformation von einem Nutzergerät (z.B. einem Mobiltelefon) oder einer Zustellergerät (z.B. einem Handscanner) an die Zugangskontrollvorrichtung übermittelt wird, beispielsweise durch Bluetooth-Übertragung.

Alternativ kann der vierte Schlüssel bei einem Authentisieren gegenüber einer Zugangsberechtigungsnachweisvorrichtung, die die Zugangsberechtigungsinformation beinhaltet, unter Verwendung zumindest des vierten Schlüssels verwendet werden, wobei die Zugangsberechtigungsinformation nur bei erfolgreicher Authentisierung von der Zugangsberechtigungsnachweisvorrichtung an die Zugangskontrollvorrichtung kommuniziert wird. Wenn es sich bei dem vierten Schlüssel (und folglich dem dritten Schlüssel auch) beispielsweise um einen symmetrischen Schlüssel handelt, können die Zugangskontrollvorrichtung und die Zugangsberechtigungsnachweisvorrichtung beispielsweise gegenseitig nachweisen, dass sie jeweils über den symmetrischen Schlüssel verfügen, beispielsweise durch Verschlüsselung von von der Gegenseite erhaltenen Challenges und lokale Gegenprüfung. Wenn die Zugangsberechtigungsnachweisvorrichtung beispielsweise ein Tag ist, beispielsweise ein NFC-Tag aus der Mifare-Tag von NXP, kann im Tag der symmetrische Schlüssel gespeichert sein und der Zugangskontrollvorrichtung Zugriff (insbesondere auf die Zugangsberechtigungsparameter und die erste Prüfinformation, die beispielsweise in einer "application" des Tags gespeichert sind) nur gestatt werden, wenn sowohl der Tag als auch die auf den Tag zugreifende Zugangskontrollvorrichtung gegenseitig nachgewiesen haben, dass sie über den symmetrischen Schlüssel verfügen (beispielsweise über eine sog. dreischrittige gegenseitige Authentifizierung (threepass mutual authentication)).

In einer beispielhaften Ausführungsform aller Aspekte der Erfindung ist ferner vorgesehen, dass an die Zugangskontrollvorrichtung kommunizierte Zurückweisungsinformation (L), die zumindest eine neue Zurückweisungsliste mit Kennungen für zurückzuweisende Zugangsberechtigungsinformationen oder für Zugangsberechtigungsnachweisvorrichtungen, von denen Zugangsberechtigungsinformation an der Zugangskontrollvorrichtung zurückzuweisen ist, umfasst, und von vierter Prüfinformation an der Zugangskontrollvorrichtung erhalten wird, und dass die kommunizierte neuen Zurückweisungsliste nur unter der Voraussetzung auf der Zugangskontrollvorrichtung gespeichert wird, dass bei einer zumindest auf der kommunizierten vierten Prüfinformation, dem zweiten Schlüssel des Schlüsselpaars und der kommunizierten Zurückweisungsinformation beruhenden Prüfung festgestellt wird, dass die kommunizierte vierte Prüfinformation durch Durchführung von kryptographischen Operationen über die der kommunizierten Zurückweisungsinformation entsprechende Zurückweisungsinformation unter Verwendung zumindest des ersten Schlüssels des Schlüsselpaars erzeugt wurde. Anhand der vierten Prüfinformation kann an der Zugangskontrollvorrichtung die Authentizität und Integrität der erhaltenen Zurückweisungsinformation geprüft werden, beispielsweise anhand eines der Verfahren, wie sie oben für die erste Prüfinformation bereits erläutert wurden. Die Zurückweisungsinformation und/oder die vierte Prüfinformation wird beispielsweise von der Zugangsberechtigungserzeugungsvorrichtung erzeugt und von der Zugangsberechtigungsnachweisvorrichtung an die Zugangskontrollvorrichtung kommuniziert. Ein neue Zurückweisungsliste kann beispielsweise an die Zugangskontrollvorrichtung kommuniziert werden, sobald bekannt geworden ist, dass zumindest eine Kennung einer Zugangsberechtigungsinformation oder Zugangsberechtigungsnachweisvorrichtung zu sperren ist, beispielsweise aufgrund des Verlusts einer Zugangsberechtigungsnachweisvorrichtung. Auf der Zugangskontrollvorrichtung kann es wie oben bereits erläutert Voraussetzung für die Gewährung von Zugang sein, dass die Kennung der Zugangsberechtigungsinformation, mit der um Zugang ersucht wird, nicht auf der Zurückweisungsliste enthalten ist.

Die Zurückweisungsinformation kann beispielsweise zusätzlich einen Zähler umfassen, der mit jeder neuen Zurückweisungsliste erhöht wird, wobei die neue Zurückweisungsliste in der Zugangskontrollvorrichtung nur unter der zusätzlichen Voraussetzung gespeichert wird, dass der Wert des von der Zurückweisungsinformation umfassten Zählers größer als ein Wert eines in der Zugangskontrollvorrichtung vorgesehenen Zählers ist, und wobei der Wert des Zählers der Zugangskontrollvorrichtung bei oder nach der Speicherung der neuen Zurückweisungsliste in der Zugangskontrollvorrichtung auf den Wert des von der Zurückweisungsinformation umfassten Zählers aktualisiert wird. Dadurch kann verhindert werden, dass versucht wird, eine alte Zurückweisungsliste (die beispielsweise aktuell zu sperrenden Kennungen nicht enthält) auf der Zugangskontrollvorrichtung installiert werden kann.

Die Zurückweisungsinformation kann beispielsweise zusätzlich eine Kennung lediglich einer Zugangskontrollvorrichtung oder einer Gruppe von Zugangskontrollvorrichtungen, auf denen die neue Zurückweisungsliste gespeichert werden soll, umfassen, wobei die neue Zurückweisungsliste in der Zugangskontrollvorrichtung nur unter der zusätzlichen Voraussetzung gespeichert wird, dass eine in der Zugangskontrollvorrichtung abgespeicherte Individualkennung der Zugangskontrollvorrichtung oder eine Gruppenkennung für eine die Zugangskontrollvorrichtung enthaltende Gruppe von Zugangskontrollvorrichtungen mit der in der Zurückweisungsinformation umfassten Kennung übereinstimmt. Durch diese Kennung wird sichergestellt, dass die Zurückweisungsliste nur auf einer bestimmten Zugangskontrollvorrichtung oder Gruppe von Zugangskontrollvorrichtungen installiert werden kann.

Die oben beschriebenen Ausführungsbeispiele und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:

Fig. 1: eine schematische Darstellung einer beispielhaften Ausführungsform eines Systems mit Komponenten gemäß der vorliegenden Erfindung,

Fig. 2: eine schematische Darstellung einer beispielshaften Ausführungsform einer Vorrichtung gemäß der vorliegenden Erfindung,

Fig. 3: eine schematische Darstellung einer weiteren beispielhaften Ausführungsform eines Systems mit Komponenten gemäß der vorliegenden Erfindung;

Fig. 4: ein Flussdiagramm einer beispielhaften Ausführungsform einer Kommunikation von Zugangsberechtigungsinformation zwischen einem Handscanner/Mobiltelefon und einem Paketkasten gemäß der vorliegenden Erfindung;

Fig.5: ein Flussdiagramm einer beispielhaften Ausführungsform einer Kommunikation von Zugangsberechtigungsinformation zwischen einem Tag und einem Paketkasten gemäß der vorliegenden Erfindung;

Fig. 6: ein Flussdiagramm einer beispielhaften Ausführungsform einer Kommunikation von Zurückweisungsinformation zwischen einem Handscanner/Mobiltelefon/Tag und einem Paketkasten gemäß der vorliegenden Erfindung;

Fig. 7: ein Flussdiagramm einer beispielhaften Ausführungsform einer Kommunikation von Gruppenschlüsselinformation zwischen einem Handscanner/Mobiltelefon/Tag und einem Paketkasten gemäß der vorliegenden Erfindung;

Fig. 8: ein Flussdiagramm einer beispielhaften Ausführungsform einer Kommunikation von Schlüsseln und Zugangsberechtigungsinformation zwischen dem Schlüsselserver und weiteren Komponenten gemäß der vorliegenden Erfindung;

Fig. 9: eine schematische Darstellung der Verteilung von Gruppenschlüsseln und Zugangsberechtigungsinformation gemäß der vorliegenden Erfindung;

Fig. 10: eine schematische Darstellung der Zuordnung von Paketkästen zu unterschiedlichen Zustellbereichen gemäß einer beispielhaften Ausführungsform der Erfindung; und

Fig. 11: ein Flussdiagramm der möglichen Reihenfolge von Operationen in einer beispielhaften Ausführungsform eines Paketkastens gemäß der vorliegenden Erfindung.

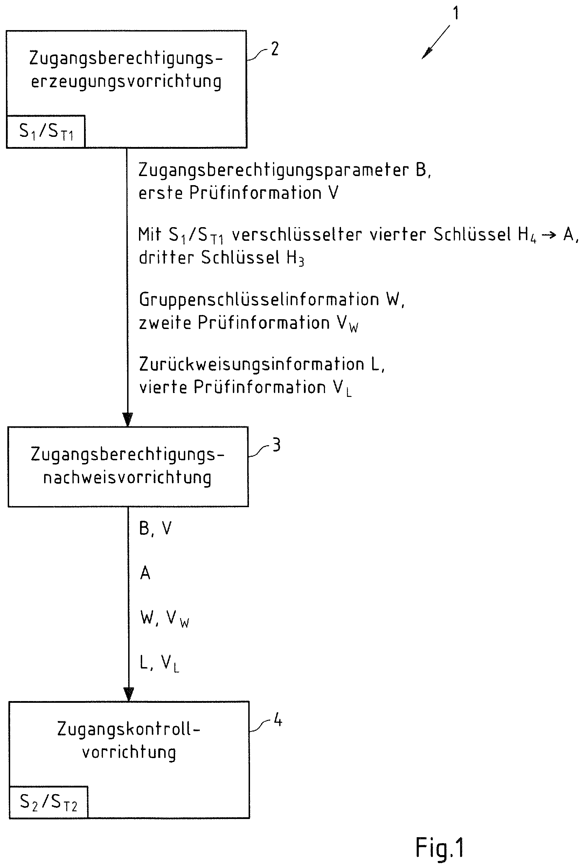

Eine Übersicht einer beispielhaften Ausführungsform eines Systems 1 mit Komponenten gemäß der vorliegenden Erfindung ist in Fig. 1 dargestellt. Das System umfasst eine Zugangsberechtigungserzeugungsvorrichtung 2, eine Zugangsberechtigungsnachweisvorrichtung 3 und eine Zugangskontrollvorrichtung 4. Insbesondere die Zugangsberechtigungsnachweisvorrichtung 3 und die Zugangskontrollvorrichtung 4 können mehrfach vorhanden sein, sind aber aus Gründen der Vereinfachung der Darstellung jeweils nur einfach vertreten. Die Komponenten 2, 3 und 4 stellen respektive beispielhafte Vorrichtungen gemäß dem ersten, dritten und zweiten Aspekt der Erfindung dar, deren Eigenschaften bereits ausführlich geschildert wurden. Fig. 1 dient daher primär der Verdeutlichung, welche Schlüssel in den einzelnen Komponenten gespeichert sind und welche Informationen zwischen den Komponenten ausgetauscht werden. Zugangsberechtigungserzeugungsvorrichtung 2 speichert insbesondere den ersten Individualschlüssel $S_1$ und optional auch einen ersten Gruppenschlüssel $S_{T1}$, die mit einem zweiten Individualschlüssel $S_2$ bzw. einem zweiten Gruppenschlüssel $S_{T2}$ in der Zugangskontrollvorrichtung 4 jeweils ein Individualschlüsselpaar ($S_1$, $S_2$) bzw. ein Gruppenschlüs-

selpaar ($S_{T1}$, $S_{T2}$) bilden. Diese Paare können jeweils ein symmetrisches oder asymmetrisches Schlüsselpaar bilden, wobei im Falle eines symmetrischen Schlüsselpaars beide Schlüssel gleich sind, also z.B. $S_1=S_2=S$ und/oder $S_{T1}=S_{T2}=S_T$ gilt und im Falle eines asymmetrischen Schlüsselpaars $S_1 \# S_2$ und/oder $S_{T1} \# S_{T2}$ gilt

Die Zugangsberechtigungserzeugungsvorrichtung 2 erzeugt und überträgt eine oder mehrere der folgenden Informationen an die Zugangsberechtigungsnachweisvorrichtung 3:

- Zugangsberechtigungsinformation B und erste Prüfinformation V,
- den mit $S_1$ od. $S_{T1}$ verschlüsselten vierten Schlüssel $H_4$, im Rahmen der Information A,
- einen dritten Schlüssel $H_3$,
- die Gruppenschlüsselinformation W und die zweite Prüfinformation Vw, und/oder
- die Zurückweisungsinformation L und die vierte Prüfinformation $V_L$,

Diese Informationen können beispielsweise zumindest teilweise (oder vollständig) innerhalb der gleichen Kommunikationssitzung zwischen der Zugangsberechtigungserzeugungsvorrichtung 2 und der Zugangsberechtigungsnachweisvorrichtung 3 übertragen werden (also beispielsweise zwischen der Einrichtung und der Auslösung einer Kommunikationsverbindung zwischen der Zugangsberechtigungserzeugungsvorrichtung 2 und der Zugangsberechtigungsnachweisvorrichtung 3), oder auch in verschiedenen Kommunikationssitzungen. Die Gruppenschlüsselinformation W kann allerdings beispielsweise weniger oft übertragen werden als die beispielsweise die Zugangsberechtigungsinformation B und die Zurückweisungsinformation L, da weniger häufig Notwendigkeit zu ihrer Änderung besteht

Die Übertragung dieser Informationen kann von der Zugangsberechtigungserzeugungsvorrichtung 2 zu der Zugangsberechtigungsnachweisvorrichtung 3 zumindest teilweise drahtlos (z.B. über Mobilfunk oder WLAN) erfolgen, insbesondere wenn es sich bei der Zugangsberechtigungsnachweisvorrichtung 3 um ein tragbares Nutzergerät (z.B. ein Mobiltelefon) od. ein tragbares Zustellergerät (z.B. einen Handscanner) handelt. Die Übertragung muss dabei nicht direkt erfolgen, sondern kann über ein oder mehrere Zwischenstationen (z.B. die nachfolgend noch diskutierten dezentralen Einheiten) erfolgen, wie nachfolgend noch genauer erörtert wird. Wenn es sich bei der Zugangsberechtigungsnachweisvorrichtung 3 um einen Tag (z.B. einen RFID- oder NFC-Tag) handelt, ist die Übertragung der Informationen logisch zu verstehen und kann beispielsweise bedeuten, dass die Informationen an einen Server eines Produktionssystems für die Tags übermittelt und dort in die Tags eingespeichert werden.

Der dritte Schlüssel $H_3$ und der vierte Schlüssel $H_4$ bilden dabei wiederum ein Schlüsselpaar ($H_3$, $H_4$), das beispielsweise symmetrisch sein kann, also $H_3=H_4=H$, oder asymmetrisch sein kann, also $H_3 \# H_4$.

Von den Informationen, die von der Zugangsberechtigungserzeugungsvorrichtung 2 an die Zugangsberechtigungsnachweisvorrichtung 3 übermittelt werden, kann grundsätzlich jede Information, bis auf den dritten Schlüssel $H_3$, von der Zugangsberechtigungsnachweisvorrichtung 3 an die Zugangskontrollvorrichtung 4 weiter kommuniziert und dann in der Zugangskontrollvorrichtung 4 zur Prüfung verwendet werden, ob diese Informationen authentisch und integer sind und ob - im Falle der Zugangsberechtigungsinformation - dem Bediener der Zugangsberechtigungsnachweisvorrichtung 3 Zugang gewährt werden darf.

Der dritte Schlüssel $H_3$ wird dabei in der Zugangsberechtigungsnachweisvorrichtung 3 gespeichert und beispielsweise im Rahmen der gegenseitigen Authentisierung zwischen Zugangsberechtigungsnachweisvorrichtung 3 und der Zugangskontrollvorrichtung 4 eingesetzt, wobei letztere das Pendant zu dem dritten Schlüssel $H_3$, nämlich den vierten Schlüssel $H_4$, in verschlüsselter Form (Information A) übermittelt bekommen hat und diesen nach Entschlüsselung zumindest zeitweise speichert.

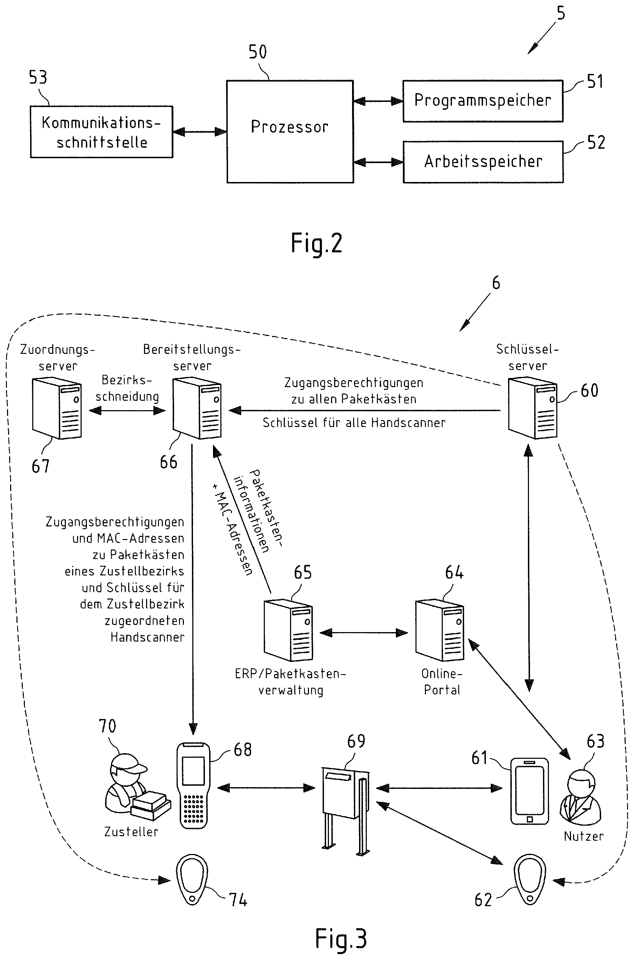

Fig. 2 zeigt eine schematische Darstellung einer beispielhaften Ausführungsform einer Vorrichtung 5 gemäß der vorliegenden Erfindung. Vorrichtung 5 kann beispielsweise die Zugangsberechtigungserzeugungsvorrichtung 2, die Zugangsberechtigungsnachweisvorrichtung 3 oder die Zugangskontrollvorrichtung 4 der Fig. 1 repräsentieren.

Vorrichtung 5 umfasst einen Prozessor 50 mit zugeordnetem Arbeitsspeicher 52 und Programmspeicher 51. Der Prozessor führt beispielsweise Programmanweisungen aus, die im Programmspeicher 51 gespeichert sind. Die Programmanweisungen führen das Verfahren gemäß dem ersten oder zweiten Aspekt der Erfindung aus. Damit enthält der Programmspeicher 51 ein Computerprogramm nach dem ersten, oder zweiten Aspekt der Erfindung und stellt ein Computerprogrammprodukt zu dessen Speicherung dar.

Der Programmspeicher 51 kann beispielsweise ein persistenter Speicher, wie beispielsweise ein Read-Only-Memory (ROM)-Speicher sein. Der Programmspeicher kann beispielsweise fest mit dem Prozessor 50 verbunden sein, kann aber alternativ auch lösbar mit dem Prozessor 50 verbunden sein, beispielsweise als Speicherkarte, Diskette oder optisches Datenträgermedium (z.B. eine CD oder DVD). In dem Programmspeicher 51, oder in einem separaten Speicher, können auch weitere Informationen abgespeichert sein. Falls Vorrichtung 5 die Zugangsberechtigungserzeugungsvorrichtung 2 ist, können zu diesen Informationen beispielsweise die Schlüssel $S_1$ und/oder $S_{T1}$ und/oder die Schlüssel $H_3$ und/oder $H_4$ zählen, ebenso wie beispielsweise Information über die Zugangskontrollvorrichtung, für die Zugangsberechtigungsinformation erzeugt werden soll (z.B. die Kennung der Zugangskontrollvorrichtung) und Informationen zu den Zugangsberechtigungsinformationen, den Gruppenschlüsselinformationen und/oder den Zurückweisungsinformationen sowie deren zugeordnete Prüfinformationen. Falls Vorrichtung 5 die Zugangsberechtigungsnachweisvorrichtung 3 ist, können zu diesen Informationen beispielsweise die von der Zugangsberechtigungserzeugungsvorrichtung 2 erhaltenen Informationen zählen (insbesondere B, V, W, Vw, L, $V_L$, A, $H_3$). Falls Vorrichtung 5 die Zugangskontrollvorrichtung 4 ist, können zu diesen Informationen die Schlüssel $S_2$ und/oder $S_{T2}$ zählen sowie Bezugsinformationen, anhand derer erhaltene Zugangsberechtigungsparameter daraufhin geprüft werden, ob sie jeweils zur Gewährung von Zugang berechtigen (z.B. eine Kennung der Zugangskontrollvorrichtung, eine Zurückweisungsliste, ein oder mehrere Zähler z.B. für Gruppenschlüsselinformation oder Zurückweisungsinformation, etc.).

Der Arbeitsspeicher 52 wird beispielsweise zur Speicherung temporärer Ergebnisse während der Abarbeitung der Programmanweisungen genutzt, es handelt sich hierbei beispiels-weise um einen flüchtigen Speicher, wie beispielsweise einen Random-Access-Memory (RAM)-Speicher.

Der Prozessor 50 ist ferner operativ mit einer Kommunikationseinheit 53 verbunden, mit der beispielsweise ein Informationsaustausch mit externen Vorrichtungen möglich ist.

Wenn die Vorrichtung 5 die Zugangsberechtigungserzeugungsvorrichtung 2 repräsentiert, kann die Kommunikationseinheit 53 beispielsweise zur Kommunikation über ein Netzwerk wie z.B. das Internet eingerichtet sein, um beispielsweise Informationen an eine oder mehrere der folgenden Einheiten übertragen zu können:

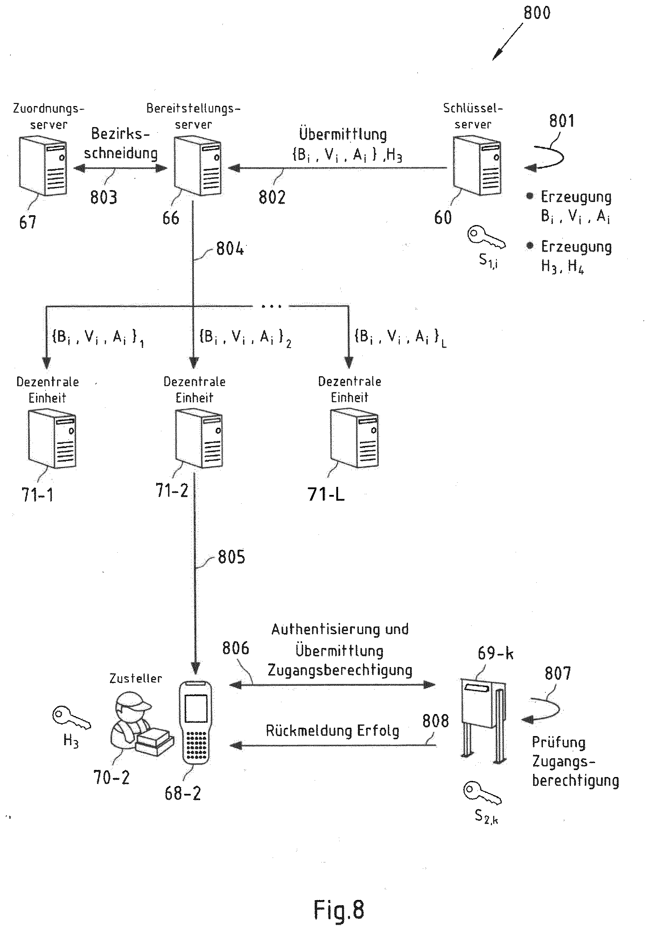

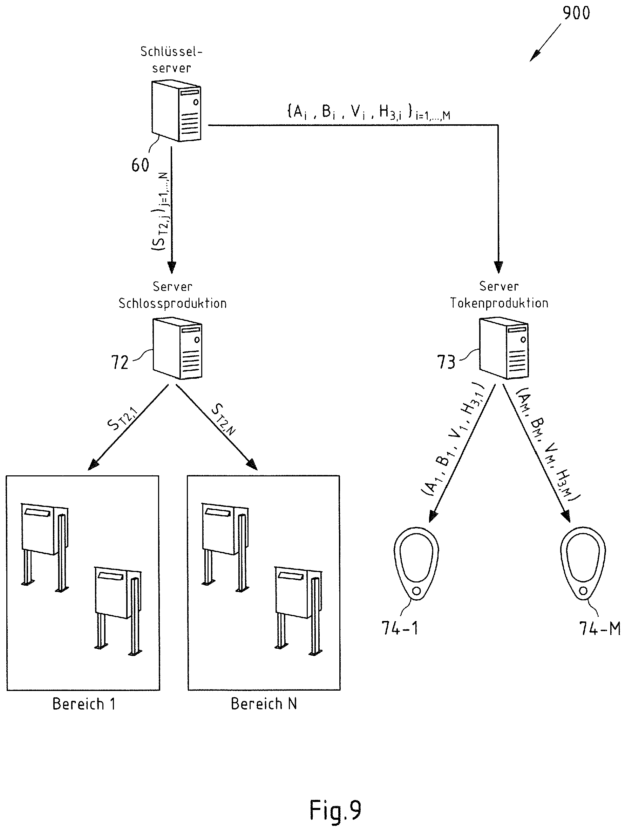

- an einen Server eines Herstellers von Zugangskontrollvorrichtungen 4 (vgl. Server 72 in Fig. 9) und/oder
- an einen Server eines Herstellers von Zugangsberechtigungsnachweisvorrichtungen 3 (vgl. Server 73 in Fig. 9), und/oder
- an einen Schnittstellenserver eines mobilen Kommunikationsnetzes, über das Informationen drahtlos an eine Zugangsberechtigungsnachweisvorrichtung 3 (z.B. ein Mobiltelefon oder einen Handscanner) übertragen werden sollen, und/oder
- an einen Verwaltungsserver (z.B. Bereitstellungsserver 66 in Fig. 3), unter dessen Kontrolle die Verteilung der Informationen an dezentrale Einheiten (siehe 71-2 in Fig. 8) zur Übertragung an Zugangsberechtigungsnachweisvorrichtungen 3 (z.B. Zustellergeräte) stattfindet, und/oder
- zumindest mittelbar an einen Computer (z.B. eine dezentrale Einheit 71-2 in Fig. 8), von dem oder unter dessen Steuerung die Informationen dann an Zugangsberechtigungsnachweisvorrichtungen 3 (z.B. Zustellergeräte) übermittelt werden sollen (beispielsweise drahtlos (z.B. über ein WLAN) od. drahtgebunden (z.B. über ein LAN)).

Wenn die Vorrichtung 5 die Zugangsberechtigungsnachweisvorrichtung 3 in Form eines Nutzergeräts oder Zustellergeräts repräsentiert, kann die Kommunikationseinheit 53 beispielsweise folgendes umfassen:

- eine Mobilfunkschnittstelle zum Empfang von Informationen von der Zugangsberechtigungserzeugungsvorrichtung 2,
- eine Schnittstelle zum drahtlosen (z.B. per WLAN) oder drahtgebundenen Empfang (z.B. über eine Dockingstation) von Informationen von einer Vorrichtung (beispielsweise einer dezentralen Einheit), an die die Zugangsberechtigungserzeugungsvorrichtung 2 diese Informationen zur Übertragung an die Zugangsberechtigungsnachweisvorrichtung 3 übertragen hat)
- eine Funkschnittstelle zur Kommunikation mit der Zugangskontrollvorrichtung 4, insbesondere eine Bluetooth-Schnittstelle und/oder eine RFID-Schnittstelle und/oder NFC-Schnittstelle.

Wenn die Vorrichtung 5 die Zugangsberechtigungsnachweisvorrichtung 3 in Form eines Tags repräsentiert, kann die Kommunikationseinheit 53 beispielsweise folgendes umfassen:

- eine Funkschnittstelle zur Kommunikation mit der Zugangskontrollvorrichtung 4, insbesondere eine Bluetooth-Schnittstelle und/oder eine RFID-Schnittstelle und/oder eine NFC-Schnittstelle.

Die Vorrichtung 5 kann auch weitere Komponenten enthalten, beispielsweise eine graphische Benutzerschnittstelle, um einen Bediener eine Interaktion mit der Vorrichtung 5 zu gestatten, insbesondere falls Vorrichtung 5 eine Zugangsberechtigungsnachweisvorrichtung 3 in Form eines Nutzergeräts oder Zustellergeräts darstellt. Falls Vorrichtung 5 ein Zustellergerät repräsentiert, kann beispielsweise eine Einheit zur insbesondere optischen Erfassung von Informationen (z.B. ein Scanner) von der Vorrichtung 5 umfasst sein, und/oder beispielsweise eine Benutzerschnittstelle zur Erfassung von handschriftlichen Eingaben wie z.B. einer Unterschrift.

Falls Vorrichtung 5 eine Zugangskontrollvorrichtung 4 repräsentiert, kann ebenfalls eine beispielsweise optische und/oder akustische Benutzerschnittstelle vorgesehen sein, um beispielsweise Informationen über den Status der Zugangskontrollvorrichtung 4 und/oder über den Erfolg eines Versuchs, mit Zugangsberechtigungsinformation Zugang an der Zugangskontrollvorrichtung 4 gewährt zu bekommen, an den Bediener ausgeben zu können. Die Vorrichtung 5 kann im Falle einer Zugangskontrollvorrichtung 4 auch Steuerungsmittel zur Steuerung einer Verriegelungseinheit (z.B. zum Entriegeln derselben) in Abhängigkeit der Entscheidung, ob Zugang gewährt werden kann, umfassen. Die Verriegelungseinheit kann beispielsweise ein insbesondere elektronisch ansteuerbares Schloss umfassen. Im Kontext der Beschreibung der Ausführungsbeispiele der Fig. 3-10 wird eine Einheit umfassend zumindest den Prozessor 50, die Speicher 51 und 52 und die Verriegelungseinheit als "Schloss" bezeichnet. Die Vorrichtung 5 kann im Falle einer Zugangskontrollvorrichtung 4 zusätzlich auch ein oder mehrere Sensoren, beispielsweise zur Detektion eines aktuellen Schließzustands der Verriegelungseinheit, umfassen. Die Vorrichtung 5 kann im Falle einer Zugangskontrollvorrichtung 4 beispielsweise eine Batterie (z.B. wiederaufladbar oder auch nicht) umfassen, insbesondere als einzige Stromversorgung. Die Vorrichtung 5 kann im Falle einer Zugangskontrollvorrichtung 4 beispielsweise keinen Anschluss an ein drahtgebundenes Netzwerk aufweisen, also insbesondere keinen Anschluss an ein LAN, und/oder kann beispielsweise keinen Anschluss an ein WLAN oder ein Mobilfunknetz (insbesondere ein zellulares Mobilfunknetz) aufweisen.

Die Vorrichtung 5 kann im Falle einer Zugangsberechtigungsnachweisvorrichtung 3 in Form eines Tags beispielsweise keine eigene Stromversorgung umfassen und ihre Energie zur Kommunikation aus dem Feld einer Leseeinheit der Zugangskontrollvorrichtung 4 beziehen. Es kann bei einem solchen Tag auch keine Benutzerschnittstelle vorhanden sein.

Die Komponenten 50-53 können beispielsweise zusammen als Modul oder Einheit ausgebildet sein, oder können zumindest teilweise als Einzelmodule ausgebildet sein, um eine leichte Austauschbarkeit bei etwaigen Defekten zu gewährleisten.

Im Folgenden wird anhand der Fig. 3-10 ein konkretisiertes Ausführungsbeispiel eines Zugangskontrollsystems 6 mit erfindungsgemäßen Komponenten vorgestellt, das in Fig. 3 dargestellt ist. Bei diesem Zugangskontrollsystem 6 ist die Zugangsberechtigungserzeugungsvorrichtung 2 als Schlüsselserver 60 ausgebildet, die Zugangskontrollvorrichtungen 4 sind als Paketkästen 69 (oder den Zugang kontrollierende Einheiten davon, insbesondere "Schlösser") ausgebildet, die Nutzern 63 (z.B. für die Nutzung der Paketkästen registrierten Nutzern) zugeordnet sind, und die Zugangsberechtigungsnachweisvorrichtungen 3 sind als Handscanner 68 oder Tags 74 von Zustellern 70 oder als Mobiltelefone 61 oder Tags 62 von Nutzern 63 ausgebildet, die insgesamt als "Token" bezeichnet werden. Die Nutzer 63 sind hier beispielsweise die Besitzer von Paketkästen oder andere Personen (z.B. des gleichen Haushalts oder der Nachbarschaft), die sich registriert haben, um in einem bestimmten Paketkasten 69 Sendungen zu empfangen oder aus diesem abholen lassen zu können. Die Nutzer 63 werden auch als Paketkastennutzer bezeichnet. Die Zusteller 70 können beispielsweise Paketzusteller, Verbundzusteller (die sowohl Briefe als auch Pakete zustellen) oder Briefzusteller sein. Für die Paketzusteller und Verbundzusteller ist es beispielsweise wichtig, den Paketkasten öffnen zu können, um Pakete in diesen zuzustellen oder aus diesem abholen zu können. Für Verbundzusteller und Briefzusteller ist es beispielsweise wichtig, den Paketkasten öffnen zu können, um großformatige Briefe (z.B. Maxibriefe), die u.U. nicht durch einen Briefschlitz des Paketkastens passen, durch Öffnung des Paketkastens in diesen zustellen zu können.

Die in den Fig. 3-10 und der zugehörigen Beschreibung vorgenomme Konkretisierung der Komponenten 2, 3 und 4 dient allerdings lediglich zur Erläuterungszwecken und soll nicht als wesentlich oder einschränkend verstanden werden. Insbesondere soll die Interaktion der dergestalt konkretisierten Komponenten 2, 3 und 4 auch in allgemeiner Form - also losgelöst von der konkreten Verkörperung dieser Komponenten - als offenbart verstanden werden. Dies gilt ebenfalls für die zu Erläuterungszwecken konkretisierten Übertragungstechniken, insbesondere Bluetooth und NFC, die lediglich als Beispiel für eine mögliche Form der drahtlosen Kommunikation zwischen Zugangsberechtigungsnachweisvorrichtungen 3 und Zugangskontrollvorrichtungen 4 verstanden werden sollen. Bei einem Paketkasten 69 handelt es sich um einen Behälter mit zumindest einer verschließbarer Tür, der zumindest zur Aufnahme von Paketen eingerichtet ist, beispielweise zumindest eines Pakets mit den Abmessungen 45 x 35 x 20cm (was einen sog. "Packset L" entspricht), oder von zumindest zwei oder drei solcher Pakete. Der Paketkasten 69 kann auch ein Brieffach aufweisen (kann alternativ aber auch kein Brieffach aufweisen), in das beispielsweise durch einen Briefschlitz mit oder ohne abdeckender Klappe Briefe eingeworfen werden können. Das Brieffach kann mit einer eigenen Tür verschließbar sein (mit mechanischem oder elektronischem Schloss), oder kann alternativ über eine Tür des Paketkastens 69 zusammen mit einem zur Aufnahme der Pakete vorgesehenen Paketfach verschlossen werden. Wenn jeweils eine Tür für das Paketfach und eine Tür für das Brieffach vorgesehen sind, kann beispielsweise eine gemeinsame Zugangskontrollvorrichtung vorgesehen sein, die je nach Zugangsberechtigung entweder eine Tür (z.B. die Tür des Paketfachs, z.B. für den Zusteller 70) öffnet oder beide Türen (z.B. für den Nutzer 63) öffnet. Der Paketkasten 69 kann zur Montage in oder an einer Wand, beispielsweise einer Hauswand, oder als freistehende Einheit zur Befestigung am Boden, z.B. vor einem Haus, vorgesehen sein. Der Nutzer 63 wird beispielsweise über Email und/oder SMS über neu zugestellte Sendungen (Pakete und/oder Briefe) benachrichtigt. Es ist auch möglich, dass der Nutzer 63 frankierte Sendungen in den Paketkasten 69 einlegt und online oder telefonisch eine Abholung beantragt. Wenn keine Abholung beauftragt wird, wird die Sendung u.U. etwas verzögert dann abgeholt, wenn ein Zusteller den Paketkasten das nächste Mal öffnet und die Sendung dort vorfindet. Als Beleg für eine abgeholte Sendung wird beispielsweise vom Zusteller ein Beleg im Paketkasten hinterlassen.

Der Schlüsselserver 60 wird beispielsweise in einem geeigneten Rechenzentrum eines Zustellunternehmens, insbesondere der Deutschen Post DHL, betrieben. Er erzeugt Schlüssel und Zugangsberechtigungen und kommuniziert diese insbesondere an den Bereitstellungsserver 66. Wie nachfolgend anhand der Fig. 8 noch genauer beschrieben wird, nimmt der Bereitstellungsserver aus den vom Schlüsselserver 66 erhaltenen Zugangsberechtigungen (und gfs. auch Schlüsseln) eine Auswahl von für jeweilige Zustellbezirke erforderlichen Zugangsberechtigungen vor, reichert diese Informationen mit Adressinformationen von Paketkästen und/oder deren Nutzern (und gfs. auch den MAC-Adressen der Schlösser der Paketkästen 69 an, mit deren Hilfe die Handscanner 68 eine Bluetooth-Verbindung initiieren können, ohne dass das zeitaufwändige Bluetooth-Pairing erforderlich ist) an, die von dem Paketkastenverwaltungssystem 65 erhalten werden, und stellt diese direkt oder indirekt den Handscannern 68 zur Verfügung. Die Auswahl beruht dabei auf der sog. Bezirksschneidung, also der Zuordnung von zuzustellenden oder abzuholenden Sendungen zu Zustellbezirken, für die sich die Zusteller 70 mit ihren Handscannern 68 anmelden können, wobei diese Bezirksschneidung vom Zuordnungsserver 67 durchgeführt wird, der Zugriff auf die Sendungsdaten hat. Parallel erhalten die Paketempfänger 63 ihre Schlüssel und Zugangsberechtigungsinformationen, mit denen sie die Paketkästen 69 öffnen können. Der Kauf eines Paketkastens 69 durch einen Nutzer 63 und/oder die Registrierung für einen Paketkasten 69 erfolgt beispielsweise über ein Online-Portal 64 (z.B. der domain www.Paket.de), der mit dem Server der Paketkastenverwaltung 65 diesbezügliche Informationen austauscht. Zusätzlich oder alternativ zu den Handscannern 70 der Zusteller sind auch Tags 74 vorgesehen, mit denen die Zusteller 70 (insbesondere Briefzusteller) jeweils eine Vielzahl von Paketkästen 69, beispielsweise alle Paketkästen 69 eines Zustellbezirks, öffnen können. Diese Tags werden nachfolgend auch als Group Lock Access (GLA) - Token bezeichnet In ähnlicher Weise sind auch für die Nutzer 63 zusätzlich oder alternativ zu den Mobiltelefonen 61 Tags 62 vorgesehen, die in der Regel allerdings nur den jeweils einem Nutzer 63 zugeordneten Paketkasten 69 öffnen, die nachfolgend auch als Individual Lock Access (ILA) - Token bezeichnet werden. Die auf den Tags 62, 74 enthaltenen Zugangsberechtigungsinformationen und Schlüssel werden ebenfalls vom Schlüsselserver 60 erzeugt und dann auf den Tags gespeichert, wie durch die gestrichelten Linien in Fig. 3 angedeutet ist

Wenn der Nutzer 63 ein Mobiltelefon zum Öffnen des Paketkastens 69 verwendet, kann dieses Mobiltelefon beispielsweise über eine Softwareanwendung (nachfolgend als "App" bezeichnet), mit dem Schlüsselserver 60 kommunizieren. Die App selbst und/oder deren Kommunikation mit dem Schlüsselserver 60 kann dabei besonders sicher ausgestaltet sein, beispielsweise durch Maßnahmen wie verschlüsselte Kommunikation, Versionskontrolle, Härtung, Passwortschutz, etc..

Im Folgenden werden zunächst die Komponenten des Zugangskontrollsystems 6 der Fig. 3 detaillierter beschrieben.

### Schlösser

Schlösser sind in den Paketkästen 69 integriert, welche vom Zustellunternehmen verwendet werden, um sowohl Pakete als auch Briefe an Kunden 63 auszuliefern. Da Briefe und Pakete ausschließlich an den ursprünglichen Empfänger 63 ausgeliefert werden sollen, sind die Paketkästen 69 verantwortlich für die eigentlichen Zugangsberechtigungen. Die Paketkästen 69 sind demnach mit (insbesondere elektronisch ansteuerbaren) Schlössern und einer Kommunikationsschnittstelle ausgestattet. Weiterhin beinhalten sie die Logik, um Zugangsberechtigungen zu erhalten und den Zugriff, also das Öffnen, zu verifizieren und zu gewährleisten. Paketkästen 69 sind entweder im Besitz von individuellen Kunden 63 oder sie werden von unterschiedlichen Kunden 63 geteilt

### Zugangsberechtigungen

Zustellern 70 oder Nutzern 63 wird der Zugriff auf Paketkästen 69 nur gewährt, falls sie im Besitz einer gültigen Zugangsberechtigung sind. Zugangsberechtigungen umfassen ein oder mehrere der bereits beschriebenen Zugangsberechtigungsparameter. Zugangsberechtigungen werden hierbei in elektronischer Form wiedergegeben und auf ein physisches Token geschrieben. Eine Zugangsberechtigung kann sowohl bezüglich einer Nutzungsdauer (nicht vor und nicht später), als auch bezüglich der Anzahl ihrer Verwendungen - zur Öffnung eines Schlosses-, eingeschränkt werden.

### Physische Token

Ein physisches Token beinhaltet die Zugangsberechtigung. Dabei gibt es drei unterschiedliche Typen: Handscanner 68, NFC-Tags 62, 74 und Mobiltelefone 61, beispielsweise Smartphones 61. Handscanner 68 werden dabei beispielsweise ausschließlich von Zustellern 70 zur Auslieferung und Abholung von Sendungen (z.B. Paketen) verwendet Mobiltelefone 61 werden typischerweise von den Kunden 63 verwendet. NFC-Tags 62, 74 können sowohl von Zustellern 70 als auch von Nutzern 63 benutzt werden. Während Zustellkräfte 70, die Briefe, die nicht im Briefschlitz des Paketkastens 69 passen, ausliefern, Zugriff auf eine Gruppe von Paketkästen 69 brauchen, benötigen Nutzer 63 und Paketboten 70 mit Handscannern 68 individuellen Zugriff auf Paketkästen 69. Daher werden im System der Fig. 3 Group Lock Access (GLA) Token (für Gruppenzugriff) und Individual Lock Access (ILA) Token (für individuellen Zugriff) unterschieden und verwendet Auf dem Mobiltelefon 61 eines Nutzers 63, dem NFC-Tag 62 eines Nutzers 63 und dem Handscanner 68 eines (Paket-)Zustellers 70 werden daher ILA-Token eingesetzt, während auf den NFC-Tags 74 eines (Brief-)Zustellers 70 GLA-Token eingesetzt werden.

Schlüsselserver

Der Schlüsselserver 60 verwaltet alle Zugangsberechtigungen des Systems 6. Insbesondere pflegt er Informationen über alle Nutzer 63, alle Paketkästen 69 und die zugehörigen Zugriffsrechte. Er erzeugt daher auch die eigentlichen Zugangsberechtigungen, die auf den physischen Token verwendet werden können.

Kryptographische Schlüssel der Schlösser

Jedes Schloss eines Paketkastens 69 besitzt zwei Schlüssel, die für die Unterscheidung der oben angesprochen Typen von Token Verwendung finden.

Für ILA-Token: Ein Schloss besitzt einen Individualschlüssel $S_2$. Um ein Schloss zu öffnen, benötigt ein ILA eine gültige Zugangsberechtigung B. Der Schlüssel $S_2$ wird dazu verwendet die Zugangsberechtigung B zu verifizieren. Weiterhin wird der Schlüssel $S_2$ verwendet, um eine Zurückweisungsliste und/oder Gruppenschlüsselinformation zu validieren. Der Schlüssel $S_2$ bildet mit einem Schlüssel $S_1$ ein Schlüsselpaar, das symmetrisch oder unsymmetrisch sein kann. Im Fall eines symmetrischen Schlüssels $S_1=S_2$ wird beispielsweise AES-128 als symmetrische kryptographische Primitive verwendet und für die Verschlüsselung beispielsweise der sog. Cipher Block Chaining (CBC) Modus zusammen mit einem zufälligen Initialisierungsvektor (IV) benutzt. Der IV kann beispielsweise für jede Verschlüsselung individuell von einem Zufallszahlengenerator (RNG) erzeugt und beispielsweise als Klartext übertragen werden. Im Fall eines asymmetrischen Schlüsselpaars wird beispielsweise eine digitale Signatur zur Integritätsprüfung bereitgestellt.

Für GLA-Token: Ein Schloss besitzt einen Gruppenschlüssel $S_{T2}$. Um das Schloss zu öffnen, benötigt ein GLA-Token eine gültige Zugangsberechtigung B. Der Schlüssel $S_{T2}$ wird hierbei wiederrum dazu verwendet, die Zugangsberechtigung B zu verifizieren. Der Schlüssel $S_{T2}$ bildet mit einem Schlüssel $S_{T1}$ ein Schlüsselpaar, das symmetrisch oder unsymmetrisch sein kann.

Die Schlüssel $S_2$ und $S_{T2}$ werden beispielsweise beim Produktionsprozess des Schlosses erzeugt und im Schloss abgelegt. Beide Schlüssel müssen adäquat im Schloss vor unerlaubten Zugriffen geschützt sein. Beide Schlüssel werden, zusammen mit Verwaltungsdaten des Schlosses und einer eindeutigen Kennung (LockID) an den Schlüsselserver 60 übermittelt und dort gespeichert. Der Schlüsselserver 60 verwendet dann die Schlüssel $S_1$ und $S_{T1}$ zum kryptographischen Schutz der Zugangsberechtigungen - um die Verifizierung der Gültigkeit der Zugangsberechtigungen am Schloss zu erlauben - und den Schlüssel $S_1$ zusätzlich zum Schutz der Zurückweisungsliste und der Gruppenschlüsselinformation.

Kryptographische Schlüssel bei ILA-Token

Jedes ILA-Token ist mit einem dritten Schlüssel $H_3$ ausgestattet, der mit einem vierten Schlüssel $H_4$ ein symmetrisches (also $H_3=H_4$) oder asymmetrisches (also $H_3\#H_4$) Schlüsselpaar ($H_3$, $H_4$) bildet. Dieser Schlüssel $H_3$ wird zur Authentifizierung des ILA-Tokens am Schloss verwendet, dem der Schlüssel $H_4$ zumindest zeitweise zur Verfügung gestellt wird. Der Schlüsselserver verwendet dabei das Schlüsselpaar ($H_3$, $H_4$), um die Zugangsberechtigung zum Schloss durch das ILA-Token zu gewährleisten. Während der Initialisierung des ILA-Tokens, wird dabei der Schlüssel $H_3$ aufgespielt und auf dem Schlüsselserver gespeichert.

Der Schlüssel $H_3$ kann zudem für eine Gruppe von ILA-Token herausgegeben werden. Dabei sind dann sämtliche ILA-Token einer Gruppe mit dem gleichen Schlüssel $H_3$ ausgerüstet. Auf einem ILA-Token können mehrere Schlüssel parallel existieren, dass heißt dass ein oder mehrere Gruppenschlüssel neben einem oder mehreren individuellen Schlüsseln auf einem ILA-Token präsent sein können (Auch wenn hier von Gruppen aus Token gesprochen wird, sind diese trotzdem als individuelle Zugangsberechtigungen anzusehen, die Zugriff auf individuelle Schlösser erlauben und nicht auf Gruppen von Schlössern.)

Ein Gruppenschlüssel kann während oder nach dem Initialisierungsprozesses auf dem Gerät aufgespielt werden, jedoch muss der Schlüssel in jedem Fall vor der Verwendung auf dem Gerät existieren.

Kryptographische Schlüssel bei GLA-Token

Jedes GLA-Token ist mit einem Schlüssel $H_3$ ausgestattet, der mit einem Schlüssel $H_4$ ein symmetrisches oder asymmetrisches Schlüsselpaar ($H_3$, $H_4$) bildet. Der Schlüssel $H_3$ wird dazu verwendet um Zugriff auf eine Gruppe von Schlössern zu erlangen, die zumindest zeitweise über den Schlüssel $H_4$ verfügen. Der Schlüsselserver benutzt das Schlüsselpaar ($H_3$, $H_4$) um Zugangsberechtigungen für eine Gruppe von Schlössern an das GLA-Token zu vergeben.

Der Schlüssel $H_3$ wird während des Initialisierungsprozesses auf dem Gerät aufgespielt und auf dem Schlüsselserver gespeichert.

Struktur der Zugangsberechtigungen

Zugangsberechtigungen werden vom Schlüsselserver erteilt. Eine Zugangsberechtigung kann ein oder mehrere der folgenden Zugangsberechtigungsparameter enthalten:

- KeyID:        ID der Zugangsberechtigung (vom Schlüsselserver vergeben)
- LockID:       ID des Schlosses

  ∘ Für ILA Token: Die Schlossnummer und MAC- Adresse werden vom Auftragsmanagement an den Schlüsselserver übermittelt. Ein Teil der LockID kann beispielsweise verwendet werden, um verschiedene Schlosshersteller zu unterscheiden oder zu identifizieren.
  ∘ Für GLA Token: in diesem Fall ist die LockID die ID der Gruppe, zu der der Paketkasten mit dem konkretem Schloss gehört.

- NotBeforeDate:        Datum "gültig von" mit Jahr/Monat/Tag
- NotAfterDate:         Datum "gültig bis" mit Jahr/Monat/Tag
- StartTimeOfDate:      Uhrzeit ab wann die Zugangsberechtigung gültig ist (Standard z.B. 00:00:00)
- EndTimeOfDay:         Uhrzeit bis wann die Zugangsberechtigung gültig ist (Standard z.B. 23:59:59)
- MaxUses:              Anzahl der Verwendungen; Standard 0 bedeutet "unbegrenzt"
- Permissions:          Einstellungserlaubnis für sicherheitskritische Operationen, z.B. ob das Öffnen des Paketfachs, und/oder das Öffnen des Paketfachs und des Brieffachs erlaubt ist.

Eine Zugangsberechtigung kann durch eine einzigartige KeyID identifiziert werden. Die "LockID" beschreibt, für welches Schloss (oder für welche Gruppe von Schlössern) die Zugangsberechtigung gültig ist. Dabei kann beispielsweise eine vordefinierte Anzahl von Bitstellen der LockID (z.B. vier Bits) eine Codierung tragen, die anzeigt, ob es sich im eine Individualkennung oder eine Gruppenkennung handelt. Mit einem solchen Code kann das Schloss erkennen, welchen Schlüssel es für die Entschlüsselung benutzten soll: den individuellen Schlüssel $S_2$ oder einen von Gruppenschlüsseln $S_{T2}$. In diesem Code, oder in anderen Bitstellen der LockID, kann auch codiert werden, von welchem Hersteller das Schloss stammt.

Es kann passieren, dass ein Schloss mehrere Gruppenschlüssel beinhalten muss, falls der Paketkasten befindet sich in einer Zone befindet, die eine Überlappung von zwei Zustellgruppen darstellt. Dies wird unten noch weiter erläutert.

Die zwei Parameter "NotBeforeDate" und "NotAfterDate" definieren den Gültigkeitszeitraum der Zugangsberechtigung, mit der Genauigkeit eines Tages. "NotBeforeDate" legt den Tag der Erstverwendung fest und "NotAfterDate" den letzten Tag im Gültigkeitszeitraum. "StartTime-OfDay" spezifiziert weiter die Uhrzeit, ab wann der Gültigkeitszeitraum beginnt, und "EndTimeOfDay" spezifiziert, wann dieser endet. Die Genauigkeit ist beispielsweise eine Sekunde. Es sind aber auch andere Definitionsmöglichkeiten von Gültigkeitsintervallen denkbar, beispielsweise in Form eines Zeigers oder Indexes, der auf einzelne Einträge einer Vielzahl von vordefinierten Gültigkeitszeiträumen verweist, die beispielsweise jeweils im Schlüsselserver und im Schloss hinterlegt sind oder nach einer vordefinierten Regel aus dem Index berechnet werden können. Beispielsweise kann bei Zugangsberechtigungen, die für jeweils einen Tag gültig sind, lediglich der Tag der Gültigkeit als Zugangsberechtigungsparameter verwendet werden, wobei dieser Tag beispielsweise als Offset zu einem vordefinierten Referenztag (z.B. der 1.1.2014) angegeben wird, also beispielsweise als "20", wenn die Zugangsberechtigung am 21.1.2014 gültig sein soll. "MaxUses" definiert, wie oft der Schlüssel verwendet werden kann, um ein Schloss zu öffnen. Der Wert "0" legt dabei beispielsweise fest, dass der Schlüssel unbegrenzt im Zeitraum verwendet werden darf. "Permissions" kodiert, beispielsweise durch das Setzen von einzelnen Bits in einem Bitstring, welche sicherheitskritischen Operationen ein Token ausführen darf, wie oben bereits beispielhaft aufgezählt wurde (ein auf 1 gesetztes Bit zeigt dann beispielsweise jeweils das Vorliegen der Berechtigung an).

Der Schlüsselserver erteilt eine Zugangsberechtigung B für ein Schloss. Je nach Typ des Tokens, generiert der Server den Wert V, als Ergebnis von kryptographischen Operationen über die Zugangsberechtigung B unter Verwendung des Schlüssels $S_1$ oder der Schlüssels $S_{T1}$. Die kryptographischen Operationen können beispielsweise die Bildung eines MAC-Wertes über B mit einem symmetrischen Schlüssel $S_1$ oder die Bildung einer digitalen Signatur über B unter Verwendung eines asymmetrischen Schlüssels $S_1$ bezeichnen, um nur ein paar nicht einschränkende Beispiele zu nennen.

Struktur der Zurückweisungsliste

KeyIDs können für ein Schloss durch Zurückweisungslisten vom Schlüsselserver 60 gesperrt werden. Die Liste enthält dabei alle KeyIDs der Zugangsberechtigungen, die für einen dazugehörigen Zeitraum der Zugangsberechtigungen vom Schloss widerrufen wurden. Zugangsberechtigungen, die aufgrund ihres Gültigkeitszeitraums nicht länger gültig sind, werden beispielsweise von der Liste entfernt, um diese kurz zu halten und damit einen geringen Speicherbedarf in den Schlössern zu gewährleisten. Es ist beispielsweise nicht möglich, einen einmalig initiierten Widerruf einer Zugangsberechtigung rückgängig zu machen. Wurde eine Zugangsberechtigung widerrufen, besteht keine Möglichkeit mehr, mit dieser Zugangsberechtigung das Schloss zu öffnen.

Der Schlüsselserver 60 generiert die Zurückweisungsinformation L (die die Zurückweisungsliste enthält) und eine Prüfinformation VL, die beispielsweise wieder auf kryptographischen Operationen über L unter Verwendung des Schlüssels S1 beruht

Die Zurückweisungsinformation L kann beispielsweise die Kennung (z.B. LockID) des Schlosses, auf das sich die Zurückweisungsliste bezieht, und eine Liste der zu sperrenden KeyIDs enthalten, Ferner kann ein einzigartiger Zähler für die Zurückweisungsliste enthalten sein, der angibt, die wievielte Zurückweisungsliste die vorliegende Zurückweisungsliste für das Schloss darstellt. Im Schloss kann dann ein entsprechender Zähler geführt werden um die Gültigkeit der aktuellen Zurückweisungsinformation prüfen zu können.

Schlossöffnung mit einem Handscanner oder einem Mobiltelefon

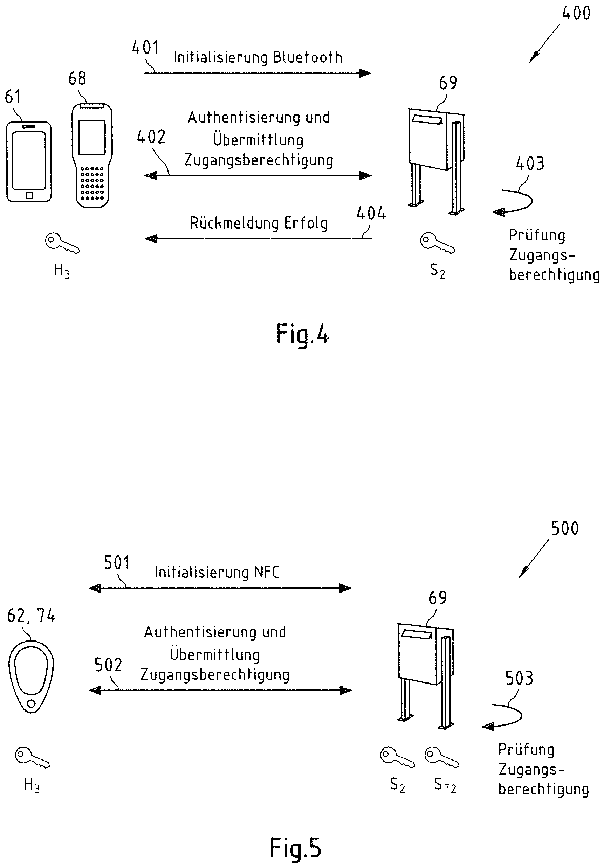

Ein Schloss wird geöffnet, nachdem sich ein Token durch die Übermittlung einer gültigen Zugangsberechtigung authentisiert hat. Dieser Vorgang ist im Flussdiagramm 400 der Fig. 4 dargestellt.

Das Token (Handscanner 68 oder Mobiltelefon 61) hat beispielsweise folgende Daten vom Schlüsselserver empfangen: Eine Zugangsberechtigung B und eine erste Prüfinformation V, einen dritten Schlüssel H3 und einen Authentifizierungswert A, der eine mit S1 verschlüsselte Kombination von zumindest H4 und der KeyID der Zugangsberechtigung B umfasst. Im Falle einer symmetrischen Verschlüsselung kann der Initialisierungsvektor IV eines CBC Modus der Verschlüsselung ebenfalls empfangen worden sein.

Der Prozess 400, ein Schloss zu öffnen, verläuft dann wie nachfolgend darsgestellt (vgl. Fig. 4). In einem Schritt 401 wird zunächst eine Bluetooth-Verbindung zwischen Token 61, 68 und Schloss (des Paketkastens 69) eingerichtet, vorzugsweise unter Verwendung der dem Token 61, 68 bekannten MAC-Adresse des Schlosses, um das Bluetooth-Pairing zu vermeiden.

In einem Schritt 402 authentisiert sich das Token 61, 68 gegenüber dem Schloss basierend auf dem Schlüssel H3. Dazu wird zumindest die Information A an das Schloss übermittelt, aus der das Schloss mit seinem Schlüssel S2 den Schlüssel H4 gewinnen kann. Basierend auf H3 und H4 können das Token 61, 68 und das Schloss dann ein dem Fachmann bekanntes Authentisierungsprotokoll durchführen, beispielsweise ein Challenge-Response-Verfahren, in dem das Token 61, 68 den Schlüssel H3 auf eine vom Schloss erhaltene Challenge (und gfs. weitere Informationen) anwendet und als Response an das Schloss sendet, das die Response wiederum anhand des Schlüssels H4 prüfen kann, um die Authentizität des Tokens 61, 68 festzustellen.

Nach erfolgter Authentisierung des Token 61, 68, oder in einem mit dieser Authentisierung kombinierten Prozess, übermittelt das Token 61, 68 ferner die Information B und V an das Schloss.

Das Schloss kann dann in einem Schritt 403 die Authentizität und Integrität von B und V hinsichtlich des Schlüsselservers 60 prüfen, also feststellen, ob B und V vom Schlüsselserver stammen und nicht verändert wurden. Dazu verwendet das Schloss den Schlüssel $S_2$. Bei erfolgreicher Prüfung werden die Zugangsberechtigungsparameter von B gegen im Schloss vorhandene Bezugsinformation geprüft, um festzustellen, ob aufgrund von B das Schloss geöffnet werden kann.

Insbesondere kann dabei - je nach Vorhandensein der jeweiligen Zugangsberechtigungsparameter in der Zugangsberechtigungsinformation - folgendes geprüft, wobei die Reihenfolge der Prüfungen beliebig sein kann und bereits bei einer nicht erfüllten Bedingung abgebrochen bzw. zu Schritt 404 gesprungen werden kann, um Zeit und/oder Strom zu sparen):

- Ob die KeyID (entschlüsselt aus A), der KeyID der Zugangsberechtigung entspricht.

- Ob die Zugangsberechtigung in zeitlicher Hinsicht noch gültig ist (durch Vergleich mit einer Uhr des Schlosses).

- Ob die Zugangsberechtigung nicht in der Zurückweisungsliste für das Schloss ist.

- Ob die LockID der Zugangsberechtigung zur LockID des Schlosses passt.

- Welches Ausmaß von Zugang die "Permissions" erlauben.

- MaxUses wird gegen den internen Counter des Schlosses abgeglichen und der Counter wird entsprechend inkrementiert

Im Schritt 404 erfolgt dann eine Rückmeldung an das Token 61, 68 (z.B. OK, ERROR, WARNING) und bei positivem Ergebnis aller durchgeführten Prüfungen die Vorbereitung für die Schlossöffnung.

Der Schlüssel $H_3$ ist dem Token 61, 68 beispielsweise während einer Initialisierungsphase (insbesondere im Falle des Token 61, beispielsweise einer Initialisierung einer App auf dem Mobiltelefon 61) ausgehändigt worden oder wurde als Gruppenschlüssel $H_3$ übergeben (insbesondere im Falle des Token 68). Der korrespondierende od. identische Schlüssel $H_4$ wird an das Schloss in verschlüsselter Form übermittelt. Dadurch muss das Schloss nicht alle Schlüssel $H_4$ von allen Geräten speichern und kann äußerst flexibel und offline eingesetzt werden. Darüber hinaus wird die KeyID der Zugangsberechtigung zusammen mit dem Schlüssel $H_4$ verschlüsselt. Damit wird der Schlüssel des Tokens an die aktuelle Zugangsberechtigung des Schlosses gebunden. Das Challeng-Response-Verfahren wird verwendet, um das Protokoll gegen sog. "Replay Attacken" zu schützen.

Schlossöffnung mit einem NFC Tag

Ein Schloss wird geöffnet, nachdem sich ein Token 62, 74 durch die Übermittlung einer gültigen Zugangsberechtigung gegenüber dem Schloss (eines Paketkastens 69) authentisiert hat.

Dieser Vorgang ist im Flussdiagramm 500 der Fig. 5 dargestellt.

Das Token 62, 74 hat beispielsweise wiederum die Informationen B, V, A und H3 und gfs. IV erhalten und speichert diese, wobei im Falle eines ILA-Token V auf kryptographischen Operationen über zumindest B mit dem Schlüssel S1 und im Falle eines GLA-Token V auf kryptographischen Operationen über zumindest B mit dem Schlüssel ST1 beruht. In ähnlicher Weise beruht im Falle eines ILA-Token A auf einer Verschlüsselung der Kombination von zumindest H4 und der KeyID von B mit S1 und im Falle eines GLA-Token beruht A auf einer Verschlüsselung einer Kombination von zumindest H4 und der KeyID von B mit ST1. Der Schlüssel H3 (und sein Partner H4) kann im Falle von ILA-Token und GLA-Token beispielsweise für jeden Token unterschiedlich gewählt sein. Im Gegensatz zu den Token 61, 68 ist bei den Token 62, 74 die Information B, V, A und H3 gfs. langlebiger, da der Aufwand des Einschreibens dieser Information aufwändig ist und bevorzugt nur einmal, insbesondere während der Produktion der Tags 62, 74 oder im Rahmen der Auslieferung oder Inbetriebnahme, vorgenommen wird.

Je nach Architektur des Token 62, 74 kann der dritte Schlüssel H3 (der auch als Geräteschlüssel bezeichnet werden kann) in einem nach außen nicht zugänglichen Speicher des Tokens gespeichert werden und nur intern zugänglich sein, beispielsweise für einen Prozessor des Tokens 62, 74, während die Authentisierungsinformation A beispielsweise in einem von einem Lesegerät (z.B. einem NFC-Lesegerät insbesondere des Schlosses) auslesbaren Speicherbereich gespeichert ist. B und V können in einem Speicherbereich enthalten sein, der beispielsweise erst dann zum Lesen freigegeben wird, wenn eine gegenseitige Authentisierung zwischen dem Lesegerät/Schloss und dem Token 62, 74 stattgefunden hat.

Der Prozess 500, ein Schloss zu öffnen, verläuft dann wie in Fig. 5 dargestellt ab.

In einem Schritt 501 findet eine Initialisierung der NFC-Kommunikation zwischen Token 62, 74 und Schloss statt.

In Schritt 502 erfolgt eine gegenseitige Authentisierung zwischen Token 62, 74 und Schloss basierend auf den Schlüsseln H3 und H4 statt. Dazu liest das Schloss beispielsweise zunächst die Information A aus dem Token 62, 74 aus und erhält daraus durch Entschlüsselung mit dem Schlüssel S2 oder dem Schlüssel ST2 den Schlüssel H4. Welchen Schlüssel S2 oder ST2 das Schloss verwenden muss, kann das Schloss beispielsweise anhand der LockID, die beispielsweise ebenfalls aus dem Token 62, 74 ausgelesen wird (beispielsweise als Teil von A oder separat davon) erkennen, beispielsweise anhand von vordefinierten Bitstellen, die angeben, ob es sich um einen ILA-Token (-> Verwendung von S2 erforderlich) oder einen GLA-Token (-> Verwendung von ST2 erforderlich) handelt. Auch ein Initialisierungsvektor IV kann, soweit je nach Art der Verschlüsselung erforderlich, aus dem Token 62, 74 ausgelesen werden, beispielsweise als Teil von A oder separat davon. Basierend auf H3 (Token) und H4 (Schloss) wird dann ein Authentisierungsprotokoll durchgeführt, beispielsweise das DESFire Authentisierungsprotokoll oder ein beliebiges anderes Authentisierungsprotokoll, das beispielsweise auf einem Challenge-Response-Verfahren beruhen kann. Dabei kann es beispielsweise auch ausreichen, dass sich das Schloss gegenüber dem Token 62, 74 authentifiziert, beispielsweise eine vom Token gelieferte Challenge unter Verwendung seines Schlüssels H4 in eine Response überführt, die im Token anhand von H3 gegengeprüft wird.

Bei erfolgreicher Authentisierung kann das Token 62, 74 dem Schloss (bzw. dessen Lesegerät) beispielsweise das Auslesen der Informationen B und V ermöglichen.

Die Prüfung der Authentizität und Integrität von B und V erfolgt dann in Schritt 503 analog wie zu Schritt 403 der Fig. 4 beschrieben, wobei V allerdings entweder anhand von S2 (bei ILA-Token) oder ST2 (bei GLA-Token) geprüft wird. Welcher Schlüssel S2/ST2 verwendet werden soll, kann anhand der Struktur der im Token enthaltenen LockID entschieden werden, wie bereits erläutert wurde.

Auch hinsichtlich der Prüfung der in B enthaltenen Zugangsberechtigungsparameter kann auf die Beschreibung zu Schritt 403 der Fig. 4 verwiesen werden, mit dem Unterschied, dass die in B enthaltene LockID entweder mit der LockID des Schlosses (im Falle von ILA-Token) oder mit der GroupID des Schlosses (im Falle von GLA-Token) verglichen wird.

Das Schloss wird geöffnet, wenn B und V für authentisch und integer befunden wurden, die Prüfung der Zugangsberechtigungsparameter gegen deren im Schloss vorhandene Bezugsgrößen positiv verlaufen ist und die Permissions anzeigen, dass eine Öffnung zumindest einer Tür zulässig ist

### Übermittlung der Zurückweisungsliste

Bei der Übermittlung der Zurückweisungsliste muss sich das Token beispielsweise nicht authentisieren. Eine Replay-Attacke kann aufgrund des in der Zurückweisungsliste enthaltenen Zählers (Counter) nicht durchgeführt werden. Die Verteilung der Zurückweisungslisten auf die Schlösser kann bevorzugt von den Handscannern 68 und dem Mobiltelefon 61 ausgeführt werden; allerdings können zu diesem Zweck auch GLA-Token 74 eingesetzt werden, die speziell für diesen Fall umprogrammiert werden, so dass sie Zurückweisungslisten beinhalten und übermitteln können.

Der Prozess 600 für die Übermittlung der Zurückweisungsliste mittels ILA-Token (z.B. Handscanner 68, Mobiltelefon 61 und Tag 74), wird nachfolgend beschrieben. Dabei empfängt das ILA-Token beispielsweise folgende Informationen vom Schlüsselserver: Zurückweisungsinformation L (die die Zurückweisungsliste enthält) und vierte Prüfinformation $V_L$, die beispielsweise durch Vornahme kryptographischer Operationen über zumindest L unter Verwendung von $S_1$ (ILA-Token) oder $S_{T1}$ (GLA-Token) erzeugt wird.

Der Prozess 600 läuft dann ab wie folgt In Schritt 601 übermittelt das Token 61, 68, 74, nachdem eine Bluetooth- oder NFC- Verbindung aufgebaut wurde, die Zurückweisungsinformation L und das Validierungsmerkmal $V_L$. Im Schritt 602 wird vom Schloss die Authentizität von L anhand $V_L$ und dem Schlüssel $S_2$ oder $S_{T2}$ geprüft, die wiederum anhand der Struktur der LockID in L ausgewählt werden. Dann können beispielsweise die Inhalte von L geprüft werden, also z.B. ob die LockID zu der LockID des Schlosses passt, und/oder ob der Wert Counter größer ist als der Wert, der im Schloss für die Zurückweisungslisten nachgehalten wird. Wenn dies der Fall ist, wird die neuen Zurückweisungsliste aus L im Schloss übernommen (durch Ersetzen der alten) und der Wert für die Zurückweisungslisten im Schloss auf den Wert von Counter aus L gesetzt. In Schritt 603 erfolgt dann eine Rückmeldung an das Token (OK, ERROR, WARNING) (Schritt 603).

Der Wert Counter stellt sicher, dass die Zurückweisungsliste nicht durch eine ältere Zurückweisungsliste ersetzt werden kann. Da die Zurückweisungsliste - bei ihrer Erzeugung - vollständig ist, kann das Schloss alle vorherigen KeyIDs mit den aktuellen KeyIDs ersetzen. Dabei werden insbesondere KeyIDs von nicht mehr gültigen Zugangsberechtigungen aus der Zurückweisungsliste entfernt, um diese klein zu halten.

### Update von Gruppenschlüsseln

Der Schlüssel S2, der für den individuellen Zugriff zuständig ist, bleibt beispielsweise während des kompletten Lebenszyklus des Schlosses konstant. Jedoch muss der Schlüssel ST2, der für den Gruppenzugriff zuständig ist, möglicherweise ein- oder mehrmals ausgetauscht werden (Dies kann beispielsweise auftreten, wenn ein Paketkasten in einen anderen Auslieferungsbezirk umgezogen wird.) Aus diesem Grund wird der änderbare Schlüssel ST2 erfindungsgemäß vom unveränderbaren - und daher sichereren - Schlüssel S2 geschützt.

Beispielsweise sollen Handscanner 68 und Mobiltelefon 61 den Schlüssel ST2 (oder gfs. mehrere auf dem Schloss vorhandene Schlüssel ST2) auszutauschen können. Dazu erstellt der Schlüsselserver 60 eine Gruppenschlüsselinformation, die beispielsweise eine oder mehrere Komponenten der folgenden umfasst: eine LockID, also die ID des Schlosses, auf das sich das Update bezieht, einen update_counter als einzigartiger Zähler für das Update, und ein oder mehrere Einträge (entries), also die Gruppenschlüsselliste mit den Tupeln (GroupID, ST2).

Das Token 61, 68 empfängt vom Schlüsselserver 60 dann beispielsweise einen verpackten Schlüsselwert W, der zumindest den/die neue(n) Gruppenschlüssel ST2 und jeweilige neue GroupIDs mit dem individuellen Schlüssel S1 des Schlosses verschlüsselt (oder beispielsweise die gesamte Gruppenschlüsselinformation). Damit ist der neue Schlüssel ST2 nicht im Klartext auf dem Handscanner 68 oder Mobiltelefon 61 vorhanden und kann nur vom jeweiligen Schloss entschlüsselt werden. Darüber hinaus erstellt der Schlüsselserver 60 noch einen Validierungswert VW, der beispielsweise durch kryptographische Operationen über zumindest W unter Verwendung des ersten Schlüssels S1 erzeugt wird. Die kryptographischen Operationen können wiederum beispielsweise eine MAC-Funktion oder eine digitale Signatur unter Verwendung von S1 darstellen.

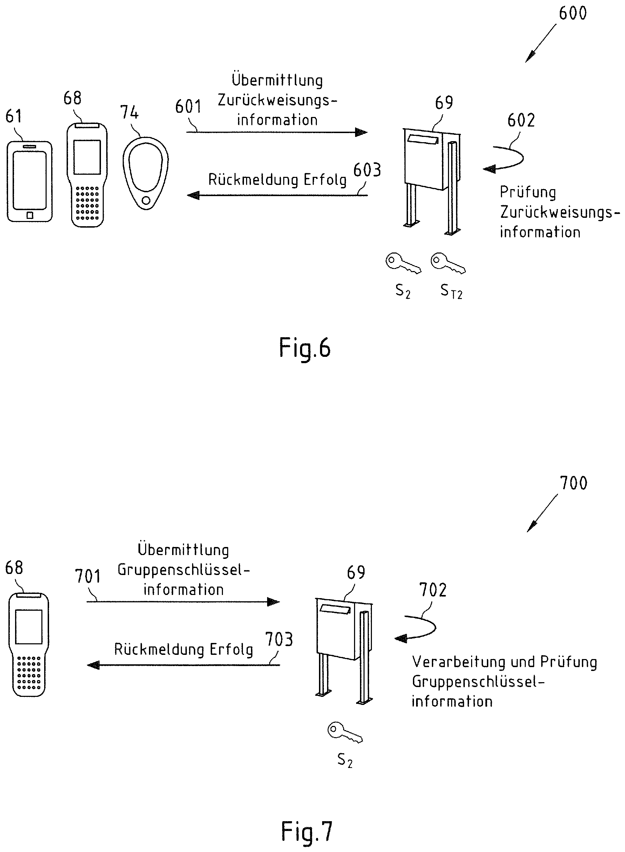

Der in Fig. 7 dargestellte Übermittlungsprozess 700 verläuft dann wie folgt. In Schritt 701 übermittelt ein Token 68 W und VW an das Schloss. In Schritt 702 erfolgt dann die Auswertung der Prüfinformation VW zur Feststellung der Authentizität und Integrität von W und VW unter Verwendung des Schlüssels S2. Bei positivem Ergebnis kann die Gruppenschlüsselliste mit dem Schlüssel S2 entschlüsselt werden und weitere Prüfungen vorgenommen werden, ob diese Gruppenschlüsselliste im Schloss übernommen werden darf, z.B. anhand einer Prüfung ob die LockID aus der Gruppenschlüsselinformation (erhalten durch Entschlüsselung von W) zu der LockID des Schlosses passt, und/oder ob der Wert update_counter aus der Gruppenschlüsselinformation größer ist als der entsprechende Wert des update-counters für den/die aktuellen Gruppenschlüssel im Schloss. Falls die Prüfungen erfolgreich sind, werden der/die aktuelle(n) Gruppenschlüssel ST2 und die jeweilige GroupID mit den neuen Werten aus der Gruppenschlüsselliste ersetzt und der update_counter im Schloss auf den Wert des update_counters aus der Gruppenschlüsselinformation ersetzt. Im Schritt 703 erfolgt dann die Rückmeldung an das Token (OK / NOK).

Der update_counter verhindert hierbei wiederum Replay-Attacken, bei dem der Angreifer versuchen könnte, einen oder mehrere alte(n) Gruppenschlüssel im Schloss zu platzieren. Die LockID in der Gruppenschlüsselinformation stellt sicher, dass das Update von Schlüsselserver 60 kommt und für das konkrete Schloss erstellt wurde. Ein weiterer wichtiger Prozessschritt, der hier nicht explizit aufgeführt wird, ist, dass der Schlüsselserver 60 die Rückinformation (beispielsweise vom Token 68) bekommt, ob der/die neue(n) Gruppenschlüssel im Schloss gespeichert wurde oder nicht. Diese Information ist nötig, damit der Schlüsselserver in Zukunft verwendbare Zugangsberechtigungen für GLA-Token erzeugen kann.

### Reihenfolge der Operationen

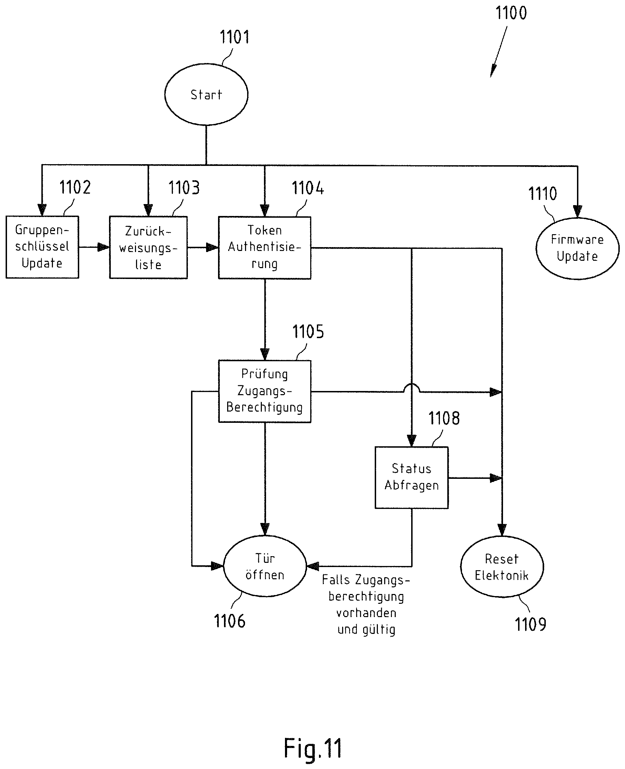

Fig. 11 zeigt ein beispielhaftes Flussdiagramm 1100, das die mögliche Reihenfolge von Operationen in einem erfindungsgemäßen Schloss darstellt. Welche Operationen generell vom Schloss ausgeführt werden sollen, kann dem Schloss vom Token beispielsweise durch ein oder mehrere Kommandos mitgeteilt werden. So ist es beispielsweise möglich, in einer Kommunikationssitzung mehrere Operationen durchzuführen, beispielsweise ein Gruppenschlüsselupdate, eine Installation einer neuen Zurückweisungsliste und eine Prüfung der Zugangsberechtigung, um ein Öffnen der Tür zu bewirken. Je nach gewünschter Operation werden dann ein oder mehrere der oben beschriebenen und in Fig. 1 dargestellten Werte B, V, A, W, $V_W$, L, $V_L$, vom Token an das Schloss übertragen.

Nach dem Start 1101 können entweder ein oder mehrere Gruppenschlüssel auf dem Schloss aktualisiert (Schritt 1102), eine neue Zurückweisungsliste im Schloss installiert (Schritt 1103), eine Tokenauthentisierung (anhand des Schlüssels H4) vorgenommen (Schritt 1104) oder ein Firmware-Update der Schlosssoftware (Schritt 1110) vorgenommen werden. Wie in Fig. 11 dargestellt können dabei einige Schritte, z.B. die Schritte 1102, 1103 und 1104 auch hintereinander ausgeführt werden. Die Fig. 11 ist so zu verstehen, dass jede Operation grundsätzlich optional ist, also beispielsweise nur der Schritt 1102, der Schritt 1104 und der Schritt 1109 ausgeführt werden können, wenn dies so gewünscht ist. Ferner kann daher die Bearbeitung auch nach jeder Operation beendet werden, beispielsweise nach Schritt 1102.

Nach erfolgreicher Tokenauthentisierung 1104 kann entweder die Elektronik zurückgesetzt werden (Reset im Schritt 1109), der Status des Schlosses abgefragt werden (Schritt 1108) oder eine Prüfung einer erhaltenen Zugangsberechtigung B vorgenommen werden (Schritt 1105). Nach beiden Schritten kann optional auch ein Reset vorgenommen werden (Schritt 1109). Wenn die Zugangsberechtigung B beispielsweise zum Öffnen einer oder mehrerer Türen des Paketkastens 69 berechtigt, wird/werden diese Tür(en) geöffnet (Schritt 1106). Auch nach Abfrage des Status (Schritt 1108) kann optional - bei vorliegender Berechtigung - die Tür geöffnet werden (Schritt 1106).

Wie aus Fig. 11 ersichtlich ist, findet nach dem Reset (Schritt 1109) oder dem Firmware-Update (Schritt 1110) keine Öffnung der Tür statt. Ferner findet die Installation der Zurückweisungsliste (Schritt 1102) und das Update der ein oder mehreren Gruppenschlüssel (Schritt 1102) immer vor der Zugangsberechtigungprüfung statt, da die Zurückweisungsliste bzw. der/die Gruppenschlüssel bei dieser Prüfung erforderlich sein können.

Im Folgenden wird für das Ausführungsbeispiel des Zugangskontrollsystems der Fig. 3 erläutert, wie die Zuordnung der Zugangsberechtigungen und Schlüssel zu den Geräten der Zusteller 70 und Nutzer 63 und zu den Paketkästen 69 erfolgt.

### Prozess Zustellung per Handscanner

Der Zuordnungsserver 67 nimmt die sog. Bezirksschneidung vor, legt also dynamisch Zustellbezirke anhand des täglichen Sendungsaufkommens und des zur Verfügung stehenden Zustellpersonals fest. Im Rahmen dieser Bezirksschneidung werden die zu einem jeweiligen Bezirk gehörenden Paketkästen 69 anhand ihrer Paketkastenadresse (oder der Adressen ihrer Nutzer) identifiziert. Es wird angenommen, dass diese Zuordnung dynamisch erfolgt, also vorab keine Aussage darüber getroffen werden kann, welche Paketkästen 69 zu welchem Bezirk gehören werden.

Die nachfolgend noch genauer beschriebenen Stammdaten der Paketkästen, die unter anderem die Zugangsberechtigungen zu den jeweiligen Paketkästen und den Schlüssel H3 umfassen, und beispielsweise auch die Adressdaten der Paketkastennutzer werden dann in mehreren Zwischenschritten regional verteilt, wobei die Zwischenschritte für die nachfolgenden Betrachtungen irrelevant sind. Letztlich werden in der Regel ein, ggf. aber auch mehrere Bezirke einer dezentralen Einheit (z.B. einem Computer oder Server) zugeordnet, von der aus die "Betankung" der Handscanner 68 mit den Stammdaten (und den Adressdaten der Paketkastennutzer) für einen gewählten Bezirk erfolgt. Die Sendungsdaten (Solldaten) werden ebenfalls von der dezentralen Einheit im Rahmen der Betankung an den Handscanner übergeben.

Die Zuordnung der Handscanner zu einem Bezirk erfolgt dynamisch und der Bezirksschneidung nachgelagert.

Der obige Prozess lässt sich wie folgt zusammenfassen:

1. Zustellbezirke definieren (beispielsweise primär anhand der Zustell/Abholadressen von Sendungen, dem Sendungsaufkommen und dem vorhandenen Zustellpersonal)

2. Stammdaten der den Zustellbezirken zugeordneten Paketkästen (und Adressdaten der Paketkastennutzer) auf die dezentralen Einheiten verteilen

3. Zusteller 70 mit dem Handscanner 68 an der dezentralen Einheit anmelden

4. Zusteller 70 holt Pakete für seinen Bezirk ab

5. Zusteller 70 liefert die Pakete für die Paketkästen 69 in seinem Bezirk

Falls die Zugangsberechtigung für einen Handscanner 68 erstellt wird, ist als Gültigkeitsperiode beispielsweise 1 Tag vorgesehen. Darüber hinaus ist beispielsweise ein Parameter vorgesehen, der die maximale Anzahl der Benutzungen dieser Zugangsberechtigung limitiert.

Zugangsberechtigungen für Handscanner

Der Schlüsselserver 60 generiert Zugangsberechtigungen B für jedes Schloss (eines Paketkastens 69) zusammen mit jeweils entsprechendem Validierungsmerkmal V. Jeder Zusteller 70 soll Zugangsberechtigungen B für diejenigen Paketkasten 69 (d.h. ihre Schlösser) zusammen mit den Validierungsmerkmalen V bekommen, an die er an dem Tag zustellen soll, also diejenigen seines Zustellbezirks.

Fig. 8 gibt einen Überblick über einen beispielhaften Prozess 800 der Zustellung mit Zugangsberechtigungen. Der Ablauf ist wie folgt:

Der Schlüsselserver 60 erzeugt im Schritt 801 z.B. jeden Tag die Zugangsberechtigungen $B_i$ (wobei der Index i=1..N das jeweilige Schloss von insgesamt N Schlössern bezeichnet), die jeweils mit entsprechendem Schloss-Schlüssel $S_{1,i}$ (der wiederum mit einem im Schloss gespeicherten Schlüssel $S_{2,i}$ ein symmetrisches od. asymmetrisches Schlüsselpaar bildet) validiert sind. Dafür werden Paare $(B_i,V_i)$ berechnet, wobei $B_i$ eine Zugangsberechtigung und $V_i$ die bereits beschriebene zugehörige erste Prüfinformation ist, die unter Verwendung des Schlüssels $S_{1,i}$ erzeugt wird. Darüber hinaus erzeugt der Schlüsselserver z.B. einen Geräteschlüssel $H_4$ (der mit einem weiteren Schlüssel $H_3$ ein symmetrisches od. asymmetrisches Schlüsselpaar bildet), mit dem sich ein Handscanner 68 gegenüber einem Schloss eines Paketkastens 69 authentisieren kann, und verschlüsselt diesen (und beispielsweise ein oder mehrere weitere Parameter, z.B. die KeyID) mit dem jeweiligen Schlossschlüssel $S_{1,i}$, um ein Autorisierungsmerkmal $A_i$ zu erzeugen.

Alle Zugangsberechtigungen werden im Schritt 802 z.B. täglich (beispielsweise entsprechend der Erzeugungsfrequenz des Schlüsselservers 60) vom Schlüsselserver 60 an den Bereitstellungsserver 66 übertragen. Übertragen werden pro Schloss insbesondere die folgenden Stammdaten: Zugangsberechtigung $B_i$, Validierung $V_i$, und Autorisierungsmerkmal $A_i$. Optional kann darin auch die LockID enthalten sein. Im Bereitstellungsserver können die Stammdaten mit weiteren Informationen angereichert werden, beispielsweise der MAC-Adresse des Schlosses, und/oder einer Adressinformation des Paketkastens, und/oder Adressinformationen der Nutzer der jeweiligen Paketkästen, um nur ein paar Beispiele zu nennen. Derartige Informationen können aber auch bereits am Schlüsselserver 60 den Stammdaten hzugefügt worden sein. Die MAC-Adresse ist wie bereits erwähnt die Medium Access Control Adresse des Schlosses, über die das Schloss beispielsweise ohne die Notwendigkeit des Bluetooth-Pairings direkt angesprochen werden kann. In Fig. 8 ist in Schritt 802 aus Gründen der Übersichtlichkeit lediglich die Übertragung der Vielzahl von Stammdatensätzen $\{B_i, V_i, A_i\}$ und des Schlüssels $H_3$ zum Bereitstellungsserver dargestellt

In Schritt 803 findet im Zuordnungsserver 67 die Bezirksschneidung statt.

Im Schritt 804 bekommt jede der L dezentralen Einheiten 71-1.. 71-L alle Zugangsberechtigungen für die an diesem Tag ihr zugeordneten Bezirke. Dies ist in Schritt 804 symbolisch durch die Notation $\{B_i, V_i, A_i\}_l$ dargestellt, wobei der Index l von 1 bis L läuft und die Notation $\{B_i, V_i, A_i\}_l$ die Stammdaten aller Paketkästen im Bezirk l bezeichnet (wobei wiederum aus Gründen der Übersichtlichkeit die zusätzlichen Stammdatenelemente LockID, Adressinformation und MAC-Adresse nicht dargestellt sind und angenommen wird, dass jede dezentrale Einheit nur die Stammdaten der Paketkästen eines jeweiligen Zustellbezirks erhält, was allerdings nicht zwingend ist). Eine dezentrale Einheit "betankt" dann einen (oder auch mehrere) Handscanner innerhalb eines Zustellbezirks I mit den Stammdaten $\{B_i, V_i, A_i\}_I$ der Paketkästen dieses Zustellbezirks.

Ein Handscanner 68-2 (hier handelt es sich beispielhaft um einen Handscanner, der der zweiten dezentralen Einheit 71-2 und deren Zustellbezirk I=2 zugeordnet ist) erhält im Rahmen der Betankung die Stammdaten $\{B_j, V_i, A_i\}_2$ der Paketkästen für den Bezirk I=2, dem er zugeteilt wurde (Schritt 805). Dies kann beispielsweise über drahtgebundene (z.B. über eine Dockingstation, die mit der dezentralen Einheit 71-2 verbunden ist und in die der Handscanner 68-2 gestellt wird) und/oder drahtlose Kommunikation (z.B. über WLAN oder GRPS) erfolgen.

In Schritt 806 stellt der Handscanner 68-2 - zur Öffnung eines beispielhaft herausgegriffenen Paketkastens 69-k seines Bezirks - mit Hilfe der MAC Adresse des Schlosses dieses Paketkastens 69-k eine Bluetooth Verbindung mit dem Schloss her und überträgt die Zugangsberechtigung $B_k$, die Validierungsinformation $V_k$, das Autorisierungsmerkmal $A_k$ und weitere Validierungsinformation wie zu Fig. 4 beschrieben an das Schloss (Schritt 806).

In Schritt 807 validiert das Schloss die Berechtigung anhand von $V_k$ und $S_{2,k}$ (analog zur Beschreibung der Fig. 4) und öffnet sich bei korrekter Berechtigung. In Schritt 808 wird schließlich eine entsprechende Status-Meldung und beispielsweise der Batterie-Status zurück an dem Handscanner geschickt.

Wie aus den obigen Erläuterungen ersichtlich ist, erfolgt die Authentifizierung des Handscanners 68-2 gegenüber dem Schloss des Paketkastens 69-k mithilfe des Schlüssels $H_3$. Dem Handscanner 68-2 wird kein individueller Geräteschlüssel $H_3$ zugeordnet. Stattdessen wird ein Gruppenschlüssel $H_3$ erzeugt, wobei alle Handscanner 68 die diesbezügliche Gruppe bilden und den gleichen Schlüssel $H_3$ verwenden. Im Rahmen der Betankung wird der Gruppenschlüssel $H_3$ auf einen Handscanner übertragen. Es wird dann pro Schloss eine Zugangsberechtigung für diesen "Gruppenschlüssel" $H_3$ ausgestellt, die effektiv für alle Handscanner gültig ist. Der Schlüssel $H_3$ wird beispielsweise vom Schlüsselserver 60 an den Bereitstellungsserver (Schritt 802) und dann an alle dezentralen Einheiten (Schritt 804) übertragen, bevorzugt über sichere Verbindungen, um dessen Ausspähung zu verhindern. Zum Beispiel erfolgt die Übertragung vom Schlüsselserver 60 zum Bereitstellungsserver 66 und/oder zur dezentralen Einheit 71-2 verschlüsselt mittels SSL/TLS. Gleichfalls sollte die Verbindung zwischen dezentraler Einheit 71-2 und Handscanner 68-2 bei der Betankung entsprechend abgesichert werden.

Sperrung von Handscannern

Die Zugangsberechtigungen, mit denen die Handscanner 68 operieren, werden jeweils beispielsweise für einen Tag neu ausgestellt. Ist es notwendig, einen Handscanner 68 zu sperren, beispielsweise nach Verlust des Geräts, muss eine Zurückweisungsliste für jedes Schloss erstellt werden, auf das der Handscanner 68 Zugriff hatte. Die Zurückweisungsliste müsste dann mittels irgendeines "Token" zu den entsprechenden Schlössern verbracht und eingespielt werden, was allerdings einen erheblichen Aufwand bedeutet.

Dieses Problem wird adäquat dadurch gelöst, dass die Zugangsberechtigungen B für ein möglichst enges Zeitfenster ausgestellt werden (z.B. zeitliche Gültigkeit lediglich 1 Tag) und/oder für möglichst wenig Benutzungen (z.B. maximal 3 Benutzungen pro Tag). Zusätzlich oder alternativ kann die Handscanner-Software die Nutzung der Zugangsberechtigungen möglichst einschränken, beispielsweise, indem die Öffnung eines Schlosses eines Paketkastens 69 nur dann angeboten wird, wenn auch eine entsprechende Sendung für diesen Paketkasten 69 vorliegt (dies kann beispielsweise durch einen Abgleich der Adressdaten (z.B. Postleitzahl, Straße und Hausnummer, enthalten in codierter Form im sogenannten "Leitcode") von Sendungen mit den in den Stammdaten enthaltenen Adressdaten (die beispielsweise in ähnlicher Form codiert sind wie im Falle des Leitcodes) von Paketkästen 69 und/oder den Adressen (die beispielsweise in ähnlicher Form codiert sind wie im Falle des Leitcodes) der Nutzer 63 von Paketkästen 69 (über die dann wiederum eindeutig ein Paketkasten 69 zugeordnet werden kann) erzielt werden. Diese Adressen werden insbesondere zu diesem Zweck auf dem Handscanner übertragen). Es sollte insbesondere auch verhindert werden, dass ein "gesperrter" Handscanner, insbesondere nach Verlust, an nachfolgenden Tagen an eine dezentrale Einheit angeschlossen und betankt wird.

Durch diese Vorgehensweise ist eine dedizierte Sperrung von Handscannern 68 über Zurückweisungslisten nicht zwingend notwendig. Insbesondere bleiben dann die Zurückweisungslisten, die zur Sperrung anderer verlorener ILA- und/oder GLA-Token dienen (z.B. Mobiltelefone 61, Zustellertags 74 und Nutzertags 62), kleiner, was vorteilhaft ist, da diese durch das Schloss gespeichert werden müssen. Die Vorteile, die Zurückweisungslisten für die Verwendung von Mobiltelefonen 61 und ggf. NFC-Tags 74, 62 haben (auf denen die Zugangsberechtigungen eine längere zeitliche Gültigkeit aufweisen als die auf den Handscannern 68 vorhandenen Zugangsberechtigungen), bestehen bei den Handscannern bei der oben beschriebenen Vorgehensweise nicht.

Übertragung der Zurückweisungslisten

Wie aus Fig. 11 ersichtlich ist, muss sich der Handscanner 68 bei der Übertragung einer Zurückweisungsliste (Schritt 1103) nicht gegenüber dem Schloss authentifizieren. Entsprechend bestehen die bei der Verwendung von Zugangsberechtigungen auftretenden Restriktionen (insbesondere hinsichtlich der Authentisierung) nicht. Die Zurückweisungslisten können beispielsweise pro Schloss als Stammdaten im Bereitstellungsserver 66 angereichert und bei der Betankung auf die Handscanner 68 übertragen werden. Dies führt ggf. dazu, dass das Öffnen eines Schlosses länger dauert, da gemäß Fig. 11 die Übermittlung der Zurückweisungsliste an das Schloss (Schritt 1103) vor der Berechtigungsprüfung stattfindet (Schritt 1105). Da zudem der Schlüsselserver 60 keine Informationen über die erfolgreiche Übermittlung einer Zurückweisungsliste zu einem Schloss hat, würde bei jedem Zugriff auf das Schloss die aktuelle Zurückweisungsliste verteilt und übertragen werden.

Vorteilhaft erscheint folgende Vorgehensweise: Sperrungen erfolgen durch einen Hauptbenutzer, einen Mitbenutzer oder in deren Auftrag. Die daraufhin vom Schlüsselserver 60 erzeugten Zurückweisungslisten werden dann durch das entsprechende Mobiltelefon an das Schloss des Paketkastens 69 übertragen. Der Handscanner 68 meldet über das Bereitstellungsserver 66 an den Schlüsselserver 60 die erfolgreiche bzw. nicht erfolgreiche Übertragung der Zurückweisungsliste an das Schloss.

Schlüssel für Zustellkräfte mit NFC-Token

Wie in Abschnitt beschrieben, besteht ein Unterschied zwischen Token des ILA- (Handscanner 68, Mobiltelefon 61, NFC-Token 62 von Paketkastennutzern 63) und des GLA-Typs (NFC-Token 74 von Zustellkräften 70). Für diese Unterscheidung gibt es unterschiedliche Gründe, die nachfolgend genannt werden:

1. NFC-Token können nicht ohne gewissen Aufwand mit Zugangsberechtigungen ausgestattet werden

2. NFC-Token von Zustellkräften sollten in der Lage sein, alle Schlösser in einem bestimmten insbesondere statischen Bereich zu öffnen.

3. NFC-Token sind nicht in der Lage, viele Zugangsberechtigungen zu speichern.

Anforderung (2) verdeutlicht, dass Zustellkräfte 70 mit einem NFC-Token 74 ausgestattet sein sollten, das in einem bestimmten Bereich gültig ist. Hierzu ist auf dem NFC-Token 74 ein Gruppenschlüssel $S_{T1}$ hinterlegt, der eine Gruppe von Schlössern (und damit Paketkästen 69) öffnen kann. Wie sich aus Anforderung (3) ergibt, ist es nicht möglich, Zustellkräfte 70 mit individuellen Zugangsberechtigungen für alle Schlösser in einem bestimmten Bereich auszustatten.

Aus diesem Grund ist das Schloss mit zwei oder evtl. mehr (symmetrischen oder asymmetrischen) Schlüsseln ausgestattet: Ein Schlüssel $S_2$ ("Individualschlüssel", mit korrespondierendem symmetrischen oder asymmetrischen Schlüssel $S_1$), um mit ILA-Token zu interagieren, und ein oder mehre Schlüssel $S_{T2}$ ("Gruppenschlüssel", mit korrespondierendem symmetrischen oder asymmetrischen Schlüssel $S_{T1}$) für Operationen mit den GLA-Token der Zustellkräfte 70. Der Hauptunterschied zwischen diesen Schlüsseln ist, das der erstgenannte Schlüssel $S_2$ eindeutig für jedes Schloss ist und der weitere Schlüssel $S_{T2}$ von mehreren Schlössern geteilt wird.

Während der eindeutige Schlüssel $S_2$ des Schlosses während des Produktionsprozesses aufgebracht - und insbesondere unveränderbar ist - wird, kann der Gruppenschlüssel $S_{T2}$ während der Betriebszeit des Schlosses dynamisch geändert werden (z.B. von einem Handscanner 68).

Nachfolgend werden die austauschbaren Schlüssel $S_{T2}$ für GLA-Token beschrieben.

Der Schlüsselserver 60 erzeugt eine Zugangsberechtigung und versieht diese mit Validierungsinformation gemäß den korrespondierenden Gruppenschlüsseln $S_{T1}$ eines jeweiligen Auslieferungsbereichs. Die Geräteschlüssel werden zusammen mit einer Zugangsberechtigung auf den NFC-Token der Zustellkräfte aufgebracht.

Dies ist schematisch in der Fig. 9 dargestellt Hier werden die NFC-Token (M Stück) 74-1 ... 74-M an jeweilige Zustellkräfte verteilt (z.B. über einen Server der Tokenproduktion 73), um Schlösser in N Bereichen (Bereich 1 ... Bereich N) öffnen zu können. Entsprechend werden über den Server der Schlossproduktion 72 (oder später mittels der Updatefunktion für Gruppenschlüssel) die Gruppenschlüssel $S_{T2,1}$ ..$S_{T2,N}$ in die Schlösser der Paketkästen der jeweiligen Bereiche 1..N eingespeichert, also Gruppenschlüssel $S_{T2,1}$ in die Schlösser der Paketkästen des Bereichs 1 etc..

Angenommen, ein NFC-Token i benötigt Zugriff auf alle Schlösser in einem Auslieferungsbereich j. In diesem Fall benötigt das Token i folgende Informationen (Daten): Zugangsberechtigungen $B_j$ ; Validierungsmerkmal $V_i$ des Auslieferungsbereichs j (gebildet durch kyrptographische Operationen über $B_j$ unter Verwendung des Gruppenschlüssels $S_{T1,j}$); Authentifizierungswert $A_j$, der wiederum zumindest eine mit $S_{T1,j}$ verschlüsselte Kombination zumindest des Schlüssels $H_{4,i}$ und der KeyID$_j$ umfasst und beispielsweise zusätzlich die LockID$_j$ umfasst, die die Gruppenkennung des Bereichs j codiert Nun gilt, dass in einem Auslieferungsbereich j (j von 1 bis N), jede Zustellkraft, die Zugangsberechtigung für den Bereich j hat, mit ihrem NFC-Token jedes Schloss öffnen kann.

Auslieferungsbereiche sind statischer Natur. Hierbei muss Anforderung (1) beachtet werden, die besagt, dass es technisch und ökonomisch mühsam ist, die Zugangsberechtigungen zu oft zu verändern (aktualisieren). Auf der anderen Seite, sollten keine Zugangsberechtigungen verwendet werden, die für immer gültig sind, was ein erhöhtes Sicherheitsrisiko darstellt. Darum ist es sinnvoll, Zugangsberechtigungen für einen erweiterten, aber begrenzten Zeitraum, z.B. einige Monate oder Jahre, auszustellen. Nach dem Ablauf der Gültigkeitsperiode müssen alle Token umprogrammiert werden, um neue Zugangsberechtigungen $B_j$ zu erhalten.

Gruppenschlüssel

Im System der Fig. 3 kann es beispielsweise vorgesehen sein, dass Briefzusteller die NFC-Tags 74 zum Öffnen von Paketkästen verwenden (beispielsweise zur Zustellung großformatiger Briefe), und dass die NFC-Tags 74 zumindest zeitweise (beispielsweise alternativ zu Handscannern 68) auch von Paketzustellern genutzt werden. Dabei ist zu beachten, dass Zustellbereiche für Zusteller in ZB (Regelzustellung, Zustellbasen) und ZSPL (Verbundzustellung, also Zustellung von Briefen und Paketen) sich überschneiden können.

Es besteht also die Möglichkeit, dass ein Paketkasten einmal mit einem Tag geöffnet wird, der zu einem bestimmten Zustellbereich "gehört", und einmal mit einem anderen Tag geöffnet wird, der zu einem anderem Zustellbereich gehört.

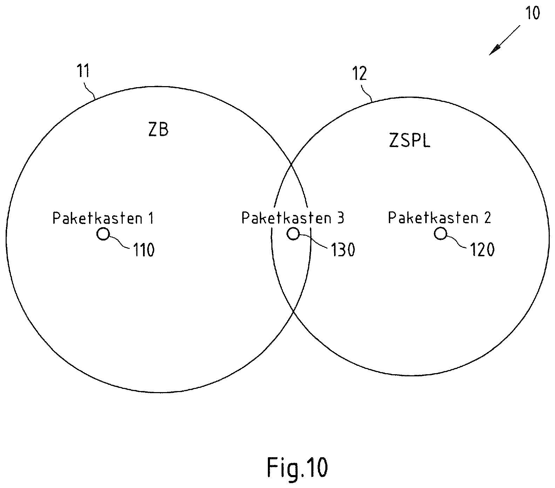

Dies ist schematisch in Fig. 10 dargestellt. Ein erster Paketkasten 110 ist dabei lediglich einem ersten Zustellbezirk 11 (ZB) zugeordnet, und in zweiter Paketkasten 120 einem zweiten Zustellbezirk 12 (ZSPL) zugeordnet ist, während ein dritter Paketkasten 130 sowohl dem ersten Zustellbezirk 11 als auch dem zweiten Zustellbezirk 12 zugeordnet ist

Dieses Problem kann dadurch gelöst werden, dass solche Paketkästen, die sich in einem Überschneidungsgebiet befinden (z.B. Paketkasten 130 in Fig. 10), zwei Gruppenschlüssel erhalten und dann beiden Tags Zugang gewähren können (evtl. auch mehr als zwei, allerdings beispielsweise maximal fünf).

Jeder Zustellbereich (Gruppe) hat eine GroupID (Gruppenkennung). Die Gruppenschlüssel $S_{T2}$ werden dann im Schloss zusammen mit entsprechenden GroupIDs gespeichert:

$$(\text{GroupID}_1, S_{T2,1}), (\text{GroupID}_2, S_{T2,2}), ...$$

Wenn die Zustellbasis Bereich ZB 11 eine GroupID GroupZB hat und die ZSPL 12 eine GroupID GroupZSPL hat, und $S_{T2,ZB}$ und $S_{T2,ZSPL}$ die entsprechende Gruppenschlüssel sind, dann hat das Schloss des Paketkastens 110 das Tupel (GroupZB, $S_{T2,ZB}$) gespeichert, das Schloss des Paketkastens 120 das Tupel (GroupZSPL, $S_{T2,ZSPL}$) gespeichert und das Schloss des Paketkastens 130 beide Tupel (GroupZB, $S_{T2,ZB}$) und (GroupZSPL, $S_{T2,ZSPL}$). Jedes der Schlösser weist zusätzlich auch einen jeweiligen individuellen Schlüssel $S_{2,i}$ auf, wie oben bereits beschrieben wurde.

Während der Authentisierungsphase überträgt ein Token die LockID, die sich auch in der Zugangsberechtigung für das Schloss befindet. Die LockID gibt dem Schloss eine Anweisung dazu (z.B. durch eine Codierung vorbestimmter Bitstellen der LockID), welcher Schlüssel für die Entschlüsselung und Validierung benutzt werden soll. Entweder weist die LockID auf den individuellen Schlüssel $S_2$ des Schlosses oder auf einen von potentiell mehreren Gruppenschlüsseln $S_{T2}$ hin, indem die GroupID entsprechend in die LockID kodiert ist.

In dem obigen Beispiel kann ein Zusteller von ZB 11 das Schloss des Paketkastens 130 öffnen, indem er GroupZB als einen Teil der LockID übermittelt. Genauso kann ein Zusteller von ZSPL 12 das Schloss des Paketkastens 130 öffnen, indem er GroupZSPL als einen Teil der LockID übermittelt. Das Schloss hat beide Schlüssel und kann entsprechend reagieren.

Falls ein GLA-Token, z.B. von dem Bereich ZB 11, verloren geht, müssen nur die Schlösser der Paketkästen im Bereich ZB 11, insbesondere die Paketkästen 110 und 130, ein entsprechendes Zurückweisungslistenupdate bekommen. Die Schlösser der Paketkästen von ZSPL 12 müssen dagegen nicht mit einer neuen Zurückweisungsliste versehen werden.

Schlüssel H und Zugangsberechtigungen des NFC Tokens des Eigentümers

Es wurde bereits erläutert, wie der Schlüsselserver 60 die Zugangsberechtigungen und Schlüssel für die Handscanner 68 erzeugt und wie diese Zugangsberechtigungen auf die Handscanner 68 übertragen werden. Der Schlüsselserver 60 erzeugt auch die Schlüssel und Zugangsberechtigungen für den Nutzer 63 des Paketkastens, insbesondere dessen Eigentümer. Der Nutzer 63 des Paketkastens hat beispielsweise immer ein NFC-Token 62 zur Verfügung. Beispielsweise erhält der Nutzer 63 bei der Bestellung zwei NFC-Token 62 für seinen Paketkasten 69.

Die Öffnung des Schlosses des Paketkastens 69 mit einem NFC-Token 62 verläuft dann wie folgt. Der Schlüsselserver 60 erzeugt die Zugangsberechtigung B für das NFC Token 62, die jeweils mit entsprechendem (schlossspezifischem) Schlüssel $S_1$ validiert sind. Der Schlüssel $S_1$ bildet mit einem im Schloss gespeicherten Schlüssel $S_2$ ein symmetrisches oder asymmetrisches Schlüsselpaar. Es wird ein Paar (B,V) berechnet wie bereits mehrfach beschrieben, wobei B eine Zugangsberechtigung und V beispielsweise einen MAC oder eine digitale Signatur für die Berechtigung B unter Verwendung des Schlüssels $S_1$ darstellt. Es wird auch ein Authentisierungsmerkmal A berechnet, das eine mit S1 verschlüsselte Kombination von zumindest dem Schlüssel H4 und der KeyID und beispielsweise zusätzlich die LockID umfasst, wobei $H_4$ mit einem Schlüssel $H_3$ ein symmetrisches oder asymmetrisches Schlüsselpaar bildet und der Schlüssel $H_3$ im Token gespeichert wird. KeyID ist eine Kennung der Zugangsberechtigung und LockID kodiert die individuelle Kennung des Schlosses. Die Berechtigung B und die Merkmale V und A sowie der Schlüssel $H_3$ werden zu einer Programmierungsstelle übergeben.Die Programmierungsstelle schreibt die Daten B, V, A, $H_3$ auf den/die NFC-Token 62 des Nutzers 63. Zur Öffnung des Paketkastens 69 stellt das NFC-Token 62 eine Verbindung mit dem Schloss des Paketkastens 69 her, autorisiert sich gegenüber dem Schloss und überträgt die Zugangsberechtigung und Validierungsmerkmale (vgl. die Beschreibung zu Fig. 5).Das Schloss validiert die Berechtigung mithilfe der Validierungsmerkmale und öffnet bei ausreichender Berechtigung.

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zur Zugangskontrolle, durchgeführt durch eine Zugangskontrollvorrichtung (4), das Verfahren umfassend

- Erhalten von an die Zugangskontrollvorrichtung (4) kommunizierter Zugangsberechtigungsinformation (B, V), die zumindest ein oder mehrere Zugangsberechtigungsparameter (B) und erste Prüfinformation (V) umfasst,
- erstes Prüfen, unter Verwendung zumindest der kommunizierten Zugangsberechtigungsparameter (B), der kommunizierten ersten Prüfinformation (V) und eines in der Zugangskontrollvorrichtung (4) gespeicherten zweiten Schlüssels ($S_2$, $S_{T2}$) eines symmetrischen oder asymmetrischen Schlüsselpaars, ob die kommunizierte erste Prüfinformation (V) durch Durchführung von kryptographischen Operationen über den kommunizierten Zugangsberechtigungsparametern (B) entsprechende Zugangsberechtigungsparameter (B) unter Verwendung zumindest eines ersten Schlüssels ($S_1$, $S_{T1}$) des Schlüsselpaars erzeugt wurde,
- Entscheiden, ob Zugang gewährt werden darf, wobei notwendige Bedingungen zur Gewährung des Zugangs sind, dass das erste Prüfen ein positives Ergebnis liefert und festgestellt wird, dass zumindest eine vordefinierte Menge der kommunizierten Zugangsberechtigungsparameter (B) hinsichtlich zumindest im Zeitpunkt des ersten Prüfens in der Zugangskontrollvorrichtung (4) vorhandener jeweiliger Bezugsinformationen jeweils zum Zugang berechtigen,
wobei die Zugangskontrollvorrichtung (4) eine Zugangskontrollvorrichtung (4) aus einer Vielzahl von Zugangskontrollvorrichtungen darstellt, wobei in der Zugangskontrollvorrichtung (4) ein zweiter Schlüssel ($S_2$) eines symmetrischen oder asymmetrischen Individualschlüsselpaars gespeichert ist, der in keiner der anderen Zugangskontrollvorrichtungen der Vielzahl von Zugangskontrollvorrichtungen gespeichert ist, und

- wobei der beim ersten Prüfen eingesetzte zweite Schlüssel ($S_2$, $S_{T2}$) des Schlüsselpaars der zweite Schlüssel ($S_2$) des Individualschlüsselpaars ist, oder
- wobei in der Zugangskontrollvorrichtung (4) zusätzlich zu dem zweiten Schlüssel ($S_2$) des Individualschlüsselpaars ein von diesem verschiedener zweiter Schlüssel ($S_{T2}$) eines symmetrischen oder asymmetrischen Gruppenschlüsselpaars gespeichert ist, der in allen Zugangskontrollvorrichtungen einer die Zugangskontrollvorrichtung (4) umfassenden Gruppe von Zugangskontrollvorrichtungen der Vielzahl von Zugangskontrollvorrichtungen gespeichert ist, und der beim ersten Prüfen eingesetzte zweite Schlüssel ($S_2$, $S_{T2}$) des Schlüsselpaars entweder der zweite Schlüssel ($S_2$) des Individualschlüsselpaars oder der zweite Schlüssel ($S_{T2}$) des Gruppenschlüsselpaars ist, und wobei das Verfahren ferner umfasst:

- Erhalten von an die Zugangskontrollvorrichtung (4) kommunizierter Gruppenschlüsselinformation (W), die zumindest einen mit dem ersten Schlüssel ($S_1$) des Individualschlüsselpaars verschlüsselten zweiten Schlüssel ($S_{T2}$) eines neuen symmetrischen oder asymmetrischen Gruppenschlüsselpaars für die gleiche oder eine zumindest teilweise verschiedene Gruppe von Zugangskontrollvorrichtungen der Vielzahl von Zugangskontrollvorrichtungen umfasst,
- Entschlüsseln des kommunizierten verschlüsselten zweiten Schlüssels ($S_{T2}$) des neuen Gruppenschlüsselpaars mit dem zweiten Schlüssels ($S_2$) des Individualschlüsselpaars, und
- Speichern des durch das Entschlüsseln erhaltenen zweiten Schlüssels ($S_{T2}$) des neuen Gruppenschlüsselpaars in der Zugangskontrollvorrichtung, so dass der beim ersten Prüfen eingesetzte zweite Schlüssel ($S_2$, $S_{T2}$) des Schlüsselpaars zumindest entweder der zweite Schlüssel ($S_2$) des Individualschlüsselpaars oder der zweite Schlüssel ($S_{T2}$) des neuen Gruppenschlüsselpaars ist.

2. Verfahren nach Anspruch 1, wobei in der Zugangskontrollvorrichtung (4) der zweite Schlüssel ($S_{T2}$) des Gruppenschlüsselpaars gespeichert ist und der beim ersten Prüfen eingesetzte zweite Schlüssel ($S_2$, $S_{T2}$) des Schlüsselpaars entweder der zweite Schlüssel ($S_2$) des Individualschlüsselpaars oder der zweite Schlüssel ($S_{T2}$) des Gruppenschlüsselpaars ist, wobei der zweite Schlüssel ($S_2$) des Individualschlüsselpaars in der Zugangskontrollvorrichtung (4) nicht änderbar, nicht löschbar oder nicht gegen einen anderen Schlüssel austauschbar ist, und wobei der zweite Schlüssel ($S_{T2}$) des Gruppenschlüsselpaars änderbar oder löschbar oder gegen einen anderen Schlüssel austauschbar ist.

3. Verfahren nach einem der Ansprüche 1-2, ferner umfassend:

- Erhalten von an die Zugangskontrollvorrichtung (4) kommunizierter zweiter Prüfinformation ($V_W$), und
- Speichern des durch das Entschlüsseln erhaltenen zweiten Schlüssels ($S_{T2}$) des neuen Gruppenschlüsselpaars in der Zugangskontrollvorrichtung (4) nur unter der Voraussetzung, dass bei einer zumindest auf der kommunizierten zweiten Prüfinformation ($V_W$), dem zweiten Schlüssel ($S_2$) des Individualschlüsselpaars und der kommunizierten Gruppenschlüsselinformation (W) beruhenden Prüfung festgestellt wird, dass die kommunizierte zweite Prüfinformation ($V_W$) durch Durchführung von kryptographischen Operationen über die der kommunizierten Gruppenschlüsselinformation (W) entsprechende Gruppenschlüsselinformation unter Verwendung zumindest des ersten Schlüssels ($S_1$) des Individualschlüsselpaars erzeugt wurde.

4. Verfahren nach einem der Ansprüche 1-3, wobei die Gruppenschlüsselinformation zusätzlich einen Zähler (update_counter) umfasst, der mit jedem neuen Gruppenschlüsselpaar erhöht wird, und wobei der durch das Entschlüsseln erhaltene zweite Schlüssel ($S_{T2}$) des neuen Gruppenschlüsselpaars in der Zugangskontrollvorrichtung (4) nur unter der zusätzlichen Voraussetzung gespeichert wird, dass ein Wert eines von der Gruppenschlüsselinformation umfassten Zählers (update_counter) größer ist als ein Wert eines in der Zugangskontrollvorrichtung (4) vorgesehenen Zählers, und wobei bei oder nach der Speicherung des zweiten Schlüssels ($S_{T2}$) des neuen Gruppenschlüsselpaars in der Zugangskontrollvorrichtung (4) der Wert des Zählers in der Zugangskontrollvorrichtung (4) auf den Wert des von der Gruppenschlüsselinformation umfassten Zählers (update_counter) aktualisiert wird.

5. Verfahren nach einem der Ansprüche 3-4, wobei die Gruppenschlüsselinformation zusätzlich eine Individualkennung (LockID) der Zugangskontrollvorrichtung (4) umfasst, und wobei der durch das Entschlüsseln erhaltene zweite Schlüssel ($S_{T2}$) des neuen Gruppenschlüsselpaars in der Zugangskontrollvorrichtung (4) nur unter der zusätzlichen Voraussetzung gespeichert wird, dass eine in der Zugangskontrollvorrichtung (4) abgespeicherte Individualkennung (LockID) der Zugangskontrollvorrichtung (4) mit der in der Gruppenschlüsselinformation umfassten Individualkennung (LockID) übereinstimmt.

6. Verfahren nach einem der Ansprüche 1-5, wobei die Gruppenschlüsselinformation zusätzlich eine mit dem neuen Gruppenschlüsselpaar assoziierte Gruppenkennung (GroupID) umfasst, die allen Zugangskontrollvorrichtungen der Gruppe von Zugangskontrollvorrichtungen gemein ist, für die das neue Gruppenschlüsselpaar bestimmt ist, und wobei die durch das Entschlüsseln erhaltene Gruppenkennung (GroupID) in der Zugangskontrollvorrichtung (4) gespeichert wird.

7. Verfahren nach einem der Ansprüche 1-6, wobei einer der kommunizierten Zugangsberechtigungsparameter eine Kennung (LockID) für lediglich eine Zugangskontrollvorrichtung (4) oder eine Gruppe von Zugangskontrollvorrichtungen ist, und wobei festgestellt wird, dass die Kennung zum Zugang berechtigt, wenn die Kennung (LockID) mit einer in der Zugangskontrollvorrichtung (4) gespeicherten Individualkennung (LockID) der Zugangskontrollvorrichtung (4) und/oder einer Gruppenkennung (GroupID) für eine Gruppe von Zugangskontrollvorrichtungen, der die Zugangskontrollvorrichtung (4) angehört, übereinstimmt.

**8.** Verfahren nach einem der Ansprüche 1-7, wobei in der Zugangskontrollvorrichtung (4) der zweite Schlüssel ($S_{T2}$) des Gruppenschlüsselpaars gespeichert ist und der beim ersten Prüfen eingesetzte zweite Schlüssel ($S_2$, $S_{T2}$) des Schlüsselpaars entweder der zweite Schlüssel ($S_2$) des Individualschlüsselpaars oder der zweite Schlüssel ($S_{T2}$) des Gruppenschlüsselpaars ist, wobei einer der kommunizierten Zugangsberechtigungsparameter eine Kennung (LockID) für lediglich eine Zugangskontrollvorrichtung (4) oder für eine Gruppe von Zugangskontrollvorrichtungen ist, wobei festgestellt wird, dass die Kennung (LockID) zum Zugang berechtigt, wenn die Kennung mit einer in der Zugangskontrollvorrichtung (4) gespeicherten Individualkennung (LockID) der Zugangskontrollvorrichtung (4) und/oder einer Gruppenkennung (GroupID) für eine Gruppe von Zugangskontrollvorrichtungen, der die Zugangskontrollvorrichtung (4) angehört, übereinstimmt, wobei die erste Prüfinformation (V) von kommunizierter Zugangsberechtigungsinformation, die eine Kennung (LockID) für lediglich eine Zugangskontrollvorrichtung (4) aufweist, durch Durchführung von kryptographischen Operationen über die Zugangsberechtigungsparameter (B) unter Verwendung zumindest eines ersten Schlüssels (S) des Individualschlüsselpaars erzeugt wird, und wobei die erste Prüfinformation (V) von kommunizierter Zugangsberechtigungsinformation, die eine Kennung (LockID) für eine Gruppe von Zugangskontrollvorrichtungen aufweist, durch Durchführung von kryptographischen Operationen über die Zugangsberechtigungsparameter unter Verwendung zumindest eines ersten Schlüssels ($S_T$) des Gruppenschlüsselpaars erzeugt wird.

**9.** Verfahren nach Anspruch 8, wobei anhand der Kennung (LockID), insbesondere anhand eines vordefinierten Formats der Kennung, in der Zugangskontrollvorrichtung (4) erkannt werden kann, ob es sich um eine Kennung für lediglich eine Zugangskontrollvorrichtung (4) oder um eine Kennung für eine Gruppe von Zugangskontrollvorrichtungen handelt, so dass für das erste Prüfen jeweils passend entweder der zweite Schlüssel ($S_2$) des Individualschlüsselpaars oder der zweite Schlüssel ($S_{T2}$) des Gruppenschlüsselpaars ausgewählt werden kann.

**10.** Verfahren nach einem der Ansprüche 1-9, ferner umfassend:

- Erhalten von an die Zugangskontrollvorrichtung (4) kommunizierter Information (A), die zumindest eine unter Verwendung zumindest des ersten Schlüssels ($S_1$, $S_T$) des Schlüsselpaars verschlüsselte Kombination eines vierten Schlüssels ($H_4$) und einer Kennung (KeyID) für die Zugangsberechtigungsinformation (B, V) oder für eine Zugangsberechtigungsnachweisvorrichtung (3), die die Zugangsberechtigungsinformation (B, V) an die Zugangskontrollvorrichtung (4) kommuniziert, umfasst, wobei der vierte Schlüssel ($H_4$) bei einer Authentisierung der Zugangskontrollvorrichtung (4) gegenüber einer Zugangsberechtigungsnachweisvorrichtung (3), die die Zugangsberechtigungsinformation (B, V) an die Zugangskontrollvorrichtung (4) kommuniziert, oder bei der Prüfung der Authentizität und/oder Integrität von an die Zugangskontrollvorrichtung (4) kommunizierten Informationen nutzbar ist, und
- Entschlüsseln der verschlüsselten Kombination unter Verwendung zumindest des zweiten Schlüssels ($S_2$, $S_{T2}$) des Schlüsselpaars, um den vierten Schlüssel ($H_4$) und die Kennung (KeyID) zu erhalten, wobei die Kennung (KeyID) zusätzlich einen der kommunizierten Zugangsberechtigungsparameter (B) darstellt, und wobei festgestellt wird, dass die in der kommunizierten Zugangsberechtigungsinformation (B, V) enthaltene Kennung (KeyID) zum Zugang berechtigt,

• wenn die in der kommunizierten Zugangsberechtigungsinformation (B, V) enthaltene Kennung (KeyID) mit der durch das Entschlüsseln der verschlüsselten Information erhaltenen Kennung (KeyID) übereinstimmt, oder
• wenn die in der kommunizierten Zugangsberechtigungsinformation (B, V) enthaltene Kennung (KeyID) mit der durch das Entschlüsseln der verschlüsselten Information erhaltenen Kennung (KeyID) übereinstimmt und die Kennung (KeyID) nicht in einer in der Zugangskontrollvorrichtung (4) gespeicherten Zurückweisungsliste (RL) enthalten ist.

**11.** Verfahren zur Erzeugung von Zugangsberechtigungsinformation (B, V), das Verfahren umfassend

- Erzeugen von erster Prüfinformation (V) durch Durchführung von kryptographischen Operationen über ein oder mehrere Zugangsberechtigungsparameter (B) unter Verwendung zumindest eines ersten Schlüssels ($S_1$, $S_{T1}$) eines symmetrischen oder asymmetrischen Schlüsselpaars,

33

- Erzeugen von Zugangsberechtigungsinformation (B, V), die zumindest die ein oder mehreren Zugangsberechtigungsparameter (B) und die erste Prüfinformation (V) umfasst, und

- Ausgeben der Zugangsberechtigungsinformation (B, V) zur Speicherung auf einer Zugangsberechtigungsnachweisvorrichtung (3), die eingerichtet ist, die Zugangsberechtigungsinformation (B, V) an zumindest eine Zugangskontrollvorrichtung (4) zu kommunizieren um diese in die Lage zu versetzen zu entscheiden, ob aufgrund der kommunizierten Zugangsberechtigungsinformation (B, V) Zugang gewährt werden darf, wobei notwendige Bedingungen zur Gewährung des Zugangs sind, dass ein erstes Prüfen, unter Verwendung zumindest der kommunizierten Zugangsberechtigungsparameter (B), der kommunizierten ersten Prüfinformation (V) und eines in der Zugangskontrollvorrichtung (4) gespeicherten zweiten Schlüssels ($S_2$, $S_{T2}$) des Schlüsselpaars, ob die kommunizierte erste Prüfinformation (V) durch Durchführung von kryptographischen Operationen über den kommunizierten Zugangsberechtigungsparametern (B) entsprechende Zugangsberechtigungsparameter (B) unter Verwendung zumindest des ersten Schlüssels ($S_1$, $S_{T1}$) des Schlüsselpaars erzeugt wurde, ein positives Ergebnis liefert und festgestellt wird, dass zumindest eine vordefinierte Menge der kommunizierten Zugangsberechtigungsparameter (B) hinsichtlich zumindest im Zeitpunkt des ersten Prüfens in der Zugangskontrollvorrichtung (4) vorhandener jeweiliger Bezugsinformationen jeweils zum Zugang berechtigen, wobei die Zugangskontrollvorrichtung (4) eine Zugangskontrollvorrichtung (4) aus einer Vielzahl von Zugangskontrollvorrichtungen darstellt, wobei in der Zugangskontrollvorrichtung (4) ein zweiter Schlüssel ($S_2$) eines symmetrischen oder asymmetrischen Individualschlüsselpaars gespeichert ist, der in keiner der anderen Zugangskontrollvorrichtungen der Vielzahl von Zugangskontrollvorrichtungen gespeichert ist, und

• wobei der beim Erzeugen der ersten Prüfinformation verwendete erste Schlüssel ($S_1$, $S_{T1}$) des Schlüsselpaars ein erster Schlüssel ($S_1$) des Individualschlüsselpaars ist, oder
• wobei in der Zugangskontrollvorrichtung (4) zusätzlich zu dem zweiten Schlüssel ($S_2$) des Individualschlüsselpaars ein von diesem verschiedener zweiter Schlüssel ($S_{T2}$) eines symmetrischen oder asymmetrischen Gruppenschlüsselpaars gespeichert ist, der in allen Zugangskontrollvorrichtungen einer die Zugangskontrollvorrichtung (4) umfassenden Gruppe von Zugangskontrollvorrichtungen der Vielzahl von Zugangskontrollvorrichtungen gespeichert ist, und der beim Erzeugen der ersten Prüfinformation verwendete erste Schlüssel ($S_1$, $S_{T1}$) des Schlüsselpaars entweder ein erster Schlüssel ($S_1$) des Individualschlüsselpaars oder ein erster Schlüssel ($S_{T1}$) des Gruppenschlüsselpaars ist, und wobei das Verfahren ferner umfasst:

- Erzeugen von Gruppenschlüsselinformation (W), die zumindest einen mit dem ersten Schlüssel ($S_1$) des Individualschlüsselpaars verschlüsselten zweiten Schlüssel ($S_{T2}$) eines neuen symmetrischen oder asymmetrischen Gruppenschlüsselpaars für die gleiche oder eine zumindest teilweise verschiedene Gruppe von Zugangskontrollvorrichtungen der Vielzahl von Zugangskontrollvorrichtungen umfasst,
- Ausgeben der Gruppenschlüsselinformation (W) zur Speicherung auf der Zugangsberechtigungsnachweisvorrichtung (3), die eingerichtet ist, die Gruppenschlüsselinformation zumindest an die Zugangskontrollvorrichtung (4) zu kommunizieren um dieser zu ermöglichen, den durch Entschlüsseln des kommunizierten verschlüsselten zweiten Schlüssels ($S_{T2}$) des neuen Gruppenschlüsselpaars unter Verwendung zumindest des zweiten Schlüssels ($S_2$) des Individualschlüsselpaars erhaltbaren zweiten Schlüssels ($S_{T2}$) des neuen Gruppenschlüsselpaars in der Zugangskontrollvorrichtung (4) zu speichern, so dass der beim ersten Prüfen eingesetzte zweite Schlüssel ($S_2$, $S_{T2}$) des Schlüsselpaars entweder der zweite Schlüssel ($S_2$) des Individualschlüsselpaars oder der zweite Schlüssel ($S_{T2}$) des neuen Gruppenschlüsselpaars ist.

12. Computerprogramm, umfassend Programmanweisungen, die einen Prozessor der Zugangskontrollvorrichtung (4) zur Ausführung der Schritte des Verfahrens gemäß einem der Ansprüche 1-10 veranlassen, wenn das Computerprogramm auf dem Prozessor läuft.

13. Computerprogramm, umfassend Programmanweisungen, die einen Prozessor der Zugangsberechtigungserzeugungsvorrichtung (2) zur Ausführung der Schritte des Verfahrens gemäß Anspruch 11 veranlassen, wenn das Computerprogramm auf dem Prozessor läuft.

14. Vorrichtung umfassend jeweilige Mittel zur Ausführung der Schritte des Verfahrens nach einem der Ansprüche 1-10, wobei die Vorrichtung die Zugangskontrollvorrichtung (4) ist.

15. Vorrichtung umfassend jeweilige Mittel zur Ausführung der Schritte des Verfahrens nach Anspruch 11, wobei die Vorrichtung eine Zugangsberechtigungserzeugungsvorrichtung (2) ist.

**Claims**

1. A method for access control, performed by an access control apparatus (4), the method comprising:

   - an obtaining of access authorization information (B, V) communicated to the access control apparatus (4) and comprising at least one or more access authorization parameters (B) and first check information (V);
   - a first checking, using at least the communicated access authorization parameters (B), the communicated first check information (V) and a second key ($S_2$, $S_{T2}$) of a symmetrical or asymmetrical key pair, said second key being stored in the access control apparatus (4), as to whether the communicated first check information (V) was generated by performing cryptographic operations on access authorization parameters (B) corresponding to the communicated access authorization parameters (B) using at least a first key ($S_1$, $S_{T1}$) of the key pair;
   - a deciding whether access is permitted to be granted, wherein necessary conditions for granting access are that the first checking yields a positive result and that it is determined that at least one predefined set of the communicated access authorization parameters (B), in view of respective pieces of reference information present in the access control apparatus (4) at least at the time of the first checking, respectively authorize for access; and wherein the access control apparatus (4) constitutes an access control apparatus (4) from a plurality of access control apparatuses, wherein a second key ($S_2$) of a symmetrical or asymmetrical individual key pair is stored in the access control apparatus (4), said second key being stored only in the access control apparatus (4), but in none of the other access control apparatuses of the plurality of access control apparatuses; and

      - wherein the second key ($S_2$, $S_{T2}$) of the key pair that is used in the first checking is the second key ($S_2$) of the individual key pair; or
      - wherein a second key ($S_{T2}$) of a symmetrical or asymmetrical group key pair is further stored in the access control apparatus (4), said second key ($S_{T2}$) being different than the second key ($S_2$) of the individual key pair and being stored in all the access control apparatuses of a group of access control apparatuses from the plurality of access control apparatuses that comprises the access control apparatus (4), and wherein the second key ($S_2$, $S_{T2}$) of the key pair that is used in the first checking is either the second key ($S_2$) of the individual key pair or the second key ($S_{T2}$) of the group key pair; and the method further comprising:

         - an obtaining of group key information (W) communicated to the access control apparatus (4) comprising at least one second key ($S_{T2}$)

            - encrypted with the first key ($S_1$) of the individual key pair - of a new symmetrical or asymmetrical group key pair for the same or an at least partly different group of access control apparatuses from the plurality of access control apparatuses;

            - a decrypting of the communicated encrypted second key ($S_{T2}$) of the new group key pair using the second key ($S_2$) of the individual key pair; and
            - a storing in the access control apparatus (4) of the second key ($S_{T2}$) of the new group key pair obtained by the decrypting, such that the second key ($S_2$, $S_{T2}$) of the key pair used in the first checking is at least either the second key ($S_2$) of the individual key pair or the second key ($S_{T2}$) of the new group key pair.

2. The method according to claim 1, wherein the second key ($S_2$) of the group key pair is stored in the access control apparatus (4) and the second key ($S_2$, $S_{T2}$) of the key pair used in the first checking is either the second key ($S_2$) of the individual key pair or the second key ($S_{T2}$) of the group key pair, wherein provision is not made for changing the second key ($S_2$) of the individual key pair in the access control apparatus (4), for erasing said second key ($S_2$) or for exchanging it for another key, but wherein it is provided that the second key ($S_{T2}$) of the group key pair can be changed or erased or exchanged for another key.

3. The method according to claim 1 or 2, further comprising:

   - an obtaining of second check information ($V_W$) communicated to the access control apparatus (4); and
   - a storing in the access control apparatus (4) of the second key ($S_{T2}$) of the new group key pair obtained by the decrypting only under the precondition that, in the case of a check based at least on the communicated second check information ($V_W$), the second key ($S_2$) of the individual key pair and the communicated group key information (W), it is determined that the communicated second check information ($V_W$) was generated by performing cryptographic operations on group key information corresponding to the communicated group key information (W) using at least the first key ($S_1$) of the individual key pair.

4. The method according to any one of the claims 1-3, wherein the group key information further comprises a counter (update_counter) that is incremented with each new group key pair, and wherein the second key ($S_{T2}$) of the new group key pair obtained by the decrypting is stored in the access control apparatus (4) only under the further precondition that a value of a counter (update_counter) comprised by the group key information is greater than a value of a counter provided in the access control apparatus (4), and wherein, in or after the storage of the second key ($S_{T2}$) of the new group key pair in the access control apparatus (4), the value of the counter in the access control apparatus (4) is updated to the value of the counter (update_counter) comprised by the group key information.

5. The method according to any one of the claims 3-4, wherein the group key information further comprises an individual identifier (LockID) of the access control apparatus (4), and wherein the second key ($S_{T2}$) of the new group key pair obtained by the decrypting is stored in the access control apparatus (4) only under the further precondition that an individual identifier (LockID) of the access control apparatus (4) that is stored in the access control apparatus (4) corresponds to the individual identifier (LockID) comprised in the group key information.

6. The method according to any one of the claims 1-5, wherein the group key information further comprises a group identifier (GroupID) associated with the new group key pair, said group identifier being common to all the access control apparatuses of the group of access control apparatuses for which the new group key pair is intended, and wherein the group identifier (GroupID) obtained by the decrypting is stored in the access control apparatus (4).

7. The method according to any one of the claims 1-6, wherein one of the access authorization parameters is an identifier (LockID) only for one access control apparatus (4) or a group of access control apparatuses, and wherein it is determined that the identifier authorizes for access if the identifier (LockID) corresponds to an individual identifier (LockID) of the access control apparatus (4) that is stored in the access control apparatus (4) and/or a group identifier (GroupID) for a group of access control apparatuses to which the access control apparatus (4) belongs.

8. The method according to any one of the claims 1-7, wherein the second key ($S_2$) of the group key pair is stored in the access control apparatus (4) and the second key ($S_2$, $S_{T2}$) of the key pair used in the first checking is either the second key ($S_2$) of the individual key pair or the second key ($S_{T2}$) of the group key pair, wherein one of the access authorization parameters is an identifier (LockID) only for one access control apparatus (4) or a group of access control apparatuses, wherein it is determined that the identifier (LockID) authorizes for access if the identifier corresponds to an individual identifier (LockID) of the access control apparatus (4) that is stored in the access control apparatus (4) and/or a group identifier (GroupID) for a group of access control apparatuses to which the access control apparatus (4) belongs, wherein the first check information (V) of access authorization information which has an identifier (LockID) only for one access control apparatus (4) is generated by cryptographic operations on the access authorization parameters (B) using at least the first key (S) of the individual key pair, and wherein the first check information (V) of access authorization information which has an identifier (LockID) for the group of access control apparatuses is generated by performing cryptographic operations on the access authorization parameters using at least the first key ($S_T$) of the group key pair.

9. The method according to claim 8, wherein on the basis of the identifier (LockID), in particular on the basis of a predefined format of the identifier, in the access control apparatus (4), it is possible to identify whether an identifier for only one access control apparatus (4) or an identifier for a group of access control apparatuses is involved, such that either the second key ($S_2$) of the individual key pair or the second key ($S_{T2}$) of the group key pair can be selected in each case appropriately for the first checking.

10. The method according to any of the claims 1-9, further comprising:

   - an obtaining of information (A) communicated to the access control apparatus (4) comprising at least one combination-encrypted using at least the first key ($S_1$, $S_{T1}$) of the key pair--of a fourth key ($H_4$) and an identifier (KeyID) for the access authorization information (B, V) or for the access authorization proving apparatus (3), which communicates the access authorization information (B, V) to the access control apparatus (4), wherein the fourth key ($H_4$) can be used in an authentication of the access control apparatus (4) vis-a-vis the access authorization proving apparatus (3) or in the checking of the authenticity and/or integrity of information communicated to the access control apparatus (4),
   - a decrypting of the encrypted combination using at least the second key ($S_2$, $S_{T2}$) of the key pair, in order to obtain the fourth key ($H_4$) and the identifier (KeyID), wherein the identifier (KeyID) further constitutes one of the access authorization parameters (B), and wherein it is determined that the identifier (KeyID) contained in the communicated access authorization information (B, V) authorizes for access

- if the identifier (KeyID) contained in the communicated access authorization information (B, V) corresponds to the identifier (KeyID) obtained by the decrypting of the encrypted information; or
- if the identifier (KeyID) contained in the communicated access authorization information (B, V) corresponds to the identifier (KeyID) obtained by the decrypting of the encrypted information and the identifier (KeyID) is not contained in a rejection list (RL) stored in the access control apparatus (4).

11. A method for generating access authorization information (B, V), the method comprising:

- a generating of first check information (V) by performing cryptographic operations on one or more access authorization parameters (B) using at least a first key ($S_1$, $S_{T1}$) of a symmetrical or asymmetrical key pair;
- a generating of access authorization information (B, V) comprising at least the one or more access authorization parameters (B) and the first check information (V); and
- an outputting of the access authorization information (B, V) for storage on an access authorization proving apparatus (3) configured to communicate the access authorization information (B, V) to at least one access control apparatus (4) in order to enable the latter to decide whether access is permitted to be granted on the basis of the communicated access authorization information (B, V), wherein necessary conditions for granting access are that a first checking, using at least the communicated access authorization parameters (B), the communicated first check information (V) and a second key ($S_2$, $S_{T2}$) of the key pair, said second key being stored in the access control apparatus (4), whether the communicated first check information (V) was generated by performing cryptographic operations on access authorization parameters (B) corresponding to the communicated access authorization parameters (B) using at least the first key ($S_1$, $S_{T1}$) of the key pair, yields a positive result and it is determined that at least one predefined set of the communicated access authorization parameters (B), in view of respective pieces of reference information present in the access control apparatus (4) at least at the time of the first checking, respectively authorize for access;
wherein the access control apparatus (4) constitutes an access control apparatus (4) from a plurality of access control apparatuses,
wherein a second key (S2) of a symmetrical or asymmetrical individual key pair is stored in the access control apparatus (4), said second key being stored only in the access control apparatus (4), but in none of the other access control apparatuses of the plurality of access control apparatuses; and

- wherein the first key ($S_1$, $S_{T1}$) of the key pair that is used in the generation of the first check information is the first key ($S_1$) of the individual key pair; or
- wherein a second key ($S_{T2}$) of a symmetrical or asymmetrical group key pair is further stored in the access control apparatus (4), said second key ($S_{T2}$) being different than the second key ($S_2$) of the individual key pair and being stored in all the access control apparatuses of a group of access control apparatuses from the plurality of access control apparatuses that comprises the access control apparatus (4), and the first key ($S_1$, $S_{T1}$) of the key pair that is used in the generation of the first check information is either the first key ($S_1$) of the individual key pair or the first key ($S_{T1}$) of the group key pair; and wherein the method further comprises:

  - a generating of group key information (W) comprising at least one second key ($S_{T2}$) - encrypted with the first key ($S_1$) of the individual key pair - of a new symmetrical or asymmetrical group key pair for the same or an at least partly different group of access control apparatuses from the plurality of access control apparatuses;
  - an outputting of the group key information (W) for storage on the access authorization proving apparatus (3), which is configured to communicate the group key information (W) at least to the access control apparatus (4) in order to enable the latter to store in the access control apparatus (4) the second key ($S_{T2}$) of the new group key pair, which second key is obtainable by decryption of the communicated encrypted second key ($S_{T2}$) of the new group key pair using at least the second key ($S_2$) of the individual key pair, such that the second key ($S_2$, $S_{T2}$) of the key pair that is used in the first checking is either the second key ($S_2$) of the individual key pair or the second key ($S_{T2}$) of the new group key pair,

12. A computer program, comprising program instructions that cause a processor of the access control apparatus (4) to perform the actions of the method according to any one of the claims 1-10 when the computer program runs on the processor.

13. A computer program, comprising program instructions that cause a processor of the access authorization generation apparatus (2) to perform the actions of the method according to claim 11 when the computer program runs on the processor.

14. An apparatus comprising respective means for performing the actions of the method of any of claims 1-10, wherein the apparatus is the access control apparatus (4).

15. An apparatus comprising respective means for performing the actions of the method of claim 11, wherein the apparatus is an access authorization generation apparatus (2).

**Revendications**

1. Procédé de contrôle d'accès, mis en œuvre par un dispositif de contrôle d'accès (4), lequel procédé comprenant

   - l'obtention d'une information d'autorisation d'accès (B, V) communiquée au dispositif de contrôle d'accès (4), qui comprend au moins un ou plusieurs paramètres d'autorisation d'accès (B) et une première information de vérification (V),
   - la première vérification, en utilisant au moins les paramètres d'autorisation d'accès (B) communiqués, de la première information de vérification (V) communiquée et d'une deuxième clé ($S_2$, $S_{T2}$), mémorisée dans le dispositif de contrôle d'accès (4), d'une paire de clés symétrique ou asymétrique pour savoir si la première information de vérification (V) communiquée a été générée en mettant en œuvre des opérations cryptographiques par l'intermédiaire de paramètres d'autorisation d'accès (B) correspondant aux paramètres d'autorisation d'accès (B) communiqués en utilisant au moins une première clé ($S_1$, $S_{T1}$) de la paire de clés,
   - la décision si l'accès doit être octroyé, dans lequel des conditions requises pour l'octroi de l'accès sont que la première vérification fournit un résultat positif et qu'il est constaté qu'au moins une quantité prédéfinie des paramètres d'autorisation d'accès (B) communiqués autorise respectivement l'accès eu égard au moins à des informations de référence respectives présentes au moins au moment de la première vérification dans le dispositif de contrôle d'accès (4),
   dans lequel le dispositif de contrôle d'accès (4) constitue un dispositif de contrôle d'accès (4) parmi une pluralité de dispositifs de contrôle d'accès, dans lequel est mémorisée dans le dispositif de contrôle d'accès (4) une deuxième clé ($S_2$) d'une paire de clés individuelles symétrique ou asymétrique, qui n'est mémorisée dans aucun des autres dispositifs de contrôle d'accès de la pluralité de dispositifs de contrôle d'accès, et
   - dans lequel la deuxième clé ($S_2$, $S_{T2}$), employée lors de la première vérification, de la paire de clés est la deuxième clé ($S_2$) de la paire de clés individuelles,
   ou
   - dans lequel est mémorisée, dans le dispositif de contrôle d'accès (4), en supplément de la deuxième clé ($S_2$) de la paire de clés individuelles une deuxième clé ($S_{T2}$) différente de celle-ci d'une paire de clés de groupe symétrique ou asymétrique, qui est mémorisée dans tous les dispositifs de contrôle d'accès d'un groupe, comprenant le dispositif de contrôle d'accès (4), de dispositifs de contrôle d'accès de la pluralité de dispositifs de contrôle d'accès, et la deuxième clé ($S_2$, $S_{T2}$), employée lors de la première vérification, de la paire de clés est soit la deuxième clé ($S_2$) de la paire de clés individuelles soit la deuxième clé ($S_{T2}$) de la paire de clés de groupe, et dans lequel le procédé comprend en outre :
   - l'obtention d'une information de clé de groupe (W) communiquée au dispositif de contrôle d'accès (4), qui comprend au moins une deuxième clé ($S_{T2}$), cryptée avec la première clé ($S_1$) de la paire de clés individuelles, d'une nouvelle paire de clés de groupe symétrique ou asymétrique pour le même groupe ou un groupe au moins différent de dispositifs de contrôle d'accès de la pluralité de dispositifs de contrôle d'accès,
   - le décryptage de la deuxième clé ($S_{T2}$) cryptée communiquée de la nouvelle paire de clés de groupe avec la deuxième clé ($S_2$) de la paire de clés individuelles, et
   - la mémorisation de la deuxième clé ($S_{T2}$), obtenue par le décryptage, de la nouvelle paire de clés de groupe dans le dispositif de contrôle d'accès de sorte que la deuxième clé ($S_2$, $S_{T2}$), employée lors de la première vérification, de la paire de clés est au moins soit la deuxième clé ($S_2$) de la paire de clés individuelles soit la deuxième clé ($S_{T2}$) de la nouvelle paire de clés de groupe.

2. Procédé selon la revendication 1, dans lequel la deuxième clé ($S_{T2}$) de la paire de clés de groupe est mémorisée dans le dispositif de contrôle d'accès (4) et la deuxième clé ($S_2$, $S_{T2}$), employée lors de la première vérification, de la paire de clés est soit la deuxième clé ($S_2$) de la paire de clés individuelles soit la deuxième clé ($S_{T2}$) de la paire de clés de groupe, dans lequel la deuxième clé ($S_2$) de la paire de clés individuelles ne peut être modifiée, ne peut être supprimée ou ne peut être échangée contre une autre clé dans le dispositif de contrôle d'accès (4), et dans lequel la deuxième clé ($S_{T2}$) de la paire de clés de groupe peut être modifiée ou supprimée ou échangée contre une autre clé.

3. Procédé selon l'une quelconque des revendications 1 et 2, comprenant en outre :

- l'obtention d'une deuxième information de vérification ($V_w$) communiquée au dispositif de contrôle d'accès (4), et
- la mémorisation de la deuxième clé ($S_{T2}$), obtenue par le décryptage, de la nouvelle paire de clés de groupe dans le dispositif de contrôle d'accès (4) seulement à la condition qu'il soit constaté lors d'une vérification reposant au moins sur la deuxième information de vérification ($V_w$) communiquée, la deuxième clé ($S_2$) de la paire de clés individuelles et l'information de clé de groupe (W) communiquée que la deuxième information de vérification ($V_w$) communiquée a été générée par la mise en œuvre d'opérations cryptographiques par l'intermédiaire de l'information de clé de groupe correspondant à l'information de clé de groupe (W) communiquée en utilisant au moins la première clé ($S_1$) de la paire de clés individuelles.

4. Procédé selon l'une quelconque des revendications 1 à 3, dans lequel l'information de clé de groupe comprend au moins un compteur (update_counter), qui est augmenté avec chaque nouvelle paire de clés de groupe, et dans lequel la deuxième clé ($S_{T2}$), obtenue par le décryptage, de la nouvelle paire de clés de groupe est mémorisée dans le dispositif de contrôle d'accès (4) seulement à la condition supplémentaire qu'une valeur d'un compteur (update_counter) compris par l'information clé de groupe soit supérieure à une valeur d'un compteur prévu dans le dispositif de contrôle d'accès (4), et dans lequel lors de ou après la mémorisation de la deuxième clé ($S_{T2}$) de la nouvelle paire de clés de groupe dans le dispositif de contrôle d'accès (4), la valeur du compteur dans le dispositif de contrôle d'accès (4) est mise à jour sur la valeur du compteur (update_counter) compris par l'information de clé de groupe.

5. Procédé selon l'une quelconque des revendications 3 et 4, dans lequel l'information de clé de groupe comprend en supplément un code individuel (LockID) du dispositif de contrôle d'accès (4), et dans lequel la deuxième clé ($S_{T2}$), obtenue par le décryptage, de la nouvelle paire de clés de groupe est mémorisée dans le dispositif de contrôle d'accès (4) seulement à la condition supplémentaire qu'un code individuel (LockID), sauvegardé dans le dispositif de contrôle d'accès (4), du dispositif de contrôle d'accès (4) coïncide avec le code individuel (LockID) compris dans l'information de clé de groupe.

6. Procédé selon l'une quelconque des revendications 1 à 5, dans lequel l'information de clés de groupe comprend en supplément un code de groupe (GroupID) associé à la nouvelle paire de clés de groupe, qui est commun à tous les dispositifs de contrôle d'accès du groupe de dispositifs de contrôle d'accès, pour lesquels la nouvelle paire de clés de groupe est définie, et dans lequel le code de groupe (GroupID) obtenu par le décryptage est mémorisé dans le dispositif de contrôle d'accès (4).

7. Procédé selon l'une quelconque des revendications 1 à 6, dans lequel un des paramètres d'autorisation d'accès communiqués est un code (LockID) pour seulement un dispositif de contrôle d'accès (4) ou un groupe de dispositifs de contrôle d'accès, et dans lequel il est constaté que le code autorise l'accès quand le code (LockID) coïncide avec un code individuel (LockID), mémorisé dans le dispositif de contrôle d'accès (4), du dispositif de contrôle d'accès (4) et/ou un code de groupe (GroupID) pour un groupe de dispositifs de contrôle d'accès, auquel appartient le dispositif de contrôle d'accès (4).

8. Procédé selon l'une quelconque des revendications 1 à 7, dans lequel la deuxième clé ($S_{T2}$) de la paire de clés de groupe est mémorisée dans le dispositif de contrôle d'accès (4) et la deuxième clé ($S_2$, $S_{T2}$), employée lors de la première vérification, de la paire de clés est soit la deuxième clé ($S_2$) de la paire de clés individuelles soit la deuxième clé ($S_{T2}$) de la paire de clés de groupe, dans lequel un des paramètres d'autorisation d'accès communiqués est un code (LockID) pour seulement un dispositif de contrôle d'accès (4) ou pour un groupe de dispositifs de contrôle d'accès, dans lequel il est constaté que le code (LockID) autorise l'accès quand le code coïncide avec un code individuel (LockID), mémorisé dans le dispositif de contrôle d'accès (4), du dispositif de contrôle d'accès (4) et/ou un code de groupe (GroupID) pour un groupe de dispositifs de contrôle d'accès, auquel le dispositif de contrôle d'accès (4) appartient, dans lequel la première information de vérification (V) d'une information d'autorisation d'accès communiquée, qui présente un code (LockID) pour seulement un dispositif de contrôle d'accès (4), est générée en mettant en œuvre des opérations cryptographiques par l'intermédiaire des paramètres d'autorisation d'accès (B) en utilisant au moins une première clé (S) de la paire de clés individuelles, et dans lequel la première information de vérification (V) d'une information d'autorisation d'accès communiquée, qui présente un code (LockID) pour un groupe de dispositifs de contrôle d'accès, est générée par la mise en œuvre d'opérations cryptographiques par l'intermédiaire des paramètres d'autorisation d'accès en utilisant au moins une première clé ($S_T$) de la paire de clés de groupe.

9. Procédé selon la revendication 8, dans lequel il peut être identifié à l'aide du code (LockID), en particulier à l'aide d'un format prédéfini du code, dans le dispositif de contrôle d'accès (4) s'il s'agit d'un code pour seulement un dispositif de contrôle d'accès (4) ou d'un code pour un groupe de dispositifs de contrôle d'accès de sorte que pour la première vérification, respectivement de manière adaptée soit la deuxième clé ($S_2$) de la paire de clés individuelles soit la deuxième clé ($S_{T2}$) de la paire de clés de groupe peut être choisie.

10. Procédé selon l'une quelconque des revendications 1 à 9, comprenant en outre :

    - l'obtention d'une information (A) communiquée au dispositif de contrôle d'accès (4), qui comprend au moins une combinaison, cryptée en utilisant au moins la première clé ($S_1$, $S_T$) de la paire de clés, d'une quatrième clé ($H_4$) et d'un code (KeyID) pour l'information d'autorisation d'accès (B, V) ou pour un dispositif de détection de présence d'autorisation d'accès (3), qui communique l'information d'autorisation d'accès (B, V) au dispositif de contrôle d'accès (4), dans lequel la quatrième clé ($H_4$) peut être utilisée lors d'une authentification du dispositif de contrôle d'accès (4) vis-à-vis d'un dispositif de détection de présence d'autorisation d'accès (3), qui communique l'information d'autorisation d'accès (B, V) au dispositif de contrôle d'accès (4), ou lors de la vérification de l'authenticité et/ou de l'intégrité d'informations communiquées au dispositif de contrôle d'accès (4), et
    - le décryptage de la combinaison cryptée en utilisant au moins la deuxième clé ($S_2$, $S_{T2}$) de la paire de clés pour obtenir la quatrième clé ($H_4$) et le code (KeyID), dans lequel le code (KeyID) constitue en supplément un des paramètres d'autorisation d'accès (B) communiqués, et dans lequel il est constaté que le code (KeyID) contenu dans l'information d'autorisation d'accès (B, V) communiquée autorise l'accès

      -- quand le code (KeyID) contenu dans l'information d'autorisation d'accès (B, V) communiqué coïncide avec le code (KeyID) obtenu par le décryptage de l'information cryptée, ou
      -- quand le code (KeyID) contenu dans l'information d'autorisation d'accès (B, V) communiquée coïncide avec le code (KeyID) obtenu par le décryptage de l'information cryptée et le code (KeyID) n'est pas contenu dans une liste de rejet (RL) mémorisée dans le dispositif de contrôle d'accès (4).

11. Procédé servant à générer une information d'autorisation d'accès (B, V), le procédé comprenant

    - la génération d'une première information de vérification (V) par la mise en œuvre d'opérations cryptographiques par l'intermédiaire d'un ou de plusieurs paramètres d'autorisation d'accès (B) en utilisant au moins une première clé ($S_1$, $S_{T1}$) d'une paire de clés symétrique ou asymétrique,
    - la génération d'une information d'autorisation d'accès (B, V), qui comprend au moins un ou plusieurs paramètres d'autorisation d'accès (B) et la première information de vérification (V), et
    - l'envoi de l'information d'autorisation d'accès (B, V) aux fins de la mémorisation sur un dispositif de détection de présence d'autorisation d'accès (3), qui est mis au point pour communiquer l'information d'autorisation d'accès (B, V) à au moins un dispositif de contrôle d'accès (4) fin de mettre celui-ci en position de décider si du fait de l'information d'autorisation d'accès (B, V) communiquée l'accès doit être octroyé, dans lequel des conditions requises pour octroyer l'accès sont qu'une première vérification, en utilisant au moins les paramètres d'autorisation d'accès (B) communiqués, de la première information de vérification (V) communiquée et d'une deuxième clé ($S_2$, $S_{T2}$), mémorisée dans le dispositif de contrôle d'accès (4), de la paire de clés pour savoir si la première information de vérification (V) communiquée a été générée par la mise en œuvre d'opérations cryptographiques par l'intermédiaire de paramètres d'autorisation d'accès (B) correspondant aux paramètres d'autorisation d'accès (B) communiqués a été générée en utilisant au moins la première clé ($S_1$, $S_{T1}$) de la paire de clés, fournit un résultat positif et qu'il est constaté qu'au moins une quantité prédéfinie des paramètres d'autorisation d'accès (B) communiqués autorisent respectivement l'accès eu égard à des informations de référence respectives présentes au moins au moment de la première vérification dans le dispositif de contrôle d'accès (4), dans lequel le dispositif de contrôle d'accès (4) constitue un dispositif de contrôle d'accès (4) parmi une pluralité de dispositifs de contrôle d'accès, dans lequel une deuxième clé ($S_2$) d'une paire de clés individuelles symétrique ou asymétrique est mémorisée dans le dispositif de contrôle d'accès (4), qui n'est mémorisée dans aucun des autres dispositifs de contrôle d'accès de la pluralité de dispositifs de contrôle d'accès, et

      -- dans lequel la première clé ($S_1$, $S_{T1}$), utilisée lors de la génération de la première information de vérification, de la paire de clés est une première clé ($S_1$) de la paire de clés individuelles, ou

-- dans lequel est mémorisée dans le dispositif de contrôle d'accès (4) en plus de la deuxième clé (S2) de la paire de clés individuelles une deuxième clé ($S_{T2}$), différente de celle-ci, d'une paire de clés de groupe symétrique ou asymétrique, qui est mémorisée dans tous les dispositifs de contrôle d'accès d'un groupe, comprenant le dispositif de contrôle d'accès (4), de dispositifs de contrôle d'accès de la pluralité de dispositifs de contrôle d'accès, et la première clé ($S_1$, $S_{T1}$), utilisée lors de la génération de la première information de vérification, de la paire de clés est soit une première clé ($S_1$) de la paire de clés individuelles soit une première clé ($S_{T1}$) de la paire de clés de groupe, et dans lequel le procédé comprend en outre :

- la génération d'une information de clé de groupe (W), qui comprend au moins une deuxième clé ($S_{T2}$), cryptée avec la première clé ($S_1$) de la paire de clés individuelles, d'une nouvelle paire de clés de groupe symétrique ou asymétrique pour le même ou un groupe différent au moins en partie de dispositifs de contrôle d'accès de la pluralité de dispositifs de contrôle d'accès,

- l'envoi de l'information de clé de groupe (W) aux fins de la mémorisation sur le dispositif de détection de présence d'autorisation d'accès (3), qui est mis au point pour communiquer l'information de clé de groupe au moins au dispositif de contrôle d'accès (4) pour permettre à celui-ci de mémoriser la deuxième clé ($S_{T2}$), pouvant être obtenue par le décryptage de la deuxième clé ($S_{T2}$) cryptée communiquée de la nouvelle paire de clés de groupe en utilisant au moins la deuxième clé ($S_2$) de la paire de clés individuelles, de la nouvelle paire de clés de groupe dans le dispositif de contrôle d'accès (4) de sorte que la deuxième clé ($S_2$, $S_{T2}$), employée lors de la première vérification, de la paire de clés est soit la deuxième clé ($S_2$) de la paire de clés individuelles soit la deuxième clé ($S_{T2}$) de la nouvelle paire de clés de groupe.

12. Programme informatique comprenant des instructions de programme, qui amènent un processeur du dispositif de contrôle d'accès (4) à exécuter les étapes du procédé selon l'une quelconque des revendications 1 à 10 quand le programme informatique est exécuté sur le processeur.

13. Programme informatique comprenant des instructions de programme, qui amènent un processeur du dispositif de génération d'autorisation d'accès (2) à exécuter les étapes du procédé selon la revendication 11 quand le programme informatique est exécuté sur le processeur.

14. Dispositif comprenant des moyens respectifs servant à exécuter les étapes du procédé selon l'une quelconque des revendications 1 à 10, dans lequel le dispositif est le dispositif de contrôle d'accès (4).

15. Dispositif comprenant des moyens respectifs servant à exécuter les étapes du procédé selon la revendication 11, dans lequel le dispositif est un dispositif de génération d'autorisation d'accès (2).

Fig.1

Fig.2

Fig.3

400

401 Initialisierung Bluetooth

61 68

402 Authentisierung und
Übermittlung
Zugangsberechtigung

69

403

404 Rückmeldung Erfolg

H₃

S₂

Prüfung
Zugangsberechtigung

Fig.4

500

501 Initialisierung NFC

62, 74

502 Authentisierung und
Übermittlung
Zugangsberechtigung

69

503

H₃

S₂  S₍T2₎

Prüfung
Zugangsberechtigung

Fig.5

Fig.6

Fig.7

800

Zuordnungsserver

Bezirksschneidung

Bereitstellungsserver

Übermittlung
$\{B_i, V_i, A_i\}, H_3$

Schlüsselserver

801

803

802

67

66

60

$S_{1,i}$

● Erzeugung
$B_i, V_i, A_i$

● Erzeugung
$H_3, H_4$

804

$\{B_i, V_i, A_i\}_1$

$\{B_i, V_i, A_i\}_2$

$\{B_i, V_i, A_i\}_L$

Dezentrale
Einheit

Dezentrale
Einheit

Dezentrale
Einheit

71-1

71-2

71-L

805

Zusteller

$H_3$

70-2

68-2

Authentisierung und
Übermittlung
Zugangsberechtigung

806

69-k

807

Rückmeldung Erfolg

808

Prüfung
Zugangsberechtigung

$S_{2,k}$

Fig.8

900

Schlüsselserver

$\{A_i, B_i, V_i, H_{3,i}\}_{i=1,...,M}$

60

$(S_{T2,j})_{j=1,...,N}$

Server
Schlossproduktion

72

Server
Tokenproduktion

73

$S_{T2,1}$

$S_{T2,N}$

$(A_1, B_1, V_1, H_{3,1})$

$(A_M, B_M, V_M, H_{3M})$

Bereich 1

Bereich N

74-1

74-M

Fig.9

Fig.10

1100

1101

Start

1102
Gruppenschlüssel
Update

1103
Zurückweisungsliste

1104
Token
Authentisierung

1110
Firmware
Update

1105
Prüfung
Zugangs-
Berechtigung

1108
Status
Abfragen

Tür
öffnen

Falls Zugangsberechtigung
vorhanden
und gültig

1106

Reset
Elektonik

1109

Fig.11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2595341 A1
- US 5768379 A